(19) **Europäisches Patentamt**

**European Patent Office**

**Office européen des brevets**

(11) **EP 0 421 639 B1**

(12) # EUROPEAN PATENT SPECIFICATION

(45) Date of publication and mention
of the grant of the patent:
**22.04.1998 Bulletin 1998/17**

(51) Int Cl.⁶: **G06F 15/16**, G06F 15/80

(21) Application number: **90310302.6**

(22) Date of filing: **20.09.1990**

(54) **Parallel data processing system**

Paralleldatenverarbeitungsanlage

Système de traitement de données en parallèle

(84) Designated Contracting States:
**DE FR GB**

(30) Priority: **20.09.1989 JP 243972/89**
**20.09.1989 JP 243971/89**
**20.09.1989 JP 243970/89**
**20.09.1989 JP 243969/89**

(43) Date of publication of application:
**10.04.1991 Bulletin 1991/15**

(73) Proprietor: **FUJITSU LIMITED**
**Kawasaki-shi, Kanagawa 211 (JP)**

(72) Inventors:
• **Kato, Hideki**
**Setagaya-ku, 157, Tokyo (JP)**
• **Yoshizawa, Hideki**
**Setagaya-ku,156, Tokyo (JP)**
• **Iciki, Hiroki**
**Bunkyo-ku, Tokyo, 112 (JP)**
• **Asakawa. Kazuo**
**Miyamae-ku, Kawasaki-shi, Kanagawa 213 (JP)**

(74) Representative:
**Fane, Christopher Robin King et al**
**Haseltine Lake & Co.,**
**Imperial House,**
**15-19 Kingsway**
**London WC2B 6UD (GB)**

(56) References cited:
**EP-A- 0 147 857** **EP-A- 0 236 762**
**US-A- 4 524 455**

• **NEURAL NETWORKS FROM MODELS TO APPLICATIONS E.S.P.C.I. June 1988, PARIS , FRANCE pages 682 - 691 PERSONNAZ 'Towards a neural network chip : A performance assessment and a simple example'**
• **IEEE INTERNATIONAL CONFERENCE ON NEURAL NETWORKS vol. 2, 24 July 1988, SAN DIEGO , USA pages 165 - 172 KUNG 'Parallel architectures for artificial neural nets'**

## Description

The present invention relates to a parallel data processing system and, more particularly, to a parallel data processing system for processing data using a plurality of data processing units synchronously.

With recent expansion of the fields of application of data processing, large quantities of data are processed in an electronic computer system or a digital signal processing system. In the field of image processing or voice processing in particular, high-speed data processing is needed. For this reason, the utilization of parallel data processing using a plurality of data processing units synchronously becomes important.

In general, important concepts of processing using a plurality of processing units include the number effect. The number effect means that an improvement in data processing speed which is proportional to the number of processing units used is obtained. In the parallel processing system, it is very important to obtain a good number effect.

Apart from the limitation due to the number of processing units for parallel processing, the main cause of the deterioration of the number effect is prolongation of the total processing time due to addition of data transfer time to inherent data processing time. To improve the number effect, therefore, it is effective to fully utilize the capacity of data transmission lines. However, it is very difficult.

If the processing is regular, however, it will be possible to improve the number effect by utilizing the regularity. Data are caused to flow in a systolic array, that is, cyclically and an operation is carried out where two pieces of data are aligned in the flow of data. The parallel processing system utilizing the regularity of processing is a systolic array system. In the systolic array system, a one-dimensional systolic array system called a ring systolic array system is a parallel data processing system which processes systolic data using a plurality of data processing units synchronously and is easy to implement. The processing with regularity includes parallel processing which applies a nonlinear function to a matrix operation based on the inner product of vectors and a sum-of-products operation in a neural network.

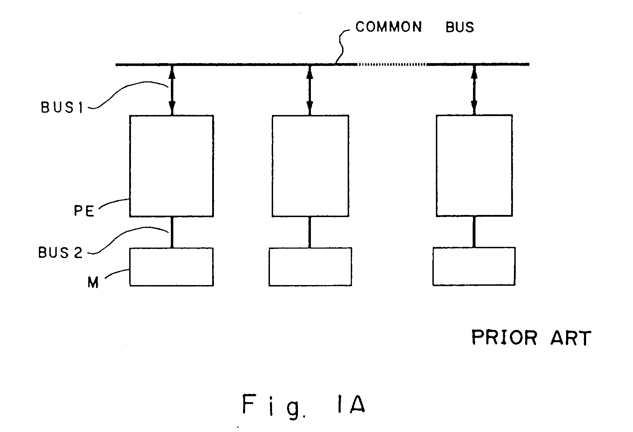

Figure 1A illustrates the basic structure of a conventional common-bus-coupled parallel processing system. In the figure, PE designates a processor element, M designates a memory, COMMON BUS designates a common bus, BUS1 designates a bus coupled to the common bus and BUS 2 designates an internal bus for coupling each of the processor elements PE to its corresponding respective memory M. In the common-bus-coupled parallel system, communications among the processor elements (hereinafter referred to as PEs) are performed over the common bus. Since only one PE can transmit data over the common bus during a specific time interval, the communications must be performed synchronously over the entire common bus.

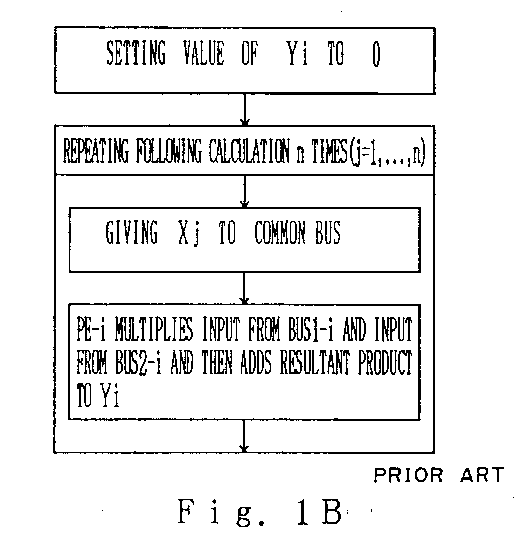

Figure 1B is an operational flowchart of calculation of the product of a matrix and a vector by the common-bus-coupled parallel system. Each PE multiplies Y in its internal register by data X from another PE and adds the resultant product to Y. For this reason, as illustrated in the flowchart, the contents, i.e., $Y_i$ of the internal register of the i-th PE is first cleared to 0. Then, the following step is repeated n times. That is, when $X_j$ is applied to the common bus, the i-th PE multiplies an input from the bus BUS1 connected to the common bus and an input supplied from the memory M through the internal bus BUS2 and adds the resultant product to $Y_i$. This operation is repeated.

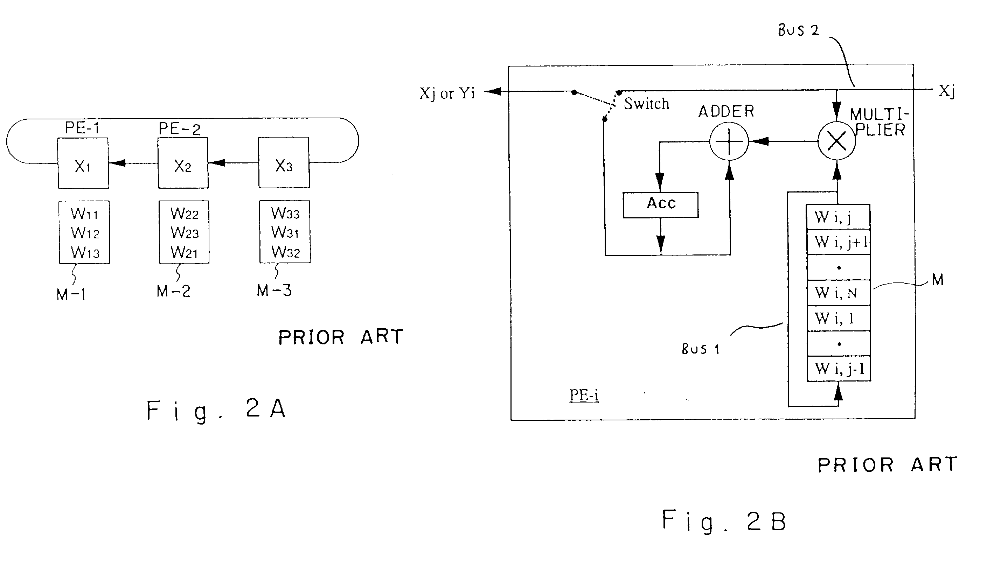

Figure 2A illustrates the principle of a conventional ring systolic system. Such a system is also disclosed in "Parallel Architectures for Artificial Neural Nets", S.Y. Kung and J.N. Hwang, IEEE International Conference on Neural Networks, San Diego, California, July 24-27, 1988, and may be considered to provide parallel data processing apparatus, for performing a matrix operation or a neuron computation operation involving a plurality of individual sub-operations, including: a plurality of processing units, each having a first input for receiving a data item and being operable to perform such a sub-operation on the received data item; and data transfer means connected for circulating a set of such data items between the processing-unit first inputs so as to enable each data item of the set to be delivered in turn to different processing units and to enable each processing unit to receive different data items of the set in a predetermined sequence; wherein the data transfer means are operable to deliver different data items of the set synchronously to respective processing units, and different processing units are operable to perform respective such sub-operations synchronously. In Figure 2A a processor element PE is connected to another PE by a cyclic common bus. M designates a memory for storing coefficients $W_{ij}$. $W_{11}$, $W_{12}$, ..$W_{33}$ are elements of a coefficient matrix. In general, $W_{ij}$ is an element at the intersection of the i-th row and the j-th column of the matrix. The multiplication of the coefficient matrix $\underline{\mathbf{W}}$ and a vector $\underline{\mathbf{x}} = (X_1, X_2, X_3)$ is made by the ring systolic system as follows.

Figure 2B illustrates the internal structure of the i-th processor element. In the figure, MULTIPLIER designates a multiplier, ADDER designates an adder, ACC designates an accumulator and M designates a group of registers for storing coefficient elements $W_{ij}$. Each of the registers is of a FIFO (first-in first-out) type. In the figure, the element $W_{ij}$ at the intersection of the i-th row and the j-th column of the coefficient matrix is now being read out of the register. The element read out of the register is circulated in sync with the next clock to enter the last stage via a bus BUS1. As illustrated, $W_{i1}$, ..., $W_{i,j-1}$ have already been circulated and stored in the last stages.

On the other hand, each element of the vector is entered via the bus BUS1. At present, an element $X_j$ is entered. The result of the inner product of $W_{i1} \times X_1 + ...+ W_{i,j-1} \times X_{j-1}$ has already been stored in the accumulator ACC. This is now output from the accumulator 25 and entered into the adder via its input. $X_j$ entered from the outside and $W_{ij}$ output

from the FIFO register are multiplied in the multiplier. The result of the multiplication is input to the adder via its other input so that it is added to the current contents of the accumulator ACC. The output of the adder is applied to the same accumulator ACC in sync with the next clock. This is repeated so that the operation of inner product is performed on the row vector of the i-th row of the coefficient matrix $\underline{W}$ and the externally applied vector $\underline{x}$ The switch SWITCH is adapted to cause data $X_i$ to pass through the processor element PE or set data $X_i$ into the accumulator ACC.

When the product of a matrix and a vector is calculated in such a PE, PE-1 first multiplies $W_{11}$ and $X_1$ as shown in Figure 2A. During the next clock cycle $X_2$ flows out of the right PE-2 and $W_{12}$ is output from the memory M-1 so that $W_{12}$ x $X_2$ is calculated. Similarly, the product of $W_{13}$ and $X_3$ is obtained during the next clock cycle. Thereby, it is possible to calculate the product of the first row of the coefficient matrix and the vector $\underline{x}$ in the PE-1. Also, the product of the second row and the vector is calculated in PE-2. That is, $W_{22}$ and $X_2$ are multiplied, $W_{23}$ and $X_3$ are multiplied during the next clock cycle, and the product of $W_{21}$ and cyclically returned $X_1$ is obtained during the next clock cycle. Similarly, the product of the third row and the vector can be obtained by multiplying $W_{33}$ and $X_3$, multiplying $W_{31}$ and circulating $X_1$, and multiplying $W_{32}$ and cyclically returned $X_2$. According to this operation, therefore, the product of $W_{11}$ and $X_1$, the product of $W_{22}$ and $X_2$, and the product of $W_{33}$ and $X_3$ can be obtained simultaneously. As shown, however, torsion is produced in the arrangement of elements of the coefficient matrix in order to achieve such simultaneity. By carrying out data transfer between PEs and data processing in each PE synchronously in such a ring systolic array system, data transmission lines can be utilized effectively and thus a good number effect can be obtained.

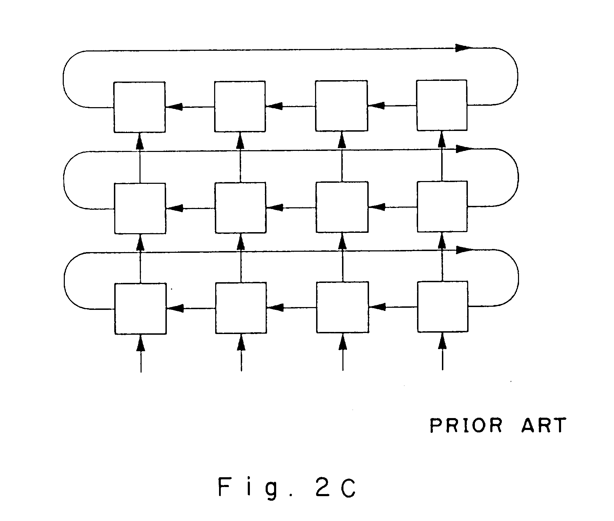

Figure 2C illustrates a multi-stage arrangement of the ring systolic configuration of Figure 2A which permits calculation of the product of a continuous matrix and a vector. Such a systolic array system is regular in processing, thus permitting the capacity of data transmission lines to be fully utilized and thus the number effect to be improved.

EP-A-0147857 discloses a parallel data processing system which has n processors and a ring bus made up of n ring bus node registers each of which is connected to a corresponding one of the processors. Data items can be transferred between each processor and its corresponding node register and can be shifted from one node register to the next around the ring bus so as to permit inter-processor transfer of data items. This system is used to perform parallel operations on two-dimensional data such as image data.

A generally-similar processor element to the Figure 2B PE, suitable for use as a neuron processor in a neural network, is described in "Neural Networks from Models to Applications", E.S.P.C.I., Paris, France 1988, pp. 682-691. In the architecture disclosed therein, the network state is stored in a circular n x 1 bit shift register and each of the n neuron processors contains one cell of the state register. To keep signal routing simple and reduce chip complexity, each network state component is coded on 1 bit only and so the only information that neurons have to exchange is one bit. The ALU is also simplified and does not include a multiplier.

In the conventional common-bus-coupled parallel system shown in Figure 1A, since processing elements are coupled by a common bus, only one piece of data can be transmitted at a time. The coupling by the common bus needs synchronization over the entire common bus. A problem with the conventional common-bus-coupled parallel system is that there are few kinds of processing which bring about a good number effect. Furthermore, a problem with the coupling by a common bus is that the common bus becomes long as the number of PEs coupled increases and thus the establishment of synchronization over the entire common bus becomes difficult. In addition, the coupling by a common bus is not suited for a large-scale parallel system. In the conventional ring systolic array system as shown in Figures 2A and 2B, the number effect can be achieved by carrying out the data transfer between PEs and data processing in each PE synchronously. With this system, however, the data transfer between PEs and the data processing in each PE must be timed. With this system, when the optimum numbers of data processing units and data storage units are not equal to each other as in the case where the product of a rectangular matrix and a vector is obtained, PEs which are not involved in actual data processing are needed, that is, idle PEs increase in number, thus degrading the number effect. In other words, there is a close correspondence between a calculation problem which can be solved efficiently and a circuit configuration, and, in a case where the problem to be solved is not optimum in size, the number effect deteriorates. Conversely, there are only specific problems that can achieve a good number effect, decreasing adaptability to extensive processing and flexibility or versatility. Consequently, it becomes difficult to implement a high-speed data processing system which can be applied to processing covering desirably-wide range of calculations.

According to the present invention there is provided parallel data processing apparatus, for performing a matrix operation or a neuron computation operation involving a plurality of individual sub-operations, including: a plurality of processing units, each having a first input for receiving a data item and being operable to perform such a sub-operation on the received data item; and data transfer means, connected for circulating a set of such data items between the processing-unit first inputs so as to enable each data item of the set to be delivered in turn to different processing units and to enable each processing unit to receive different data items of the set in a predetermined sequence; wherein the data transfer means are operable to deliver different data items of the set synchronously to respective processing units, and different processing units are operable to perform respective such sub-operations synchronously; characterised in that there are m processing units in the said plurality, and in that the data transfer means include n tray units, where n>m, each tray unit having a shifting input and a shifting output and including storage means for storing one of the said data items of the said set, the tray units being connected together in series with the shifting output of each tray unit being connected operatively to the shifting input of the next tray unit of the series to permit circulation of the data items of the set through the tray units; and in that m of the tray units, which correspond respectively to the m processing units, each have a further output that is connected to the said first input of the corresponding processing unit to permit delivery of the data item stored in the tray unit concerned to that processing unit.

Such apparatus can perform a matrix operation or a neuro-computer operation utilizing the full potential of the parallel architecture for such processing, thereby obtaining a good number effect.

The apparatus is particularly suited for calculating the product of a rectangular matrix and a vector and can achieve a decreased data transfer overhead as compared with a comparable hardware configuration of a ring systolic array system or a common-bus-coupled type SIMD (Single Instruction Multi Data) system. One embodiment is adapted to perform its matrix or neuron computation operation on analog signals.

Reference will now be made, by way of example, to the accompanying drawings, in which:

Figure 1A illustrates the basic structure of a common bus SIMD system,

Figure 1B is an operational flowchart relating to calculation of the product of a matrix and a vector according to the common bus SIMD system of Figure 1A,

Figures 2A and 2B illustrate principles of calculating the product of a matrix and a vector according to a ring systolic system,

Figure 2C illustrates principles of calculating the product of a matrix and a vector according to another ring systolic system,

Figure 3A illustrates parts of a data processing system embodying the present invention,

Figure 3B is a flowchart for use in explaining operation of the Figure 3A system,

Figure 3C is a diagram for use in explaining the operation of the Figure 3A system,

Figure 3D is a timing chart for use in explaining operation of the Figure 3A system,

Figure 4A illustrates a configuration of a first embodiment of the present invention,

Figure 4B is an operational flowchart relating to the first embodiment,

Figure 4C is a diagram for use in explaining the operation of the first embodiment,

Figure 4D is a timing chart relating to the first embodiment,

Figure 5A illustrates a configuration of a second embodiment of the present invention,

Figure 5B is an operational flowchart relating to the second embodiment,

Figures 5C(i) and (ii) are diagrams for use in explaining the operation of the second embodiment,

Figure 5D is an operational timing chart relating to the second embodiment,

Figure 6A illustrates a configuration of a third embodiment of the present invention,

Figure 6B is an operational flowchart relating to the third embodiment,

Figures 6C(i) and (ii) are diagrams for use in explaining operation of the third embodiment,

Figure 6D is an operational timing chart relating to the third embodiment,

Figure 6E is a more detailed operational flowchart relating to the third embodiment,

Figure 7A illustrates a configuration of a fourth embodiment,

Figure 7B illustrates a neuron model used in the fourth embodiment,

Figure 7C illustrates a network used in the fourth embodiment,

Figure 7D is a flowchart of a forward process in the fourth embodiment,

Figure 7E is a flowchart of a learning process in the fourth embodiment,

Figure 7F is a flowchart of an error back propagation learning process,

Figure 7G is a timing chart relating to operations performed in the fourth embodiment when the sum of products of a matrix and a vector $\underline{\mathbf{u}} = \underline{\mathbf{W}}\mathbf{x}$ is calculated,

Figure 7H is a timing chart relating to operations performed in the fourth embodiment when the sum of products of a transposed matrix and a vector $\underline{\mathbf{e}} = \underline{\mathbf{W}}^{\mathsf{T}}\underline{\mathbf{v}}$ is calculated,

Figure 7I is an explanatory diagram relating to the Figure 7H calculation of the sum of products involving the transposed matrix,

Figure 7J is a flowchart illustrating the whole learning process in the fourth embodiment,

Figure 7K is a simplified flowchart of the learning process shown in Figure 7J,

Figure 8A illustrates a configuration of a fifth embodiment of the present invention,

Figure 8B is an operational flowchart relating to the fifth embodiment,

Figure 8C is a diagram for use in explaining the operation of the fifth embodiment,

Figure 8D is a timing chart relating to the fifth embodiment,

Figure 9A illustrates a configuration of a sixth embodiment of the present invention,

Figure 9B is an operational flowchart relating to the sixth embodiment,

Figure 9C is a diagram for use in explaining the operation of the sixth embodiment,

Figure 9D is a timing chart relating to the sixth embodiment,

Figure 10A illustrates one example of the structure of a tray used in embodiments of the present invention,

Figure 10B shows, in more detail, one possible structure of such a tray,

Figure 10C shows the relationship between a tray and a data processing unit comprising a DSP (digital signal processor),

Figure 10D is a timing chart relating to operation of the tray,

Figure 10E shows a data flow between a tray and its corresponding data processing unit,

Figure 11 is a block diagram of a neuro-computer actually constructed using embodiments of the present invention, and

Figure 12 is a time and space chart relating to the time of learning in embodiments of the present invention.

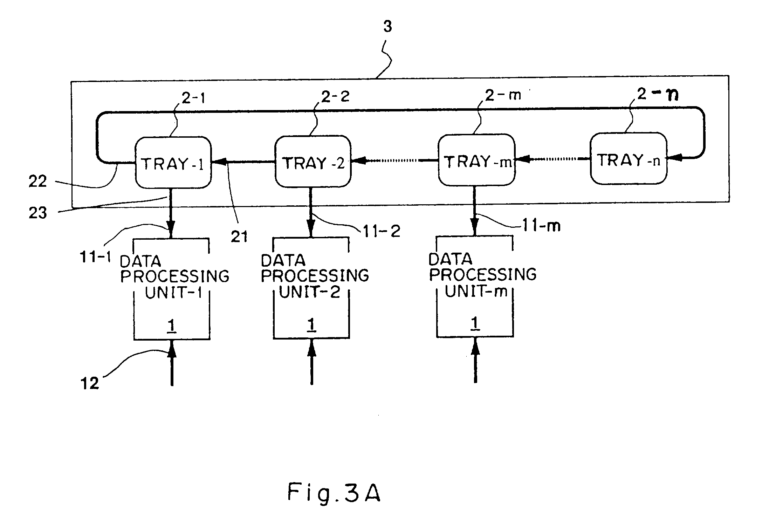

Figure 3A illustrates a principle of the present invention. In the figure, $1_1$, $1_2$,... designate data processing units, $2_1$, $2_2$, ... designate trays for storing and transferring data, 3 designates a shift register constructed by interconnecting the trays, 11 designates a first input of each data processing unit, 12 designates a second input of each data processing unit, 21 designates a first input of each tray, 22 designates a first output of each tray, and 23 designates a second output of each tray 2.

The data processing units 1 process data. The trays 2 transfer data and form a shift register 3 for shifting data cyclically. The present invention allows the product of a m x n matrix $\underline{A}$ and a vector $\underline{x}$ with n elements to be calculated by the use of m data processing units and n trays in a processing time proportional to n even if the number m of rows of the matrix $\underline{A}$ is smaller than the number n of columns, thereby achieving a good number effect. That is, in the illustrated configuration comprised of m data processing units 1, each having two inputs and functions of multiplying two inputs and accumulating the results of multiplications for calculation of the inner product, and n trays 2, each of the data processing units 1 multiplies an input from 11 and an input from 12, adds the product to the contents of its accumulating register Y and then shifts an element of the vector $\underline{x}$ between adjoining trays in the shift register 3. By repeating this operation n times, it becomes possible to carry out the multiplication of the m x n matrix $\underline{A}$ and the n-dimensional vector using m data processing units in a processing time proportional to n. That is, the present invention, unlike the conventional system, can achieve a good number effect without the need for any timing process by separating the data processing units 1 and the trays 2 having data storage function,even if m and n differ from each other. Furthermore, the present invention can make the data transfer time negligible as compared with data processing time because the data transfer between trays 2 and data processing by data processing units 1 are performed concurrently and, in general, the data transfer time can be expected to be shorter than the data processing time required by the data processing units. Therefore, the data transfer time can be hidden by the data process time.

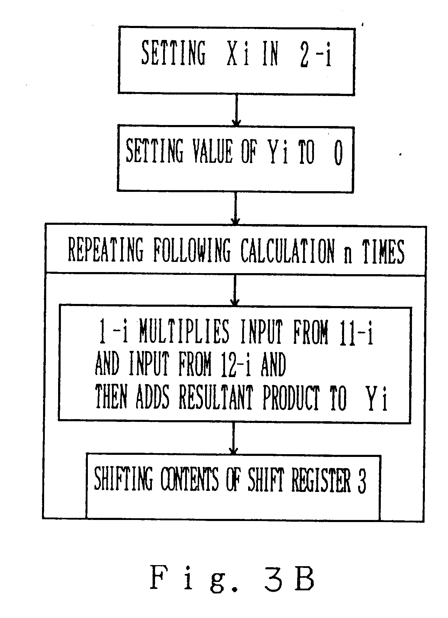

Figure 3B is an operational flowchart of a basic configuration of the present invention illustrated in Figure 3A. As illustrated in Figure 3A, according to the present invention, data processing units 1 and trays 2 having data storage function are separated. The adjacent trays 2 are connected in a ring to form a systolic system. To obtain the product of a m x n matrix $\mathbf{A}$ and a vector $\mathbf{x}$ with n elements where m corresponds to the number of the data processing units and n corresponds to the number of the trays, the operation illustrated in the flowchart of Figure 3B is performed.

$X_i$ is set in the i-th tray 2. The value of $Y_i$ in an accumulating register of data processing unit i is set to 0. That is, the contents of the accumulating register of the i-th data processing unit are initialized. The i-th processing unit $1_i$ multiplies an input from $11_i$ and an input from $12_i$ and then adds the resultant product to the contents of the accumulator $Y_i$, thereby performing a partial minor product operation. The i-th processing unit $1_i$ then shifts the contents of the shift register 3. The calculation of the inner product and the shift operation are repeated n times. As a result of the processing, the product of the rectangular matrix $\mathbf{A}$ and the vector $\underline{x}$ is formed. In this case, data transfer between trays and data processing in data processing units are performed concurrently.

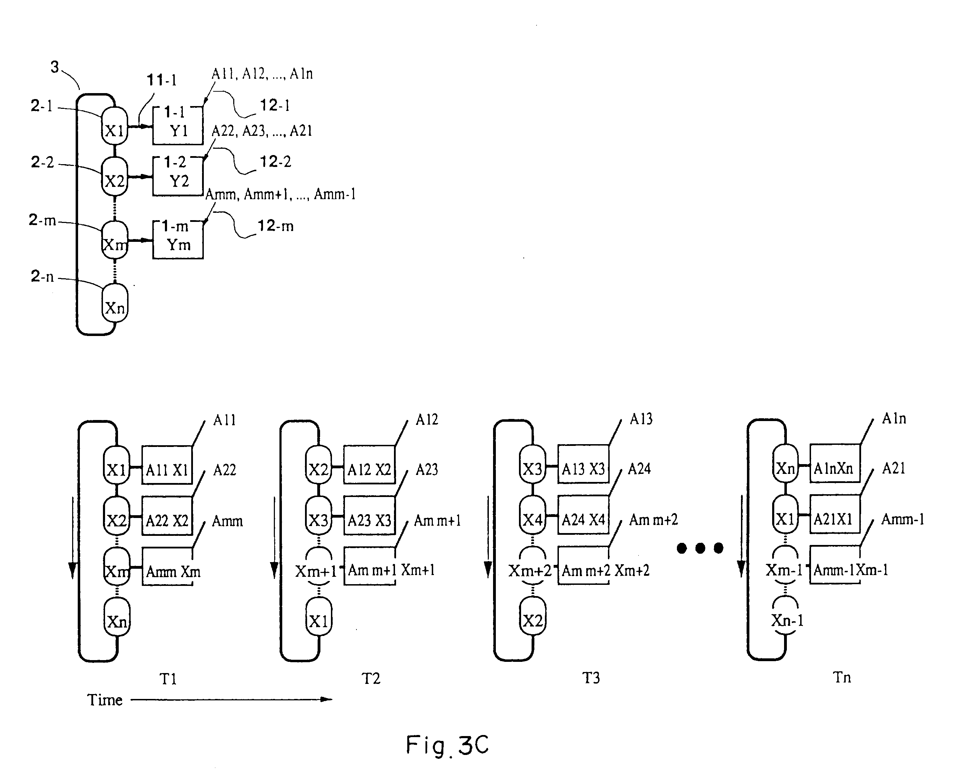

Figure 3C is a conceptual diagram of the operation of a system embodying the present invention. In the figure, data $X_1$ to $X_n$ in the trays 2 are elements of the vector $\underline{x}$ and the number of the elements is n. The data processing units are m in number and incorporate their respective accumulators Y1, Y2,.., Ym. The m x n rectangular matrix has elements from $A_{11}$ to $A_{mn}$ and hence m x n elements. $A_{11}$, $A_{12}$, ...$A_{1n}$ in the first row of the coefficient matrix are entered in sequence at respective timing steps in the systolic operation into the data processing unit $1_1$ from the input bus $12_1$. Also, the data processing unit $1_2$ is supplied with $A_{22}$, $A_{23}$,...$A_{21}$ in sequence at respective timing steps in the systolic operation. In addition, the data processing unit $1_m$ is supplied with $A_{mm}$, $A_{m\ m+1}$, ..., $A_{m\ m-1}$ in sequence at respective timing steps in the systolic operation.

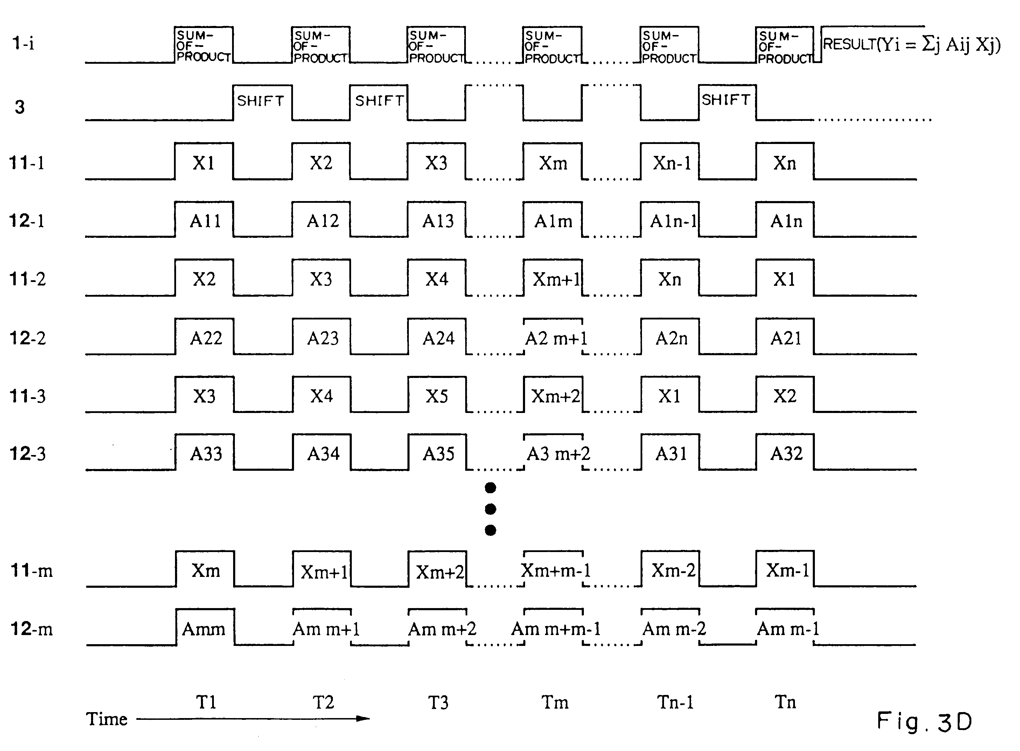

Figure 3D is a timing chart of the operation illustrated in Figure 3C. The operations at $T_1$, $T_2$, $T_3$ and $T_n$ in Figure 3C correspond to those at $T_1$, $T_2$, $T_3$ and $T_n$ in Figure 3D. At time $T_1$, data $X_1$, $X_2$, ..$X_m$,...$X_n$ are present in the trays $2_1$, $2_2$,...$2_n$, respectively, and $A_{11}$, $A_{22}$, ...$A_{mm}$, which are the elements of the coefficient matrix, are present in the data processing units $1_1$, $1_2$,...$1_m$. Therefore, at this time $T_1$, data process unit $1_1$ obtains a product of $A_{11}$ and data $X_1$ in tray $2_1$, data processing unit $1_2$ obtains a product of $A_{22}$ and data $X_2$ and data processing unit $1_m$ obtains a product of $A_{mm}$ and data $X_m$. That is, at a sync clock for obtaining the sum of products, $X_1$ is present at the bus $11_1$, $A_{11}$ at the

bus $12_1$, $X_2$ at bus $11_2$, $A_{22}$ at $12_2$, $X_3$ at $11_3$, $A_{33}$ at $12_3$, $X_m$ at $11_m$ and $A_{mm}$ at $12_m$. As illustrated in Figure 3C, the inner product is calculated at time $T_1$. The contents of accumulators Y are 0 at this point so that the result of the inner product is added to 0. When the sum-of-products calculation is terminated, a shift operation is performed. That is, the shift operation is performed during a time interval between $T_1$ and $T_2$ as illustrated in Figure 3D. Data is shifted between adjoining trays. That is, data are left-shifted in this case. Then, time $T_2$ arrives in Figure 3C. In the timing chart of Figure 3D as well, the sum-of-products is obtained during time interval $T_2$. As a result of the shift operation, $X_2$ is stored in the tray $2_1$, $X_3$ in the tray $2_2$ and $X_{m+1}$ in the tray $2_m$. Also, $A_{12}$, $A_{23}$, ..., $A_{m\ m+1}$, which are the elements of the coefficient matrix, are entered into the trays 1, 2, ..., m, respectively. Data present on the buses at time $T_2$ are illustrated in Figure 3D. At time $T_2$, the product of $A_{12}$ and $X_2$ is obtained and then added to the contents of the accumulator Y. In the unit $1_1$, therefore, the product of $A_{11}$ and $X_1$ obtained at time $T_1$ and the product of $A_{12}$ and $X_2$ obtained at time $T_2$ are summed and the result is stored in the accumulator. Similarly, in the unit $1_2$, $A_{22}$ x $X_2$ + $A_{23}$ x $X_3$ is stored in the accumulator. This is the case with the unit $1_m$. The shift operation is performed again and then time $T_3$ arrives. $X_3$ is shifted to the tray 1, $X_4$ to the tray 2, $X_{m\ m+2}$ to the tray m and $X_2$ to the tray n so that the calculation of inner product as shown in Figure 3C is carried out at time $T_3$.

The symbols of inputs to be entered into the data processing units are indicated on the time slot $T_3$ of Figure 3D. When such calculations are performed till time $T_n$, $A_{1n}$ x $X_n$ is added to the sum of the so-far-obtained products, i.e., the sum of $A_{11}$ x $X_1$ obtained at $T_1$, $A_{12}$ x $X_2$ obtained at $T_2$, $A_{13}$ x $X_3$ obtained at $T_3$,..., and $A_{1\ n-1}$ $X_{n-1}$ obtained at $T_{n-1}$, the sum having been stored in the accumulator Y in the unit $1_1$, so that the inner product of the first row of the matrix $\underline{\mathbf{A}}$ and the vector $\underline{\mathbf{X}}$ is formed. In the unit $1_2$ as well, the calculation of the inner product of the second row of the matrix $\underline{\mathbf{A}}$ and the vector $\underline{\mathbf{X}}$ is performed in n clock cycles. Similarly, the inner product of the m-th row vector of the matrix and the vector $\underline{\mathbf{X}}$ is calculated by the data processing unit $1_m$.

Therefore, by performing such a time series process, it becomes possible to perform the multiplication of a m x n rectangular matrix and an n-dimensional vector in a process time proportional to n by the use of m data processing units. Thus, a good number effect can be achieved. It is important here that data processing units and trays having data storage function are separated and made to correspond in number to the rows and columns in a rectangular matrix, respectively, and a time-series operation is synchronously possible even if the dimensions differ between the row and column. Even if n is smaller than m, m trays 2 are used so that a processing time is prolonged in proportion to m. In this case as well, a process will be performed with the number effect.

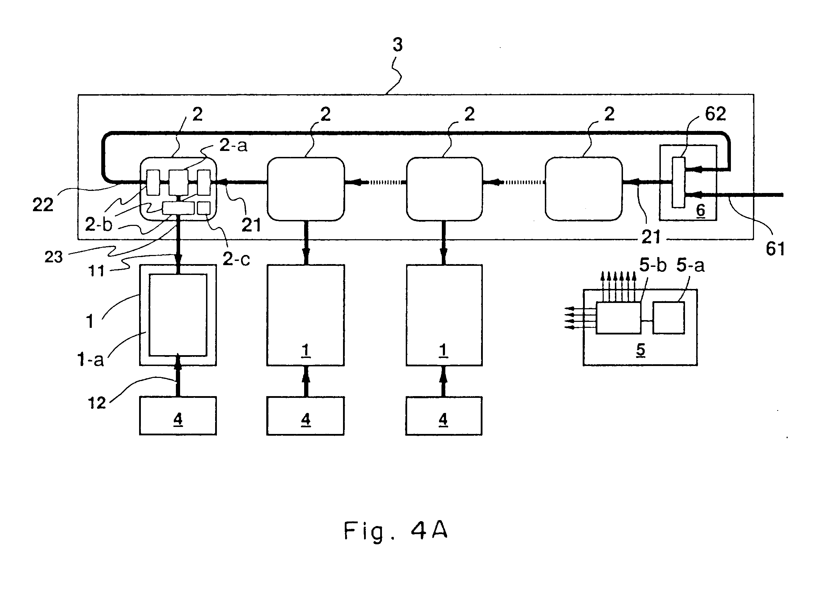

Figure 4A is a detailed block diagram of the configuration of Figure 3 for calculating the product $\underline{\mathbf{Y}}$ (m elements) of a m x n (n > m $\geqq$ 1) matrix $\underline{\mathbf{A}}$ and a vector $\underline{\mathbf{x}}$ with n elements. In the figure, like reference characters are used to designate corresponding parts to those in Figure 3A. la designates a processor of the data processing unit 1, which may be constructed from a digital signal processor, 2a designates a data storage circuit of the tray 2, which may be constructed from a latch circuit, 2b designates a data transfer circuit of the tray 2, which may be constructed from a bus driver, 2c designates control means of the tray 2, which may be constructed from logic circuits, 4 designates a memory device which forms a part of means for supplying data to the data processing unit 1 and a part of means for controlling the data processing unit 1 and may be constructed from a RAM (random access memory), 5 designates means for establishing synchronization between the data processing units 1 and the trays 2. 5a designates a clock generator which may be constructed from a crystal oscillator, and 5b designates a clock distributor which may be constructed from a buffer circuit.

The operation of the present embodiment is substantially the same as the above-described operation of the principle diagram of the present invention (illustrated in Figure 3A).

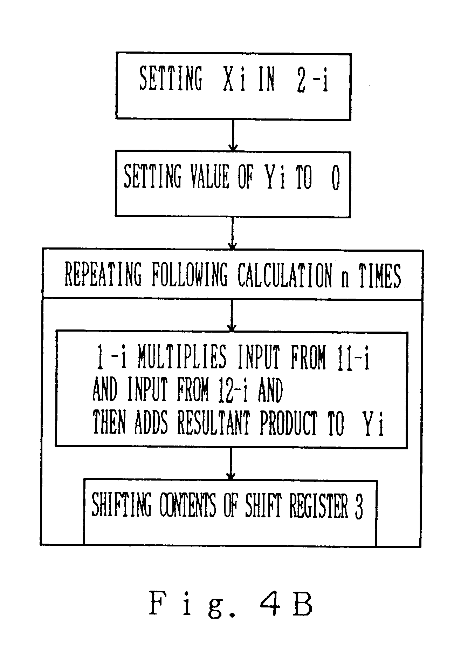

Figure 4B is a flowchart of the embodiment illustrated in Figure 4A. As illustrated in Figure 4A, according to the present invention, the data processing units 1 are separated from the trays 2 having a function of storing data, and the trays 2 are connected in a ring to form a systolic system. Where the number of the data processing units is m and the number of the trays is n, the product of a m x n matrix $\mathbf{A}$ and a vector $\mathbf{x}$ with n elements is calculated in accordance with a flowchart of Figure 4B. $X_i$ is set in tray $2_i$. The content of $Y_i$ is set to 0. Thus, the content of the accumulating register in the i-th data processing unit is initialized. The i-th processing unit $1_i$ multiplies an input from $11_i$ and an input from $12_i$ and then adds the resultant product to the contents of the accumulator $Y_i$. Then, the contents of the shift register 3 are shifted. The inner product calculation and the shift operation are repeated n times. As a result of this processing, the product of the rectangular matrix $\underline{\mathbf{A}}$ and the vector $\underline{\mathbf{x}}$ is formed. In this case, data transfer between trays and data processing in each data processing unit are performed concurrently.

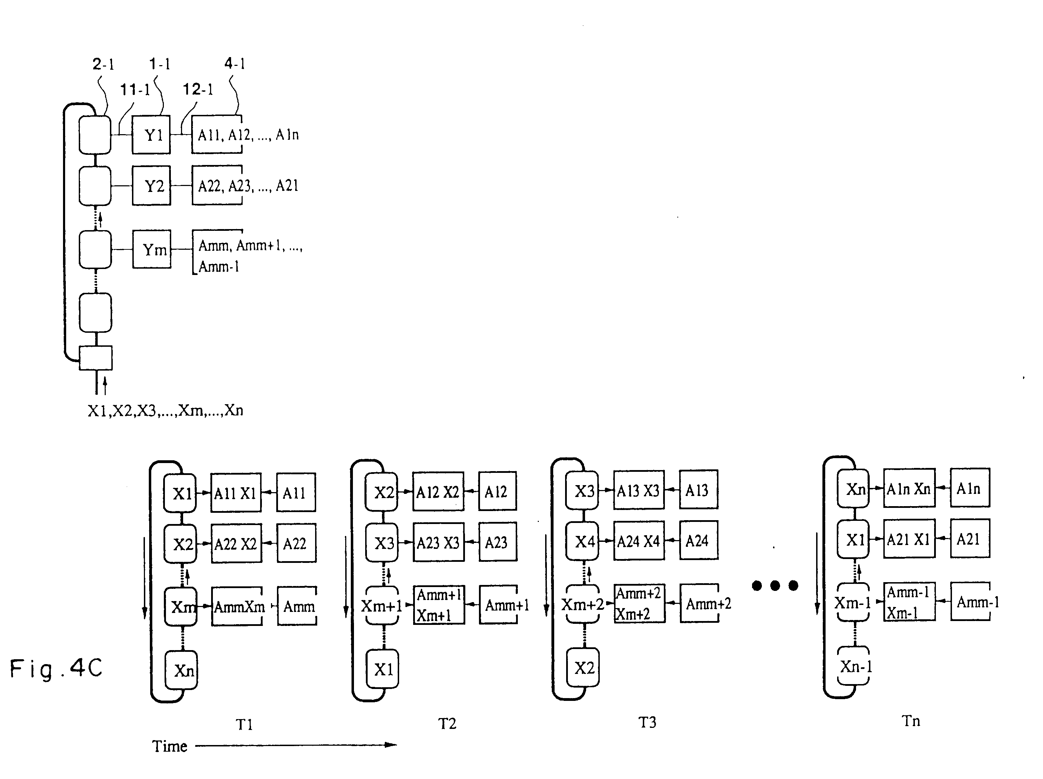

Figure 4C is a conceptual diagram of the operation of the system of Figure 4A and shows a systolic operation performed in the same manner as in Figure 3C. In the figure, let data $X_1$ to $X_n$ in the tray 2, which are elements of the vector $\mathbf{x}$, be n in number. There are m data processing units which incorporate accumulators $Y_1$, $Y_2$, ..., $Y_m$, respectively. m x n elements of $A_{11}$ to $A_{mn}$ are present in an m x n rectangular matrix. $A_{11}$, $A_{12}$, .., $A_{1n}$, which are the elements in the first row of the coefficient matrix, are synchronously entered into the data processing unit $1_1$ from an input bus $12_1$. Also, $A_{22}$, $A_{23}$, .., $A_{21}$ are entered into the data processing unit $1_2$ in the sequence of timing steps of the systolic operation. In addition, $A_{mm}$, $A_{m\ m+1}$,..., $A_{m\ m-1}$ are synchronously entered into the data processing unit $1_m$.

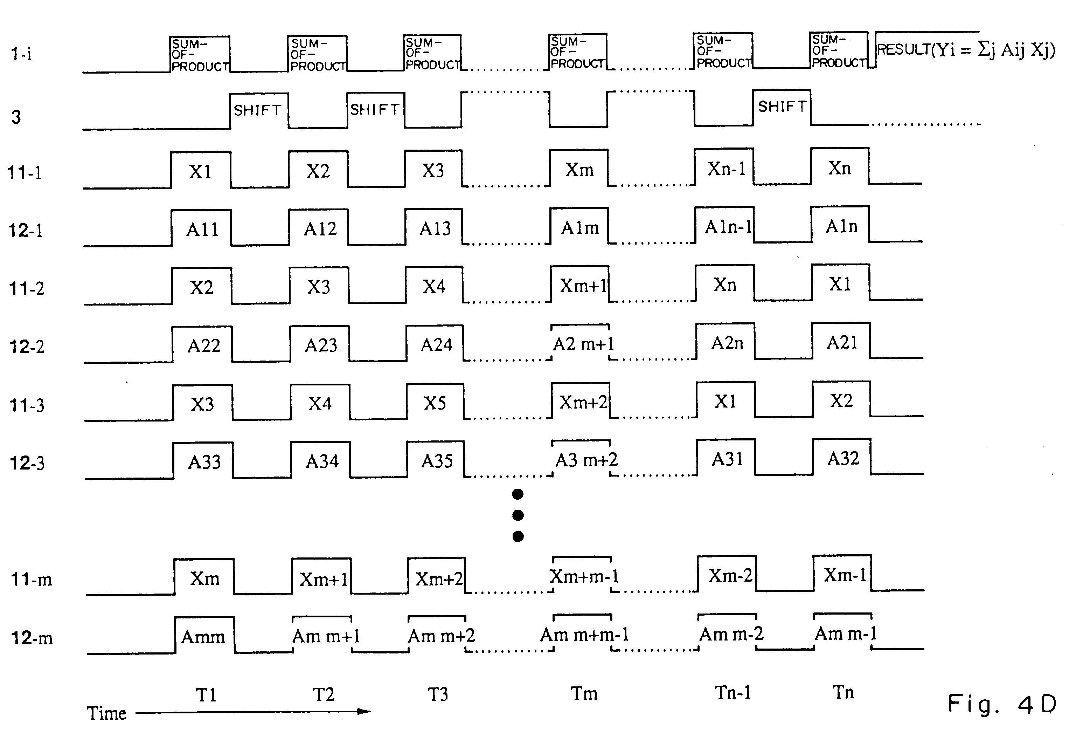

Figure 4D is a timing chart of the operation illustrated in Figure 4C. Time intervals $T_1$ to $T_n$ in Figure 4C correspond to times $T_1$, $T_2$,.., $T_n$ of Figure 4D. At time $T_1$, $X_1$, $X_2$, $X_m$,.., $X_n$ are present in the trays $2_1$, $2_2$, ..., $2_n$, respectively, as illustrated in Figure 4C. Into the data processing units $1_1$, $1_2$, ..., $1_m$ are respectively entered $A_{11}$, $A_{22}$, ..., $A_{mm}$ which are elements of the coefficient matrix. At time $T_1$, therefore, the product of $A_{11}$ and data $X_1$ in the tray $2_1$ is obtained in the data processing unit $1_1$, the product of $X_2$ in the tray $2_2$ and $A_{22}$ supplied from a memory is obtained in the data processing unit $1_2$, and likewise the product of $A_{mm}$ and $X_m$ is obtained in the data processing unit $1_m$. This is performed at time $T_1$ shown in Figure 4D. That is, at a sync clock for obtaining the sum of products, $X_1$ is present on the bus $11_1$, $A_{11}$ is present on the bus $12_1$, $X_2$ is present on the bus $11_2$, $A_{22}$ is present on the bus $12_2$, $X_3$ is present on the bus $11_3$, $A_{33}$ is present on the bus $12_3$, $X_m$ is present on the bus $11_m$ and $A_{mm}$ is present on the bus $12_m$. The calculation of the inner product is performed at time T1 as illustrated in Figure 4C. The value of the accumulator Y is 0 at this point. Thus, the result is the sum of the inner product and 0. When the calculation of the sum of products is terminated, the shift operation is performed. As illustrated in Figure 4D, the shift operation is performed between $T_1$ and $T_2$, during which time data is shifted between adjoining trays. That is, the left shift is performed in this case. Then, the operation advances to time $T_2$ in Figure 4C and the operation timing also advances to time $T_2$ in Figure 4D, thereby performing an operation of the time of the products. As a result of the shift operation, $X_2$ is stored in the tray $2_1$, $X_3$ is stored in the tray $2_2$, and $X_{m+1}$ is stored in the tray $2_m$. Into the units $1_1$, $1_2$,...$1_m$ are entered $A_{12}$, $A_{23}$, $A_{m\ m+1}$, respectively. Data present on the buses are indicated on time slot $T_2$ of Figure 4D. Thus, the product of $A_{12}$ and $X_2$ is formed at $T_2$ and added to the previous contents of the accumulator Y. Thus, in the unit $1_1$, the product of $A_{11}$ and $X_1$ obtained at $T_1$ and the product of $A_{12}$ and $X_2$ obtained at $T_2$ is summed and the result is stored in the accumulator. Similarly, $A_{22}$ x $X_2$ + $A_{23}$ x $X_3$ is stored in the accumulator in the unit $1_2$. This is the case with the unit $1_m$. The shift operation is performed again and then time $T_3$ arrives. As a result, $X_3$ is shifted to the tray $2_1$, $X_4$ is shifted to the tray 22, $X_{m+2}$ is shifted to the tray $2_m$, and $X_2$ is shifted to the tray $2_n$. The calculation of inner product is carried out at time $T_3$ as illustrated in Figure 4C.

The symbols of inputs to be entered into the data processing units are indicated on time slot $T_3$ in the time chart of Figure 4D. When such calculations are performed till time $T_n$, $A_{1n}$ x $X_n$ is added to the sum of the products, i.e., the sum of $A_{11}$ x $X_1$ obtained at $T_1$, $A_{12}$ x $X_2$ obtained at $T_2$, $A_{13}$ x $X_3$ obtained at $T_3$,..., and $A_{1\ n-1}$ x $X_{n-1}$ obtained at $T_{n-1}$, the sum having been stored in the accumulator Y in the unit $1_1$, so that the inner product of the first row of the matrix **A** and the vector **X** is calculated. In the unit $1_2$ as well, the calculation of the inner product of the second row of the matrix **A** and the vector **X** is performed in n clock cycles. Similarly, the inner product of the m-th row of the matrix and the vector **X** is calculated by the data processing unit $1_m$.

Therefore, by performing such a time series process, it becomes possible to perform the multiplication of an m x n rectangular matrix and an n-dimensional vector in a process time proportional to n by the use of m data processing units. Thus, a good number effect can be achieved.

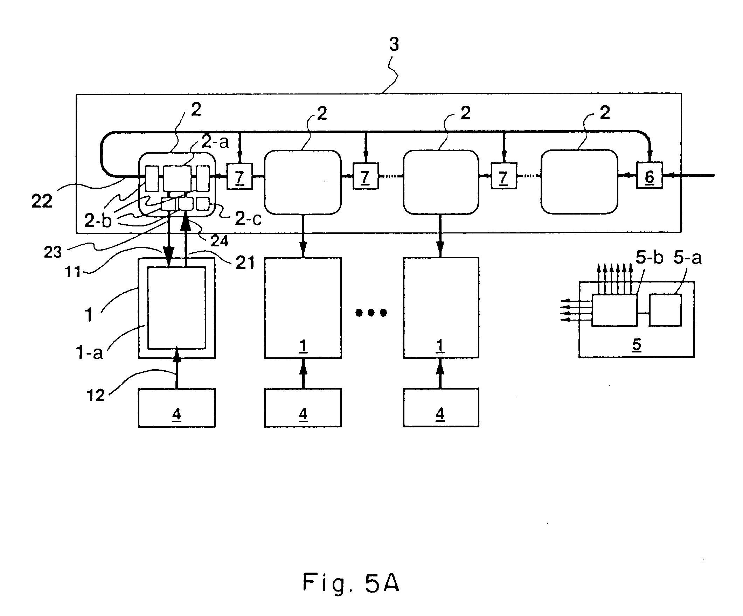

Figure5A illustrates a second embodiment of the present invention. More specifically, Figure 5A illustrates a configuration of a systolic system for multiplying the product of a m x n matrix **A** and a vector **x** with n elements by a k x m matrix **B** from left. In the figure, like reference characters are used to designate corresponding parts to those in Figure 3A. 1a designates a processor of the data processing unit 1, which may be constructed from a digital signal processor. 2a designates a data storage circuit of the tray 2, which may be constructed from a latch circuit, 2b designates a data transfer circuit of the tray 2, which may be constructed from a bus driver, 2c designates control means of the tray 2, which may be constructed from logic circuits. 4 designates a memory device which forms a part of means for supplying data to the data processing unit 1 and a part of means for controlling the data processing unit 1 and may be constructed from a RAM (random access memory). 5 designates means for establishing synchronization between the data processing units 1 and the trays 2. 5a designates a clock generator which may be constructed from a crystal oscillator, and 5b designates a clock distributor which may be constructed from a buffer circuit. 6 designates a selector for selecting among data returned systolically, data input to the tray and external data, and 7 designates selectors for bypassing systolic data halfway.

The present embodiment is exactly the same as the first embodiment in operation as far as the intermediate result **Ax** is obtained. Provided that, in the state in which the elements of the intermediate result **Ax** are stored in the respective data processing units, (a) the elements of the intermediate result are written into the corresponding trays 2, (b) the bypassing selector 7 is turned on to alter the length of the shift register to m, and (c) the matrix **A** is changed to the matrix and n and m are changed to m and k, respectively, in the first embodiment of the present invention, exactly the same operation will result.

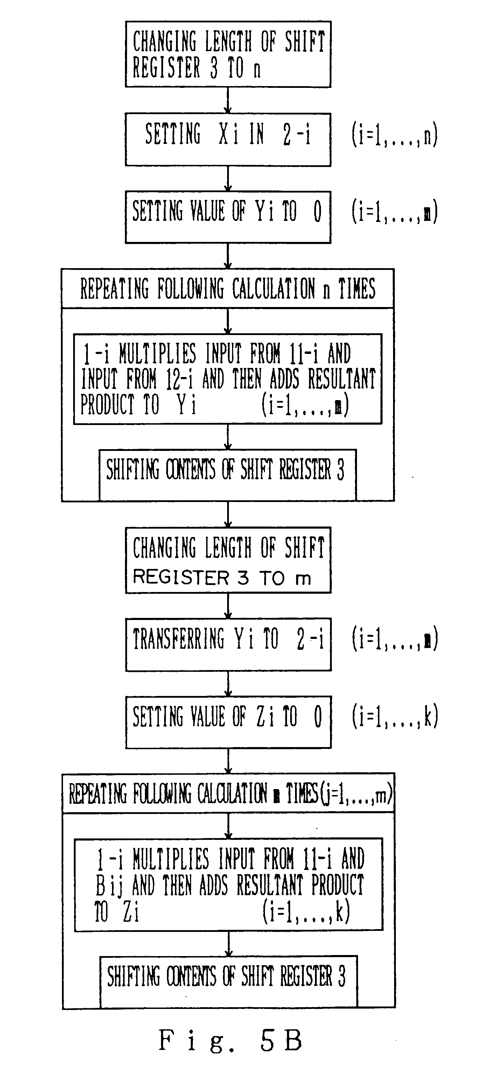

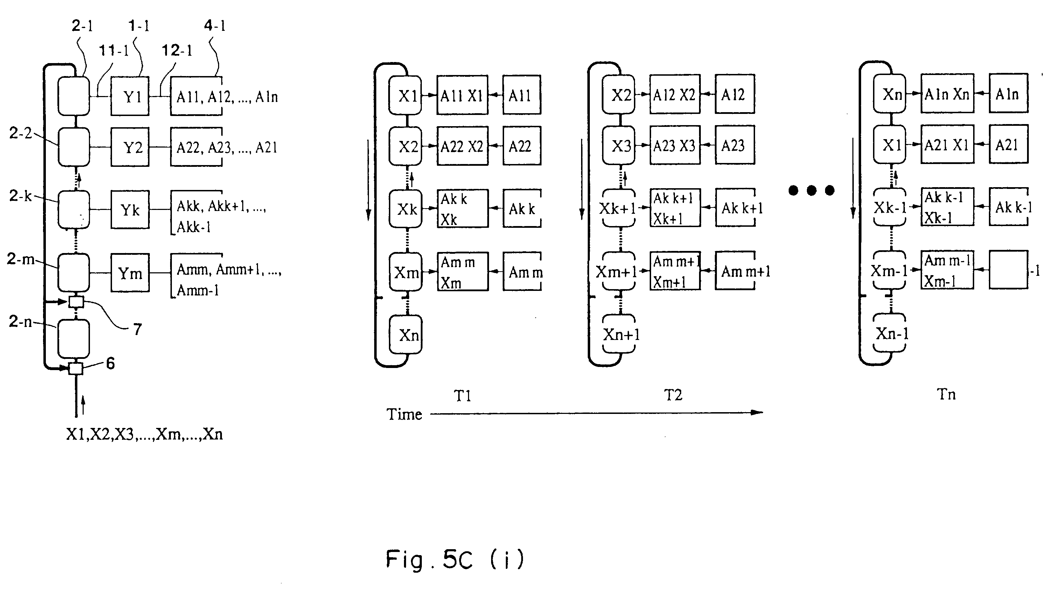

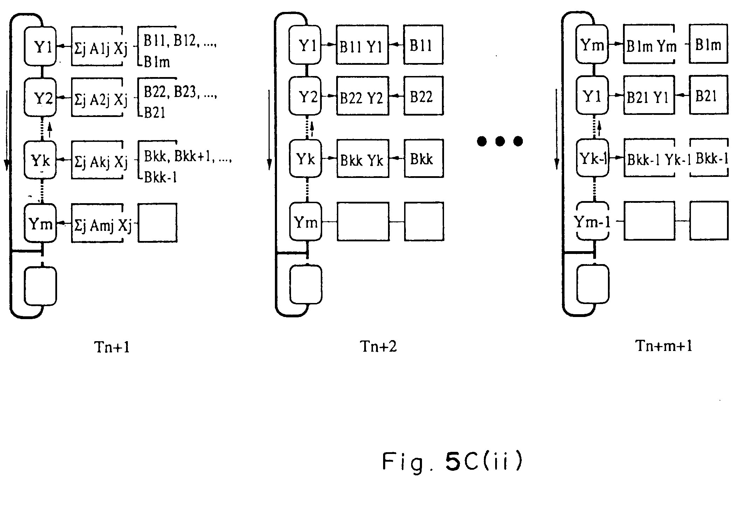

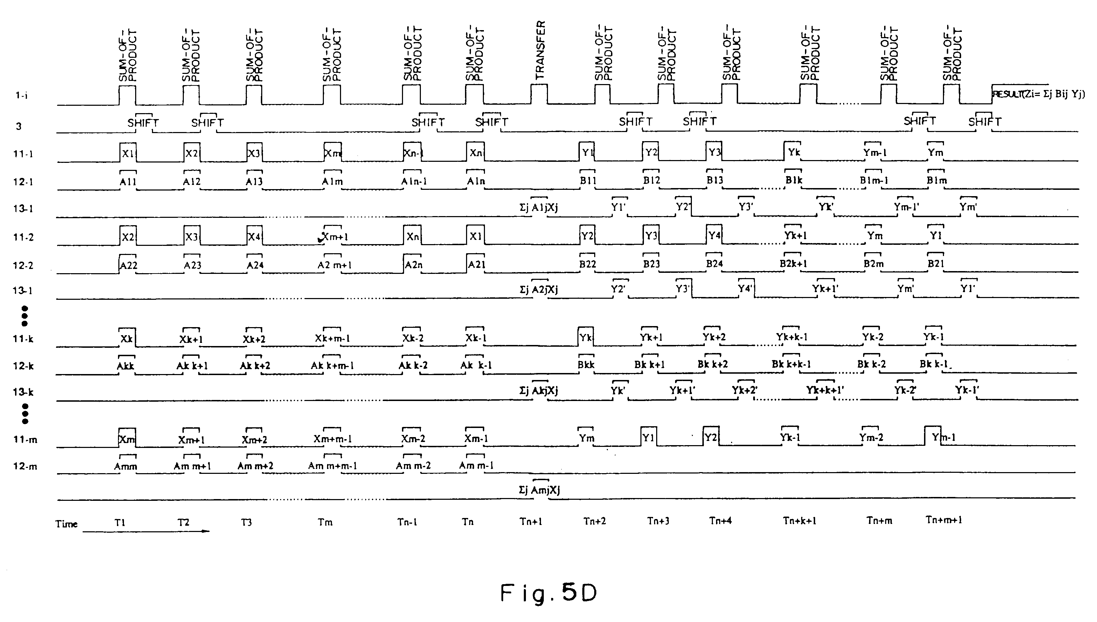

Figure 5B is an operational flowchart of the second embodiment, Figure 5C is a schematic diagram illustrating the operation of the second embodiment, and Figure 5D is a timing chart of the operation of the second embodiment.

Multiplying the product of an m x n matrix **A** and a vector **x** with n elements by a k x m matrix **B** from the left is performed in accordance with the flowchart of Figure 5B. $X_i$ is set in the tray $2_i$. The value of $Y_i$ is set to 0. That is, the value of the accumulating register in the i-th data processing unit is initialized. The i-th processing unit $1_i$ multiplies an input from $11_i$ and an input from $12_i$ and then adds the resultant product to the contents of the accumulator $Y_i$. Then,

the shift register 3 is shifted. The calculation of the inner product and the shift operation are repeated n times. As a result of this process, the product of the rectangular matrix **A** and the vector **x** is formed.

Next, the length of the shift register is changed to m and the contents of $Y_i$ are transferred to the tray $2_i$. $Z_i$ ($i = 1, ..., k$) is then set to 0. For multiplication by the matrix **B**, the i-th processing unit $1_i$ multiplies an input from $11_i$ and an input from $12_i$ and then adds the resultant product to the contents of an accumulator $Z_i$. The contents of the shift register 3 are then shifted. The calculation of the inner product and the shift operation are repeated k times.

Figure 5C is a conceptual diagram of the above operation. In the figure, data $X_1$ to $X_n$ in the trays, respectively, the n elements of the vector **x**. At first, m data processing units are effective and have accumulators $Y_1$, $Y_2$,..., $Y_m$. The m x n rectangular matrix **A** has m x n elements of $A_{11}$ to $A_{mn}$. $A_{11}$, $A_{12}$,.., $A_{1n}$, which are elements in the first row of the coefficient matrix, are entered sequentially into the data processing unit $1_1$ from the input bus $12_1$. The data processing unit $1_2$ is supplied with $A_{22}$, $A_{23}$, ..., $A_{21}$ in the sequence of timing steps of the systolic operation. Also, the data processing unit $1_m$ is supplied with $A_{mm}$, $A_{m\,m+1}$,..., $A_{m\,m-1}$ sequentially.

Figure 5D is a timing chart of the operation illustrated in Figure 5C. In respect of operations during time intervals $T_1$ to $T_n$, Figure 5C correspond to Figure 5D. At time $T_1$, elements $X_1$, $X_2$,.., $X_k$,.., $X_n$ of vector **x** are present in the trays 1, 2, .., n, respectively, as illustrated in Figure 5C. The data processing units $1_1$, $1_2$,..., $1_k$, ..., $1_m$ receive respectively $A_{11}$, $A_{22}$,..,$A_{kk}$ ...., $A_{mm}$ which are elements of the coefficient matrix. At time $T_1$, therefore, the product of $A_{11}$ obtained from a memory and data $X_1$ in the tray 1 is obtained in the data processing unit $1_1$, the product of $X_2$ in the tray 2 and $A_{22}$ supplied from a memory is obtained in the data processing unit $1_2$, and likewise the product of $A_{kk}$ and $X_k$ is obtained in the data processing unit $1_k$. This is performed at time $T_1$ in Figure 5D. That is, at a sync clock for obtaining the sum of products, element $X_1$ of vector **x** is present on the bus $11_1$, element $A_{11}$ of coefficient matrix **A** is present on the bus $12_1$, $X_2$ is present on the bus $11_2$, $A_{22}$ is present on the bus $12_2$, $X_k$ is present on the bus $11_k$, $A_{kk}$ is present on the bus $12_k$, $X_m$ is present on the bus $11_m$ and $A_{mm}$ is present on the bus $12_m$. The calculation of the inner product is performed at time $T_1$ as illustrated in Figure 5C. The value of the accumulator Y is 0 at this point. Thus, the result is the sum of the inner product and 0. When the calculation of the sum of products is terminated, the shift operation is performed. As illustrated in Figure 5D, the shift operation is performed between $T_1$ and $T_2$, during which time data is shifted between adjoining trays. That is, the left shift is performed in this case. Then, time $T_2$ arrives in Figure 5C. Likewise, time $T_2$ arrives in Figure 5D, thereby performing an operation of the sum of the products. As a result of the shift operation, $X_2$ is stored in the tray 1, $X_3$ is stored in the tray 2, $X_{k+1}$ is stored in the tray k and $X_{m+1}$ is stored in the tray m. Into the data processing units $1_1$, $1_2$, ...$1_k$, ..., m are entered elements $A_{12}$, $A_{23}$,.., $A_{k\,k+1}$,..., $A_{m\,m+1}$, of the coefficient matrix respectively. It is shown by data present on the buses 11 and 12 on time slot $T_2$ of Figure 5D that elements of vector **x** are entered into trays and elements of coefficient matrix are entered into data processing units. Thus, the product of $A_{12}$ and $X_2$ is formed at $T_2$ and added to the previous content of the accumulator Y. Thus, in the data processing unit $1_1$, the product of $A_{11}$ and $X_1$ obtained at $T_1$ and the product of $A_{12}$ and $X_2$ obtained at $T_2$ are summed and the result is stored in the accumulator. Similarly, $A_{22} \times X_2 + A_{23} \times X_3$ is stored in the accumulator in the data processing unit $1_2$. This is the case with the units $1_k$ and $1_m$. The shift operation is performed again and time $T_3$ arrives. As a result, $X_3$ is shifted to the tray 1, $X_4$ is shifted to the tray 2, $X_{k+2}$ is shifted to the tray k, and $K_{m\,m+2}$ is shifted to the tray m, and $X_2$ is shifted to the tray n. The calculation of inner products is carried out at time $T_3$ as illustrated in Figure 5C.

When such calculations are performed till time $T_n$, $A_{1m} \times X_m$ will, as shown in time $T_m$ in Figure 5D, be added to the sum of the so-far-obtained products, i.e., the sum of $A_{11} \times X_1$ obtained at $T_1$, $A_{12} \times X_2$ obtained at $T_2$, $A_{13} \times X_3$ obtained at $T_3$,..., and $A_{1\,k} \times X_k$ obtained at $T_k$, which has been stored in the accumulator Y in the data processing unit $1_1$, so that the inner product of the first row of the matrix **A** and the vector **x** is calculated. In the data processing unit $1_2$ as well, the calculation of the inner product of the second row of the matrix **A** and the vector **x** is performed in n clock cycles. Similarly, the inner product of the k-th row of the matrix and the vector **x** is calculated by the data processing unit $1_k$.

Assuming that the effective number of the data processing units is k and the effective number of the trays is m, an operation of obtaining the product of a k x m matrix **B** and a vector **y**=**Ax** with m elements is performed. An i-th element $Y_i$ of **Ax** is set in the tray $2_i$. The value of $Z_i$ is set to 0. That is, the value of the accumulating register of the i-th data processing unit is initialized. The i-th processing unit $1_i$ multiplies an input from $11_i$ and an input from $12_i$ and then adds the resultant product to the contents of the accumulator $Z_i$. The contents of the shift register 3 are then shifted. This calculation of the inner product and shift operation are repeated m times, corresponding to dimension m of **Ax**. As a result of this process, the product of the rectangular matrix **B** and the vector **Y** is formed.

In Figure 5C, let data $Y_1$ to $Y_m$ in the tray 2, which are elements of the vector **Y**, be m in number. There are k effective data processing units which incorporate accumulators $Z_1$, $Z_2$, ..., $Z_k$, respectively. There are k x m elements of $B_{11}$ to $B_{km}$ in the k x m rectangular matrix **B**. $B_{11}$, $B_{12}$, .., $B_{1m}$, which are the elements in the first row of the coefficient matrix **B**, are entered sequentially into the data processing unit $1_i$ from an input bus $12_1$. Also, $B_{22}$, $B_{23}$, .., $B_{21}$ are entered into the data processing unit $1_2$ in the sequence of timing steps of the systolic operation. In addition, $B_{kk}$, $B_{k\,k+1}$,..., $B_{k\,k-1}$ are sequentially entered into the data processing unit $1_k$.

Figure 5D is a timing chart of the operation illustrated in Figure 5C. In respect of operations during time intervals $T_{n+1}$ to $T_{n+m+1}$, Figure 5C corresponds to Figure 5D. At time $T_{n+1}$, $Y_1$, $Y_2$,.., $Y_m$ are present in the trays 1, 2, .., m, respectively, as illustrated in Figure 5C. In the data processing units $1_1$, $1_2$,..., $1_k$ $B_{11}$, $B_{22}$, ... $B_{kk}$ have been respectively received, $B_{11}$,$B_{22}$, ..., $B_{kk}$ have been respectively received which are elements of the coefficient matrix $\underline{\mathbf{B}}$. At time $T_{n+2}$, the product of $B_{11}$ and data $Y_1$ in the tray 1 is obtained in the data processing unit $1_1$, the product of $Y_2$ in the tray 2 and $B_{22}$ supplied from a memory is obtained in the data processing unit $1_2$, and likewise the product of $B_{kk}$ and $Y_k$ is obtained in the unit $1_k$. This is performed at time $T_{n+2}$ in Figure 5D. That is, at a sync clock for obtaining the sum of products, $Y_1$ is present on the bus $11_1$, $B_{11}$ is present on the bus $12_1$, $Y_2$ is present on the bus $11_2$, $B_{22}$ is present on the bus $12_2$, $Y_3$ is present on the bus $11_3$, $B_{33}$ is present on the bus $12_3$, $Y_k$ is present on the bus $11_k$ and $B_{kk}$ is present on the bus $12_k$. Thus, the calculation of the inner products is performed at time $T_{n+2}$ as illustrated in Figure 5C. The value of the accumulator Z is 0 at this point. Thus, the result is the sum of the inner product and 0. When the calculation of the sum of products is terminated, the shift operation is performed. As illustrated in Figure 5D, the shift operation is performed between $T_{n+2}$ and $T_{n+3}$, during which time data is shifted between adjoining trays. That is, the left shift is performed in this case. Then, time $T_{n+3}$ arrives in Figure 5C. Time $T_{n+3}$ arrives in Figure 5D, thereby performing an operation of the sum of the products. a a result of the shift operation, $Y_2$ is stored in the tray $2_1$, $Y_3$ is stored in the tray $2_2$, and $Y_{k+1}$ is stored in the tray $2_k$. Into the data processing units $1_1$, $1_2$.., $1_k$ are entered elements $B_{12}$, $B_{23}$, $B_{k\,k+1}$ of coefficient matrix $\underline{\mathbf{B}}$, respectively. Data present on the buses are indicated on time slot $T_{n+3}$ of Figure 5D. Thus, the product of $B_{12}$ and $Y_2$ is formed at $T_{n+3}$ and then added to the previous contents of the accumulator Z. Thus, in the unit $1_1$, the sum of the product of $B_{11}$ and $Y_1$ obtained at $T_{n+2}$ and the product of $B_{12}$ and $Y_2$ obtained at $T_{n+3}$ is obtained and the result is stored in the accumulator Z. Similarly, $B_{22} \times Y_2 + B_{23} \times Y_3$ is stored in the accumulator Z in the unit $1_2$. This is the case with the unit $1_k$. The shift operation is performed again and then time $T_{n+4}$ arrives.

When such calculations are performed till time $T_{n+m+1}$, $B_{1m} \times Y_m$ is added to the sum of the so-far-stored products, i.e., the sum of $B_{11} \times Y_1$ obtained at $T_{n+2}$, $B_{12} \times Y_2$ obtained at $T_{n+3}$, $B_{13} \times Y_3$ obtained at $T_{n+4}$, and so on, the sum having been stored in the accumulator Z in the unit $1_1$, so that $B_{1m} \times Y_m$ is added to the sum of the inner products stored in the accumulator Z at time $T_{n+m+1}$ and the inner product of the first row of the matrix B and the vector $\underline{\mathbf{Y}}$ is calculated. In the unit $1_2$, as well, the calculation of the inner product of the second row of the matrix B and the vector $\underline{\mathbf{y}}$ is performed. Similarly, the inner product of the k-th row of the matrix $\underline{\mathbf{B}}$ and the vector $\underline{\mathbf{y}}$ is calculated by the data processing unit $1_k$.

Therefore, by performing such a time series process, it becomes possible to perform the multiplication of a k x m rectangular matrix $\underline{\mathbf{B}}$ and a vector in a process time proportional to m. Thus, a good number effect can be achieved.

It is important in the present embodiment that the length of the shift register 3 can be changed, and the intermediate result can be written into the trays 2 and processed as new data. If the length of the shift register 3 could not be changed, n unit times would be needed to circulate all the data. The capability of processing of intermediate results as new data will permit the execution of a wider range of processes with small-scale hardware than in the ring systolic array system. Furthermore, it is important that a time required to write data into the shift register is short and constant.

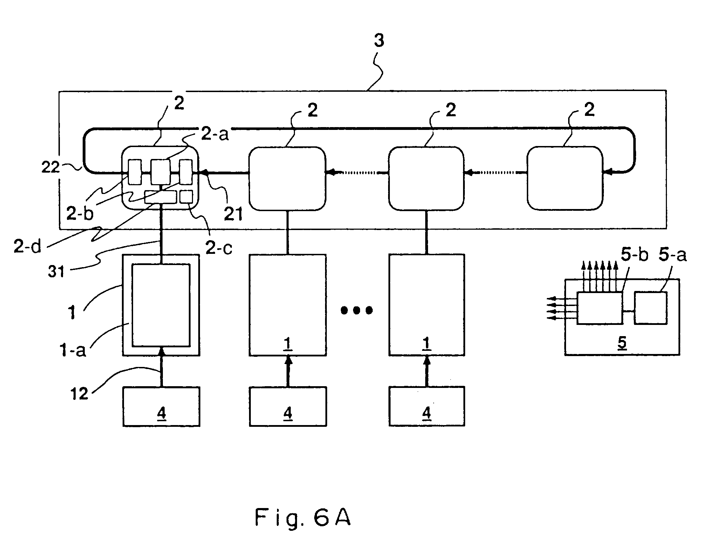

Figure 6A illustrates a third embodiment of the present invention. This system is configured to calculate the product of the transposed matrix $\underline{\mathbf{A}}^T$ of an m x n rectangular matrix $\underline{\mathbf{A}}$, i.e., a (n x m) matrix, and a vector $\underline{\mathbf{x}}$ with m elements. In this figure, like reference characters are used to designate corresponding parts to those in Figure 3.

In calculating the product of the transposed matrix $\underline{\mathbf{A}}^T$ and the vector $\underline{\mathbf{x}}$, row vectors constituting the matrix $\underline{\mathbf{A}}$ are each stored in respective memories 4 coupled to data processing units 1 and data are circulated through the shift register 3 while a partial sum of products obtained at intermediate stages of the calculation are accumulated in data storage circuits 2a in the trays.

Figure 6A is a detailed block diagram of the third embodiment in which the product $\underline{\mathbf{y}}$ (n elements) of an n x m (n $\geqq$ m $\geqq$ 1) ) matrix $\underline{\mathbf{A}}^T$ and a vector $\underline{\mathbf{x}}$ with m elements is calculated. In the figure, like reference characters are used to designate corresponding parts to those in Figure 3. la designates a processor of the data processing unit 1, which may be constructed from a digital signal processor. 2a designates a data storage circuit of the tray 2, which may be constructed from a latch circuit, 2b designates a data transfer circuit of the tray 2, which may be constructed from a bus driver, 2c designates control means of the tray 2, which may be constructed from logic circuits. 4 designates a storage device which forms a part of means for supplying data to the data processing unit 1 and a part of means for controlling the data processing unit 1 and may be constructed from a RAM (random access memory). 5 designates means for establishing synchronization between the data processing units 1 and the trays 2. 5a designates a clock generator which may be constructed from a crystal oscillator, and 5b designates a clock distributor which may be constructed from a buffer circuit.

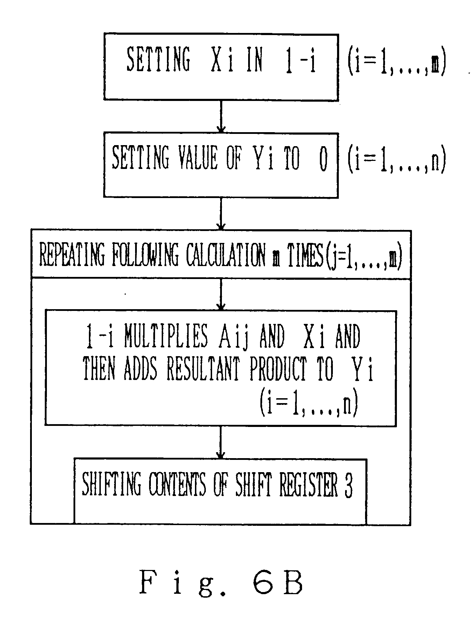

Figure 6B is an operational flowchart of the third embodiment. $X_i$ is set in the unit $1_i$ (i = 1,..., m). The value of accumulator $Y_i$ (i = 1,.., n) is set to 0. The unit $1_i$ multiplies $A_{ji}$ and $X_i$ and then adds the resultant product to $Y_i$ (i=1, ... n). The content of the shift register, namely, the sums of products are then shifted. This operation is repeated for j = 1,..., m. The multiplication of a transposed matrix and a vector is made possible with each of the row vectors of the matrix $\underline{\mathbf{A}}$ stored in a memory 4 without changing an arrangement of data, i.e., without transposing the matrix $\underline{\mathbf{A}}$. This

is very important in execution of a back propagation which is one of the learning algorithms of a neural network to be described later. The amount of calculation in the network is of the order of m. The data transfer time is negligible as compared with the processing time so that there is no overhead for the transfer time. Further, this operation is applied to a SIMD method.

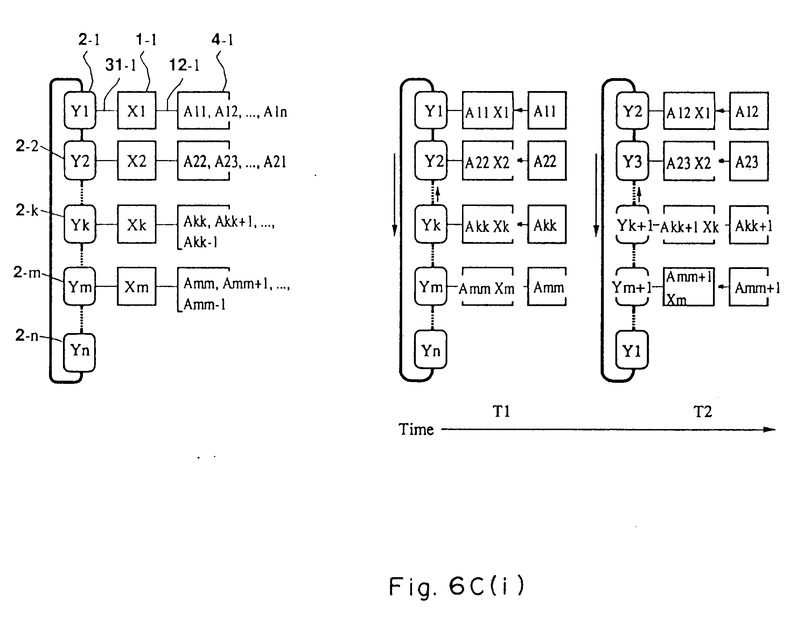

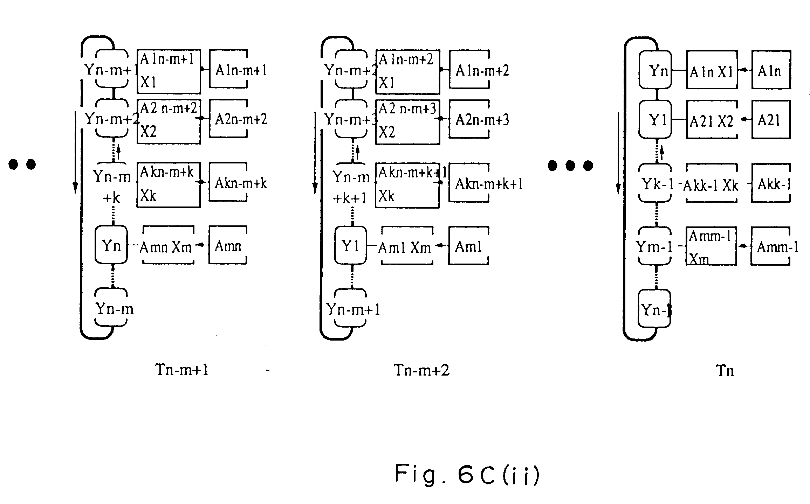

Figure 6C is a schematic diagram illustrating the operation of the third embodiment. $A_{11}$ to $A_{1m}$ are entered into the unit $1_1$ in sequence. $A_{22}$, $A_{23}$,..$A_{21}$ are entered into the unit $1_2$, and $A_{kk}$, $A_{k k+1}$,..., $A_{k k-1}$ are entered into the k-th unit through a memory circuit starting with a diagonal element $A_{22}$. $A_{mm}$, $A_{m m+1}$,..., $A_{m m-1}$ are entered into the m-th unit. $Y_1$ to $Y_n$ circulate through the trays.

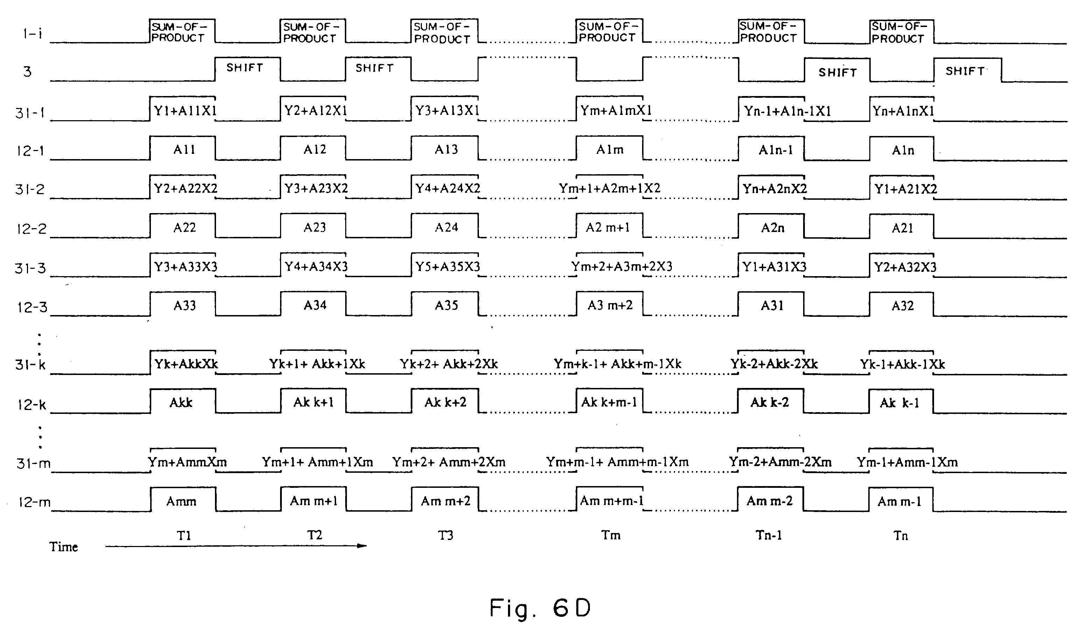

Figure 6D is a timing chart of the operation of the third embodiment. Data present on the buses provided between the memory and data processing unit and between the data processing unit and tray are indicated on time slots $T_1$ to $T_n$ and they correspond to those in Figure 6C. $Y_1$ to $Y_n$ are all 0 in time slot $T_1$. The product of $A_{11}$ and $X_1$ is formed by the unit $1_1$ and then added to $Y_i$. At the same time, $A_{22}$ and $X_2$ are added to $Y_2$, $A_{kk}$ x $X_k$ is added to $Y_k$ and $A_{mm}$ x $X_m$ is added to $Y_m$. A shift operation is performed and then time $T_2$ arrives. That is, Y data circulate. In the first unit $1_1$, $A_{12}$ x $X_1$ is calculated and then added to the content of $Y_2$ which is $A_{22}$ x $X_2$ obtained at $T_1$. Thus, $Y_2 = A_{22}$ x $X_2$ + $A_{12}$ x $X_1$. Similarly, in the unit $1_2$, $A_{23}$ x $X_2$ is added to the previous content of $Y_3$, thereby providing $A_{33}$ x $X_3$ + $A_{23}$ x $X_2$. In the k-th unit $A_{k k+1}$ x $X_k$ is added to $Y_{k+1}$. Also, in the m-th unit, $A_{m m+1}$ x $X_m$ is added to $Y_{m+1}$. Thus, as a result of circulation of Y data, in the n-th time slot $T_n$, $A_{1n}$ x $X_1$ is added to $Y_n$ which has been obtained by then in the first unit $1_1$. Also, $A_{21}$ x $X_2$ is added to $Y_1$ in unit $1_2$. When this is viewed as a whole, the first element $X_1$ of the vector $\underline{x}$ is multiplied by $A_{11}$ at $T_1$ so that $A_{11}$ x $X_1$ is calculated. This is stored in $Y_1$. The product $A_{21}$ x $X_2$ of the second element $A_{21}$ in the first row of the transposed matrix $\underline{A}^T$ and $X_2$ is calculated by the second unit $1_2$ in the last clock cycle $T_n$. This is stored in the same $Y_1$. The product of the last element $A_{m1}$ in the first row of the transposed matrix $\underline{A}^T$ and $X_m$ is calculated by the m-th unit $1_m$ in the clock cycle $T_{n-m+2}$ of Figure 6C. That is, the product of $A_{m1}$ and $X_m$ is obtained and added to $Y_1$. This is also the case with the second row of the transposed matrix $\underline{A}^T$. The product of $A_{12}$ and $X_1$ is calculated by the unit $1_1$ in the clock cycle $T_2$. $A_{22}$ x $X_2$ is obtained by the second unit $1_2$ in the clock cycle $T_1$. It is in the time slot $T_{n-m+3}$ that $Y_2$ is recirculated to obtain a product. After the time slot $T_{n-m+3}$ the multiplication and shift operation are performed. In the time slot $T_n$, $A_{32}$ x $X_3$ is added to $Y_2$ in the third unit $1_3$. Thus, the inner product of the second row of the transposed matrix $\underline{A}^T$ and the vector $\underline{x}$ is calculated in time slot $T_n$. Since, in general, the data line from the k-th tray to the k-th unit is $31_k$, portions indicated at $31_k$ have only to be followed as shown in Fig. 6D. That is, $Y_k$ + $A_{kk}$ x $X_k$ is calculated in time slot $T_1$, $Y_{k+1}$ + $A_{k k+1}$ x $X_k$ is calculated in time slot $T_2$ and $Y_{k+2}$ + $A_{k k+2}$ $X_k$ is calculated in time slot $T_{n-1}$. $Y_{k-2}$ + $A_{k k-2}$ x $X_k$ is calculated in time slot T. $Y_{k-1}$ + $A_{k k-1}$ x $X_k$ is calculated in time slot $T_n$. Whereby, the product of the transposed matrix $\underline{A}^T$ and m-dimensional vector $\underline{x}$ is calculated. That is, to calculate the product of the transposed matrix $\underline{A}^T$ and the vector $\underline{x}$, row vectors, each constituting a row of the matrix $\underline{A}$, are stored in respective memories 4 connected to the data processing units 1 and the partial sums produced during the course of the calculation are circulated through the shift register while they are accumulated in the data storage circuits of the trays 2. Where the product of a transposed matrix $\underline{A}^T$ and a vector $\underline{x}$ is calculated after the product of a matrix $\underline{A}$ and another vector u is obtained by the use of such a method, the row vectors of the matrix $\underline{A}$ stored in the memories 4 connected to the data processing units 1 and used in calculating the product of the matrix $\underline{A}$ and the vector $\underline{u}$ may be used as they are without the need to transfer to the data processing units 1 the elements of the transposed matrix $\underline{A}^T$. It is not necessary to transpose matrix $\underline{A}$ in a memory when a calculation involving the transposed matrix $\underline{A}$ is to be performed in the present embodiment. Thus, the transfer time can be saved and the process time can be further shortened.

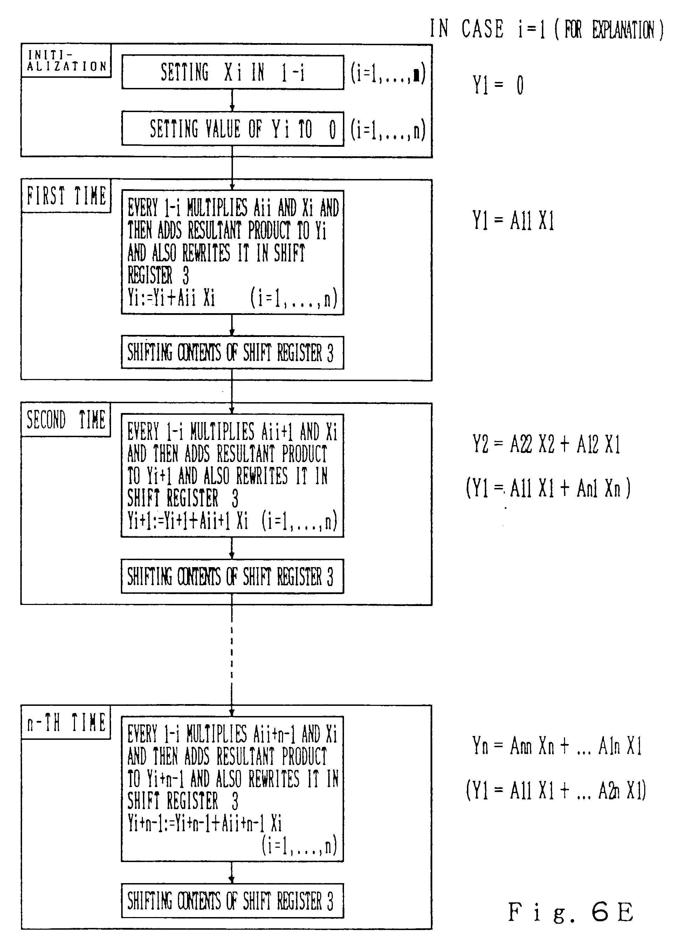

Figure 6E is a detailed flowchart of the step to be repeated of Figure 6B.

As an initialization process $X_i$ is set in unit $1_i$ and the value of $Y_i$ is made 0. At a first timing, each unit $1_i$ adds the product of $A_{ii}$ and $X_i$ to $Y_i$ and writes the result of the sum of the products in a tray $2_i$ of shift register 3 again. Namely,

$$Y_i = Y_i + A_{ii}X_i \ (i=1, ..., n)$$

Then, shift register 3 is shifted.

At a second timing, each unit $1_i$ adds the product of $A_{i i+1}$ and $X_i$ to $Y_{i+1}$ and the result of the sum of the products is written in tray $2_i$. Namely,

$$Y_{i+1} = Y_{i+1} + A_{i i+1} X_i \ (i=1, ..., n)$$

Then shift register 3 is shifted.

At n-th timing, each unit $1_i$ adds the product of $A_{i i+n-1}$ and $X_i$ to $Y_{i+n-1}$ and writes the result of the sum of the products in tray $2_i$ again. Namely,

$$Y_{i+n-1} = Y_{i+n-1} + A_{i\,i+n-1}\,X_i\ (i=1,\,...,\,n)$$

Then, the shift register 3 is shifted.

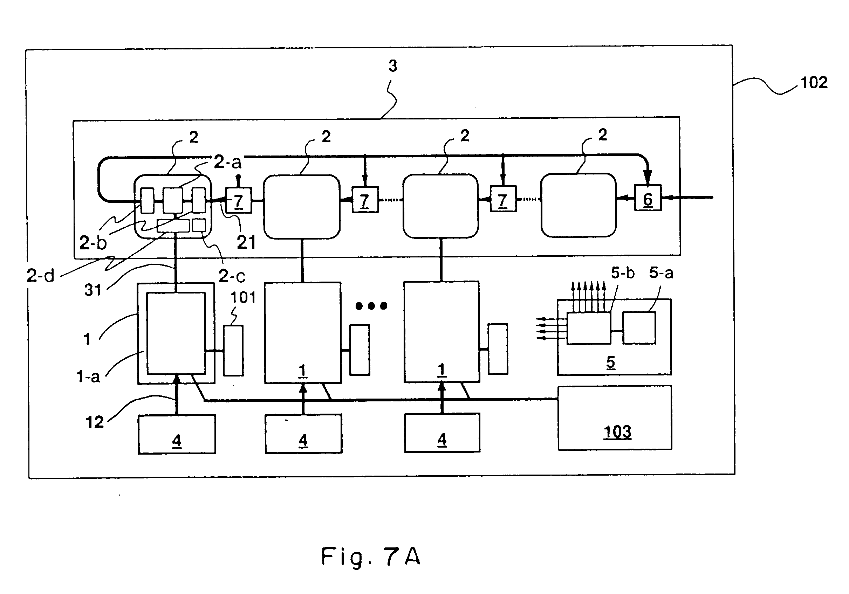

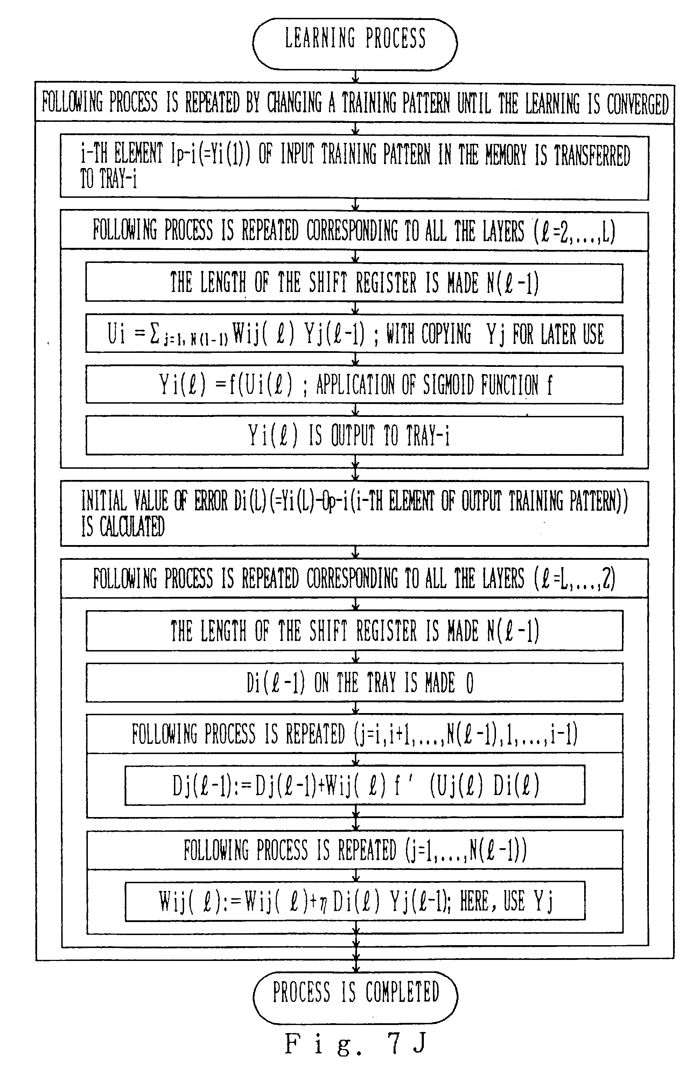

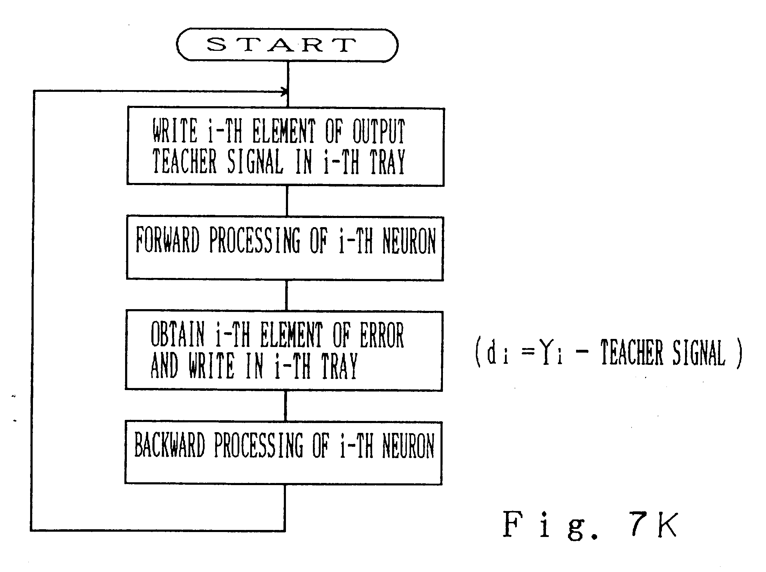

Figure 7A illustrates of a fourth embodiment of the present invention. The present embodiment is directed to a neuro-computer. In the figure, like reference characters are used to designate corresponding parts to those in Figure 6. 1a designates a processor of the data processing unit 1, which may be constructed from a digital signal processor. 2a designates a data storage circuit of the tray 2, which may be constructed from a latch circuit, 2b designates a data transfer circuit of the tray 2, which may be constructed from a bus driver, 2c designates control means of the tray 2, which may be constructed from logic circuits. 4 designates a storage device which forms a part of means for supplying data to the data processing unit 1 and a part of means for controlling the data processing unit 1 and may be constructed from a RAM (random access memory). 5 designates means for establishing synchronization between the data processing units 1 and the trays 2. 5a designates a clock generator which may be constructed from a crystal oscillator, and 5b designates a clock distributor which may be constructed from a buffer circuit. In addition, 101 designates a sigmoid function unit which calculates a monotone nondecreasing continuous function which is referred to as a sigmoid function and its differential coefficient, the function being approximated by a polynominal. 103 designates means for deciding the end of learning, which may be constructed from a host computer connected with the data processing units through communication means, means for informing an output error calculated by each processing unit 1 of the host computer and means for deciding the end of learning on the basis of a plurality of values of output errors to bring the neuro-computer to a stop. 102 designates the whole of the neuro-computer.

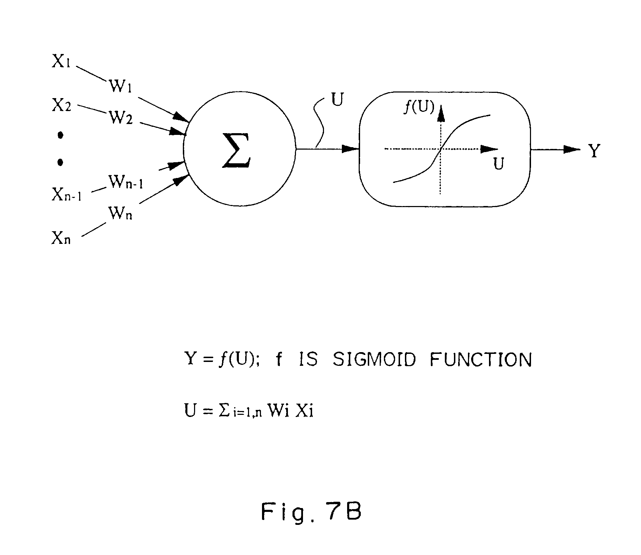

Figure 7B illustrates a neuron model which is a basic element of the neuro-computer of the present embodiment. The neuron model multiplies inputs $X_1$, $X_2$,..., $X_n$ by weights $W_1$, $W_2$,..., $W_n$ serving as synapses, respectively, and obtains the sum of the products which is used as an internal value U. A nonlinear function f is applied to the internal value U to provide an output Y. Such an S-shaped sigmoid function as illustrated is generally used herein for the nonlinear function f.

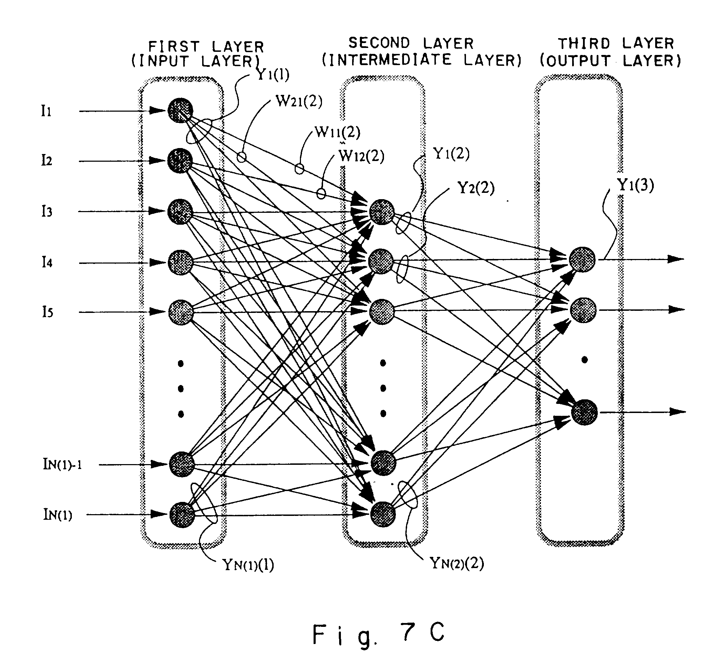

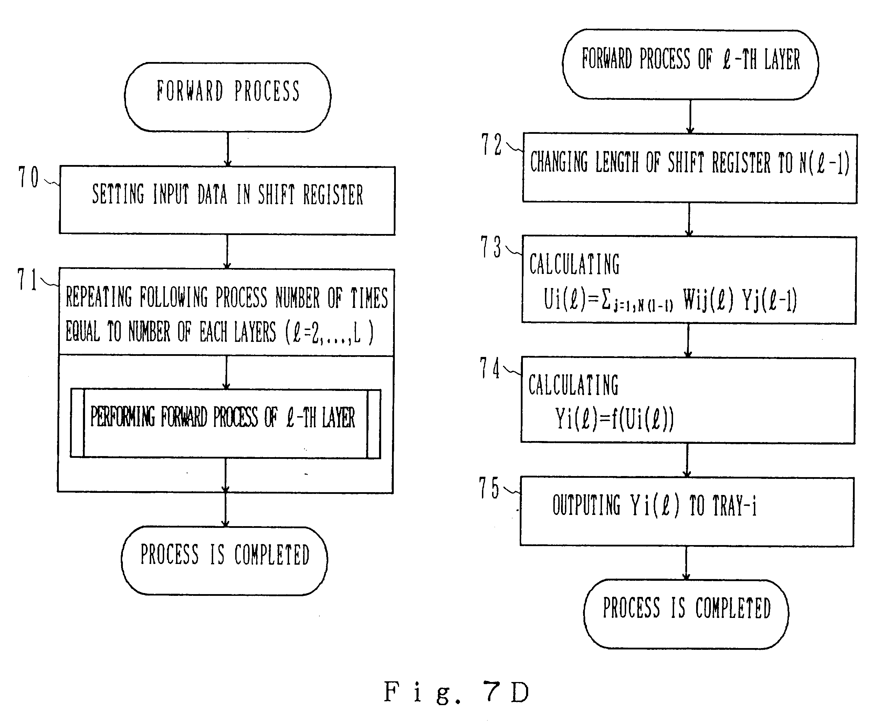

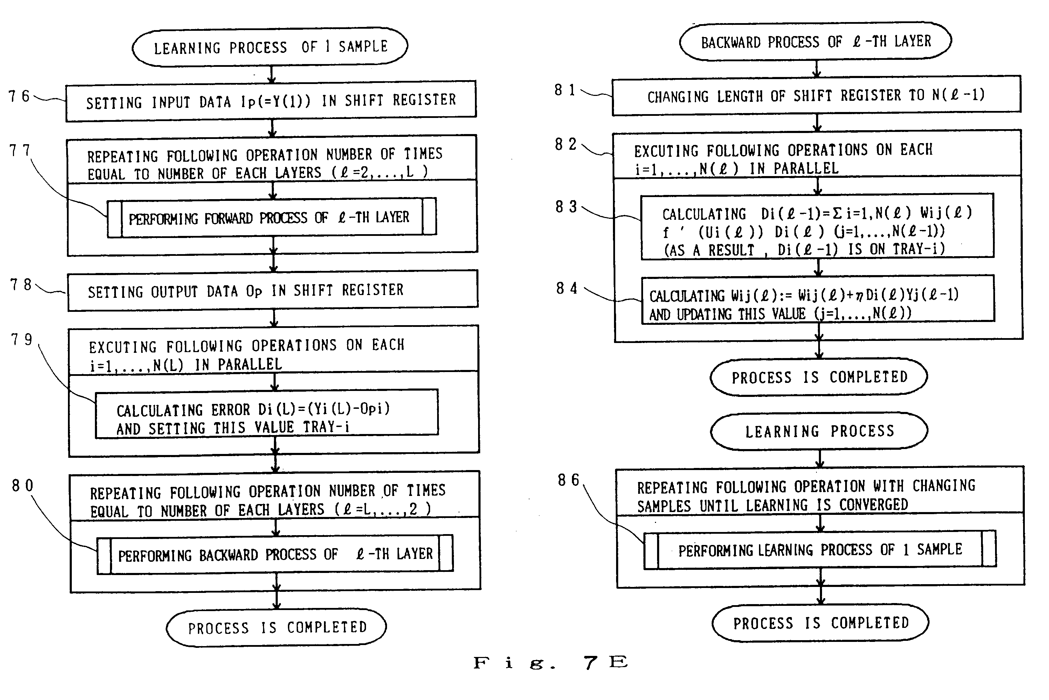

Figure 7C is a conceptual diagram of a hierarchical neural network constituting a neuro-computer of a three-layer structure comprised of an input layer, an intermediate layer and an output layer using a plurality of neuron models of Figure 7D. The input layer, which is the first layer, receives input signals $I_1$, $I_2$,.., $I_{N(1)}$. Each of units, i.e., neuron models, of the second (intermediate)layer is connected to all the neuron models in the first layer. The tie-branches therefor are synapses which are given respective weights $W_{ij}$. The third(output) layer also has each of its units or neuron models connected to all the neuron models of the intermediate layer. The outputs are drawn to the outside. In this neural network, an error between a teacher signal corresponding to input pattern signals applied to the input layer at the time of learning and an output signal from the output layer is obtained. The weights between the intermediate layer and the output layer and the weights between the first and second layers are determined so that the error may become very small. This algorithm is called the law of back propagation learning. When an associative process, such as pattern recognition, is performed by retaining weight values determined by the law of back propagation learning, if an imperfect pattern which is slightly different from a pattern to be recognized is applied to the inputs of the first layer, an output signal corresponding to the pattern is output from the output layer. The signal is very similar to a teacher signal corresponding to the pattern applied at the time of learning. If the difference between the output signal and the teacher signal is very small, the imperfect pattern will become recognized.

The operation of the neural network can be implemented with the neuro-computer 102 of Figure 7A on an engineering basis. Though such a three-layer network as shown in Figure 7C is used in the present embodiment, the number of layers has no essential influence on the operation of the present embodiment as will be described below. In the figure, N(1) stands for the number of neurons of the first layer. In general, the output each neuron of the first layer, or the input layer, is equal to its input. Thus, there is no need for substantial processing. The forward process in the normal process, that is, pattern recognition, is illustrated in Figure 7D.

Figure 7D is a flowchart of the forward process of the fourth embodiment. It is assumed in the forward process that the weight coefficients on the tie-branches between layers in the network of Figure 7C are determined. To implement the network of Figure 7C with the neuro-computer of Figure 7A, the following process is performed. The basic operation in the forward operation is to, in the neuron model of Figure 7B, multiply inputs by weights and apply a nonlinear function to the sum U of products. This operation is performed for each of the layers. First, in step 70, data from $I_1$ to $I_{N(1)}$ are set in the shift register. With the number of layers represented by L, the following processes are all repeated for each of the layers. If L is 3, for example, they are repeated three times. The forward process of one layer is repeated. Then, the process is terminated. The forward process for one layer is indicated below. In the case of the intermediate layer, $\ell = 2$. In step 72, the length of the shift register is changed to $N(\ell-1)$. That is, since $\ell = 2$, the length of the shift register is made N(1), i.e., the number of the neurons in the input layer. In step 73, the process of neuron models in the intermediate layer is performed. The index j is changed from 1 to the number of units N(1) of the input layer. $W_{ij}(\ell)$ represents a weight coefficient for coupling between the input layer and the intermediate layer. Namely, as the weight coefficient is for between the input layer and the intermediate layer $\ell = 2$. $Y_j (\ell-1)$ is an output from the j-th unit of the input layer. i stands for the i-th unit of the intermediate layer. The state Ui(2) of the i-th unit is calculated by multiplying the output $Y_j$ of the input layer, i.e., the j-th Y, by the weight $W_{ij}$ and obtaining the sum of the products. In step 74, the state $U_i(2)$ of the i-th unit of the intermediate layer is input to a nonlinear function, i.e., a sigmoid function to provide an output $Y_i$ (2). That is, though the calculation of inner product in step 73 is performed in the unit of Figure 7A, the calculation of the sigmoid function is performed by 101. In step 75, the output $Y_i(2)$ of the i-th unit of the intermediate layer is output to the i-th tray. Then, the process terminates. The above forward process is performed for each of the input layer, intermediate layer and output layer. The forward process for each layer terminates in this manner. The process required for simulation of an individual neuron is the calculation represented by the expression shown in Figure 7B and includes calculation of the inner product of weights and input vectors and a sigmoid function for the result of the inner product. The calculation of the function is implemented by the sigmoid function unit 101. Therefore, the process of a certain layer in the network is to perform, for each of the neurons in the layer as shown in Figure 7C, the calculation for an individual neuron. Thus, the calculation of the inner product involves determining the vector product of a matrix of coupling coefficient vectors $W(\ell) = [Wij(\ell)]$ and a vector of inputs to the layer $\underline{x}(\ell) = [Xj(\ell)]$,

$$\underline{U}(\ell) = [U1(\ell)] = \sum_{j=1}^{N(l)} Wij(\ell) Xj(\ell)$$

This is made possible by the method described in connection with the third embodiment of the present invention as this is a method of forming a matrix vector product. The calculation of the sigmoid function is performed by each sigmoid function unit 101 inputting each element $Ui(\ell)$ of the product vector and outputting a corresponding function value Yi $(\ell) = f(Ui(\ell))$. If there is a succeeding layer, i.e., the $(\ell + 1)$th layer, each of its function value outputs $Yi(\ell)$ is written into a respective tray. In the process of the $(\ell + 1)$th layer they are used as inputs to repeat the above process.

The learning operation, namely, the back propagation algorithm which is performed using a neuron computer shown in Figure 7A will be explained hereinafter.

Figure 7E is a flowchart of the learning process in the fourth embodiment. The learning in the neuro-computer serves to correct the weight of earh neuron until the network satisfies a desired input and output relationship. The method of learning is to prepare a plurality of pairs of an input signal vector and a teacher signal vector, namely, the number of the pairs corresponds to the number of teacher signals in a teacher signal set. Then, one pair is selected from among the pairs, its input signal $I_p$ is entered into the network as an object of learning and the output of the network for that input is compared with the correct output signal, that is, the teacher signal $O_p$ corresponding to the input signal. The difference is referred to as an error. The weights of the neurons are corrected on the basis of the error and the values of the input and output signals at that time. This process is repeated for each element of the set of teacher signals until the learning converges. That is, all of the input patterns are memorized as weight values in a distributed manner. In the process of correcting weights, which is called the backward process, the error obtained at the output layer is propagated toward the input layer in the direction opposite to the normal flow direction of signals while it is corrected. This is the algorithm of back propagation.

The error D is defined recursively as follows. $Di(\ell)$ is an error which is propagated backward from the i-th neuron in the $\ell$-th layer. L is the number of layers in the network.

$$Di(L) = f'(Ui(L))(Yi(L)$$

$$- Opi) \tag{1}$$

$$Di(\ell - 1) = f'(Ui(\ell - 1))$$

$$\Sigma_{j=1,N(\ell)} Wji(\ell)Dj(\ell) \tag{2}$$

$(\ell = 2, \cdots, L)$     (2)
$(i = 1, \cdots, N(\ell))$

where f'(U) is the value of the differential coefficient f'(X) of a sigmoid function f(X) when X = U. If, for example,

$$f(X) = \tanh X \tag{3}$$

since

$$f'(X) = d(\tanh X) / dX = 1 - \tanh^2 X$$

$$= 1 - f^2(X) \tag{4}$$

we have

$$f'(Ui) = 1 - f^2(Ui) = \ell - Yi^2 \tag{5}$$

On the basis of the Di and Yi the weight is updated as follows. Here $\eta$ stands for the size of steps at which the weight is updated. If it is too small, the convergence of the learning becomes slow, while, if it is too large, no convergence is possible.

$$Wij(\ell)^{(t+1)} = Wij(\ell)^{(t)} + \Delta W i j(\ell)^{(t)} \tag{6}$$

$$\Delta Wij(\ell)^{(t)} = \eta Di(\ell)Yj$$

$$(\ell - 1) (\ell = 2, \cdots, L) \tag{7}$$

However, the following expression is frequently used. This is obtained by passing $\Delta Wij(\ell)^{(t)}$ in the above expression through a first-order digital lowpass filter, and $\alpha$ is a parameter which defines the time constant of the filter.

$$\Delta Wij(\ell)^{(t+1)} = \eta Di(\ell) Y j$$

$$(\ell - 1) + \alpha \Delta Wij(\ell)^{(t)} \tag{8}$$

The calculation needed in the backward process includes inter-vector calculation and calculation of a matrix and a vector. Particularly, the central calculation is multiplication of the transposed matrix $\underline{\mathbf{W}}^T$ of a matrix $\underline{\mathbf{W}}$ whose elements are weights of neurons in each layer and the above error vector $Dj(\ell)$. In the general case where there are a plurality of neurons in a layer, the error is represented by a vector.

The left flowchart of Figure 7E will be described.

The forward process and backward process for one layer are performed. First, input data $I_p$ is set in the shift register to perform the forward process for one layer. Since this is performed in each layer, the forward process is repeated a number of times equal to the number of layers. Then, output data $O_p$ is output to be set in the shift register. The steps following step 79 are carried out in parallel for each of the units in the output layer. That is, error $D_i(L) = Y_i(L) - O_p(i)$ is calculated and set in the i-th tray. Subsequently, the backward process is carried out for each of the layers from the output layer to the input layer in step 80. This backward process is indicated on the top right-hand side of Figure 7E. As for the $\ell$-th layer, since the number of the neurons in the previous layer is $N(\ell-1)$, the shift register length is set to $N(\ell-1)$ in step 81. Subsequently, the following steps are carried out in parallel for each of the units in the present layer as indicated by step 82. That is, the above expression (2) is carried out in step 83.

It is to be noted here that the weight is $W_{ij}(1)$, this is an element of the transposed matrix $\underline{\mathbf{W}}^T$ of the weight matrix, the sum is obtained with regard to i and the multiplication is performed regarding Wij. Then, in step 84, the expressions (6), (7) or (8) are calculated to update the weight.

The error $Di(\ell-1)$ obtained in step 83 is output to i-th tray. In order to perform the next error calculation, the operation of step 83 is necessary.

At the bottom of the right-hand side of Figure 7E is illustrated a flowchart which shows that the flowchart on the left-hand side of Figure 7E, i.e. the continuous execution of the forward process and the backward process, is repeated, the samples being changed as shown in step 86, until the learning converges.

Such a process includes processes of updating weights and smoothing correction amounts of the weights to stabilize the learning. These processes consist of multiplication of a matrix by a scalar and addition and subtraction of matrices and can-be performed by the present neuro-computer. The sigmoid function unit 101 may be implemented with software in place of hardware. The means 103 for bringing about termination of the learning may be implemented with software on the host computer.

An operation of updating the weight of a backpropagation can be performed by hardware and, particularly when it is performed by a DSP, software for updating the weight is stored in a memory and an operation of updating the weight is controlled by the DSP by using the software.

One example of a calculation of updating the weight is as follows.

$\underline{\mathbf{W}} = \underline{\mathbf{W}} + \eta\ \underline{\mathbf{D}}\underline{\mathbf{Y}}^T$ or $W_{ij}=W_{ij}+ \eta Di\ Yj$, where $\underline{\mathbf{W}}$ is a weight matrix, $\underline{\mathbf{D}}$ is an error vector, $\underline{\mathbf{Y}}$ is an output vector and $\eta$ is a learning coefficient which can be selected to be as large as possible within the range in which a conversion is possible. When the above expression is considered regarding the DHP, the partial vector Wi* of the weight matrix W is expressed as follows.

$$Z_j=Z_j+\eta DY_j\ (j=1 - n(\ell))$$

where $\ell$ represents the number of neurons in the $\ell$-th layer. The loop expressed by Zj is obtained.

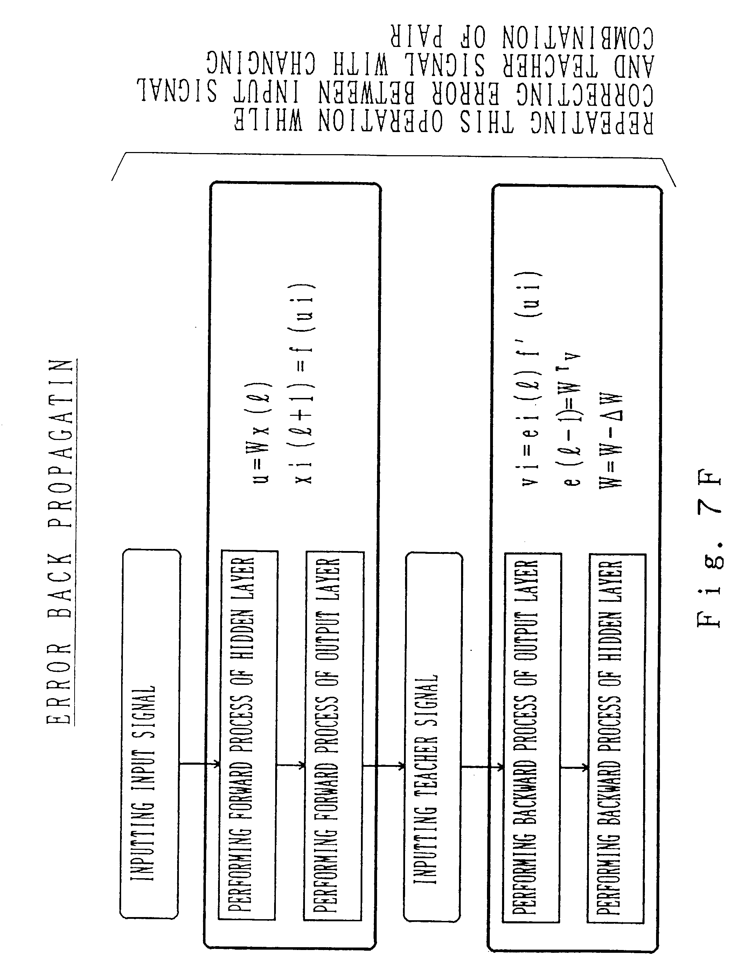

The neuro-computer is further described with reference to Figure 7F. Figure 7F is a flowchart of a process of learning error back propagation. The vector representation is used herein. In the figure, $\underline{\mathbf{x}}(\ell)$ is a neuron vector of the $\ell$-th layer, and W is a coupling coefficient, i.e., a weight matrix. f is a sigmoid function, $\underline{\mathbf{e}}(\ell)$ is an error vector propagated backward from the output side of the $\ell$-tb layer, and $\Delta\underline{\mathbf{W}}$ is an amount of correction of weight. Supposing that there is no input layer in the case of three layers, the forward process of a hidden layer is performed when an input signal is applied. This is represented by $\underline{\mathbf{u}} = \underline{\mathbf{W}}\underline{\mathbf{x}}(\ell)$. If a nonlinear function is applied to u, an input is provided for the next layer, i.e., $(\ell+1)$th layer. Since this is the input to the output layer, the forward process of the output layer is performed. Subsequently, a teacher signal is input for the backward process. In the output layer, an error e,between a teacher signal and an output signal, is multiplied by the differential function f' of f for the backward process. An error of the intermediate layer is obtained by multiplying a variable, which is obtained by multiplying a back propagated error signal by the differential function, by the transposed matrix $\underline{\mathbf{W}}^T$ of the weight matrix. A value obtained by multiplying each element of the error vector by differentiation of the sigmoid is multiplied by an element of the previous $\underline{\mathbf{W}}^T$ to obtain $\Delta\underline{\mathbf{W}}$ so $\underline{\mathbf{W}}$ is updated. In this way the backward process of the output layer and the backward process of the hidden layer are performed. The calculation performed in the forward process is the multiplication of the weight matrix $\underline{\mathbf{W}}$ and the input vector $\underline{\mathbf{x}}$ and consequently the calculation of a value of the sigmoid function of each element of the vector. This calculation can be performed at each neuron in parallel. The backward process is classified into two main jobs: propagation of an error between a teacher signal and an output signal in the opposite direction while correcting the error; and correction of weights on the basis of the error. The backward calculation requires multiplication by the transposed matrix $\underline{\mathbf{W}}^T$ of the weight matrix $\underline{\mathbf{W}}$. The product of the transposed matrix $\underline{\mathbf{W}}^T$ and the vector has been described in connection with the previous embodiment. That is, an important point in realizing the learning of back propagation is a method of efficiently realizing multiplication of the transposed matrix $\underline{\mathbf{W}}^T$ of a weight matrix and a vector.

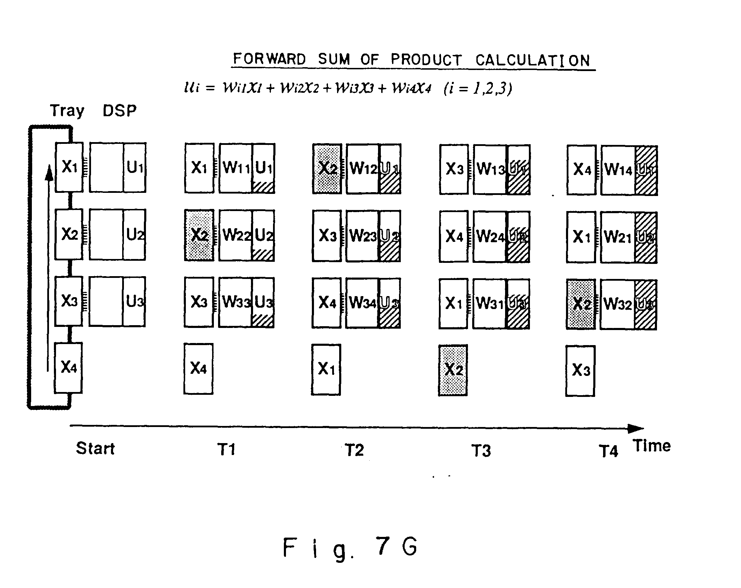

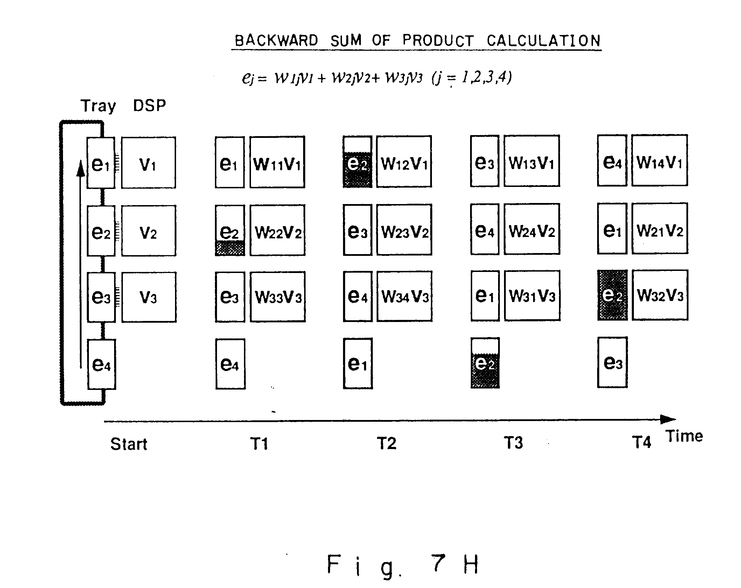

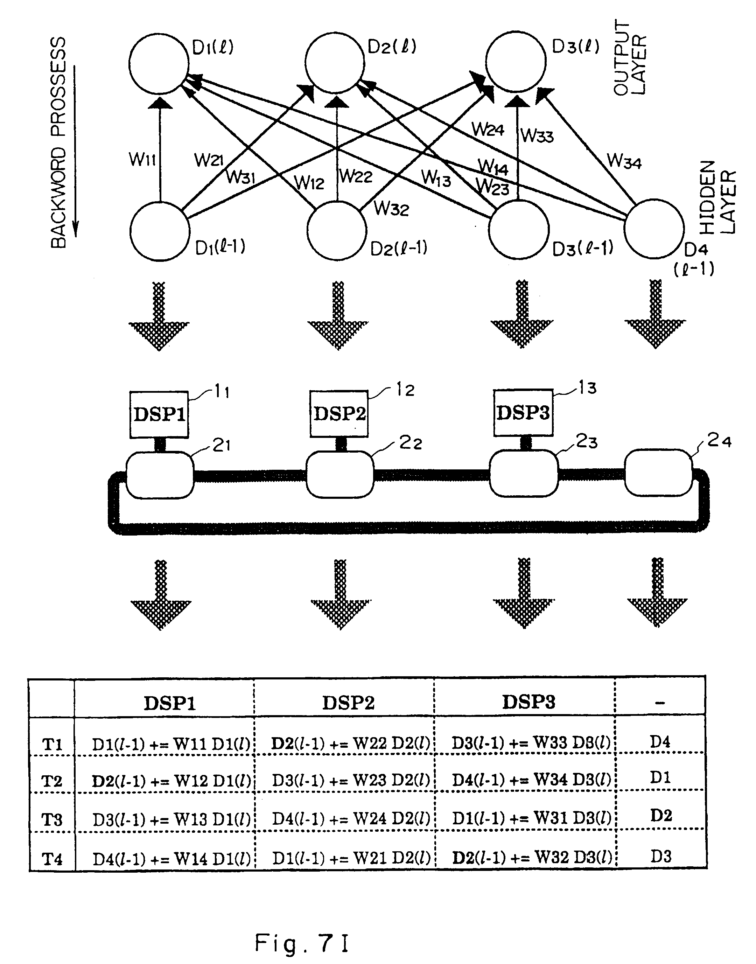

Next, the forward sum-of-products calculation and the backward sum-of-products calculation will be described with reference to Figures 7G and 7H. The forward sum-of-products calculationis a calculation of the product of a matrix and a vector, and the matrix comprises a weight matrix. The matrix vector product $\underline{\mathbf{u}}=\underline{\mathbf{W}}\underline{\mathbf{x}}$ is calculated by forming the product of rows of a weight matrix and a vector $\underline{\mathbf{x}}$ concurrently in accordance with the following expression.

$$\begin{Bmatrix} u_1 \\ u_2 \\ u_3 \end{Bmatrix} = \begin{Bmatrix} W_{11} & W_{12} & W_{13} & W_{14} \\ W_{21} & W_{22} & W_{23} & W_{24} \\ W_{31} & W_{32} & W_{33} & W_{34} \end{Bmatrix} \begin{Bmatrix} X_1 \\ X_2 \\ X_3 \\ X_4 \end{Bmatrix}$$

$$\cdots (9)$$

This process is explained with reference to Figure 7G. The weight matrix $\underline{\mathbf{W}}$ is a rectangular matrix, e.g., a 3 by 4 matrix. The elements of the vector $\underline{\mathbf{x}}$ are input to the trays. At time $T_1$ the products of $X_1$ and $W_{11}$ $X_2$ and $W_{22}$, $X_3$ and $W_{33}$ are calculated in the respective units. At time $T_2$ each element of the vector $\underline{\mathbf{x}}$ is shifted cyclically. At time $T_2$ the product of $W_{12}$ and $X_2$ is added to $U_1$. Thus, at time $T_2$, $U_1 = X_1 \times W_{11} + X_2 \times W_{12}$. Also, $W_{23}$ and $X_3$ are multiplied in the second unit and $W_{34}$ and $X_4$ are multiplied in the third unit. At $T_3$, $W_{13}$ and $X_3$ are multiplied and the resultant product is added to $U_1$. $W_{24}$ and $X_4$ are multiplied and the product is added to $U_2$. $W_{31}$ and $X_1$ are multiplied and the product is added to $U_3$. At this time $X_2$ is not one of the objects used in the calculation. At $T_4$, $W_{14}$ and $X_4$, $W_{21}$ and $X_1$, $W_{32}$ and $X_2$ are multiplied simultaneously and the resultant products are added to $U_1$, $U_2$ and $U_3$, respectively. In this case, $X_3$ is not one of the objects used in the calculation. The multiplication of a rectangular matrix and a vector can thus be effected, taking into account the fact that the vector elements $X_1$-$X_4$ are not always available for use as objects of calculation.

In the local memory of each unit (processor element) PE-$_i$, the partial vector Wi* of W is stored with the elements in a skewed order that initially has $W_{ii}$ at the head. $X_i$ circulates through the tray ring counterclockwise. $U_i$ is accumulated in a register of PE-$_i$.

A start is made from the state $U_i = 0$. PE-$_i$ multiplies $X_j$ and $W_{ij}$ and then adds the result to $U_i$. At the same time $X_j$ is shifted to the next tray (circulates through the ring counterclockwise). When this is repeated four times, all the $U_i$ are obtained simultaneously.

$W_{ii}$ is skewed, the process starts when all $X_i$ are provided in trays and all $U_i$ are obtained concurrently.

Figure 7H is a diagram illustrating the backward sum-of-products calculation. This is a timing diagram of operations performed when the product **e** of a transposed matrix **W**$^T$ and a row vector **v**, **e** = **W**$^T$**v**, is calculated. In this case, the vector **v** comprises elements obtained by multiplying the error vector of the previous layer by the differential function of a nonlinear function. **e** is an error vector for back propagation in the next layer to be obtained. It is important in the present embodiment that, even if the transposed matrix **W**$^T$ is used for calculation, its arrangement in the memory may be the same as the arrangement of **W** utilized in the forward sum-of-products calculation.

That is, in the present embodiment, the vector **e** to be obtained is shifted cyclically. The transposed matrix **W**$^T$ and vector **v** are expressed as follows.

$$\begin{Bmatrix} e_1 \\ e_2 \\ e_3 \\ e_4 \end{Bmatrix} = \begin{Bmatrix} W_{11} & W_{21} & W_{31} \\ W_{12} & W_{22} & W_{32} \\ W_{13} & W_{23} & W_{33} \\ W_{14} & W_{24} & W_{34} \end{Bmatrix} \begin{Bmatrix} v_1 \\ v_2 \\ v_3 \end{Bmatrix} \quad \cdot \cdot \cdot (10)$$

As can be seen from the above expression, the matrix **W** is transposed and moreover is a rectangular matrix. $e_1$ equals $W_{11}$ x $v_1 + W_{21}$ x $v_2 + W_{31}$ x $v_3$. To perform this calculation, the product of $W_{11}$ and $v_1$ is obtained in the first unit (DSP) in the time slot $T_1$ as shown in Fig. 7H. This is added to $e_1$ which is initially zero. Then a cyclic shift is performed. At time $T_2$, $e_1$ is not one of the objects used in the calculation. At time $T_3$, $e_1$ becomes an object of (input for) the calculation in the third unit. That is, $W_{31}$ x $v_3$ is added to the previous value, namely, $W_{11}$ x $v_1$. Thus, $e_1$ becomes $W_{11}$ x $v_1 + W_{31}$ x $v_3$ in the time slot $T_3$. At time $T_4$, $e_1$ is shifted cyclically and enters the second unit for calculation. $W_{21}$ x $v_2$ is added to $e_1$ so that the inner product of the first row of the matrix and the vector v is calculated and its result is stored as $e_1$.

Similarly, the product $e_2$ of the second of transposed matrix **W**$^T$ row and the vector is obtained as the sum of products, i.e., the sum of $W_{22}$ x $v_2$ (at time $T_1$), $W_{12}$ x $v_1$ (at time $T_2$) and $W_{32}$ x $v_3$ (at time $T_4$). $e_2$ is idle (not used) at time $T_3$. The product $e_3$ of the third row of **W**$^T$ and the vector **v** is obtained as the sum of products, i.e. the sum of $W_{33}$ x $V_3$ (at time $T_1$), $W_{23}$ x $V_2$ (at time $T_2$) and $W_{13}$ x $V_1$ (at time $T_3$). $e_3$ is idle (not used) in time slot $T_4$. The product $e_4$ of the fourth row of **W**$^T$ and the vector **v** is obtained as the sum of $W_{34}$ x $v_3$ (at time $T_2$), $W_{24}$ x $v_2$ (at time $T_3$) and $W_{14}$ x $v_1$ (at time $T_4$). $e_4$ is idle (not used) in time $T_1$. In the present embodiment, the i-th row Wi* of vector **W** is stored in a local memory in PE-$_i$ skewed so that the diagonal element Wii may stay at the head as before. In this case, $e_i$ and $V_i$ are interchanged with one another. Namely, partial sum of products $e_i$ is accumulated while circulating through the trays counterclockwise, while $V_i$ are always stays in PE-$_i$. In the "forward" calculation, involving the matrix, $V_i$ is shifted but in the "backward" calculation, involving the transposed matrix, $e_i$ is shifted.

A start is made from $e_j = 0$. PE-$_i$ multiplies Vi and Wij and adds the result to $e_j$. At the same time the updated $e_j$ is transferred to the next tray (circulates through the ring counterclockwise). When this is repeated four times, all the $e_j$ are obtained simultaneously.

As described above, a neuro-computer embodying the present invention can be realized with any number of layers and not only has flexibility (the degree of freedom of learning algorithms is high) but also can make effective use of the speed of DSP. Moreover, there is no overhead in calculation by the DSP and the SIMD can be carried out by the DSP.

Figure 7I modifies Figure 7H so that the symbols used in Figure 7I correspond to those in Figure 7E to explain the backward process.

If an input conversion value of an error of the output layer is designated as $D_1(\ell)$, $D_2(\ell)$, $D_3(\ell)$, an error in the output of the hidden layer is expressed as $D_1(\ell-1)$, $D_2(\ell-1)$, $D_3(\ell-1)$ and $D_4(\ell-1)$ and weights as $W_{11}$, $W_{21}$, $W_{31}$; $W_{12}$, $W_{22}$, $W_{32}$; $W_{13}$, $W_{23}$, $W_{33}$; and $W_{14}$, $W_{24}$, $W_{34}$, the following transposed matrix vector products are established.

$$
\begin{vmatrix} D_1(\ell-1) \\ D_2(\ell-1) \\ D_3(\ell-1) \\ D_4(\ell-1) \end{vmatrix} = \begin{pmatrix} W_{11} & W_{21} & W_{31} \\ W_{12} & W_{22} & W_{32} \\ W_{13} & W_{23} & W_{33} \\ W_{14} & W_{24} & W_{34} \end{pmatrix} \begin{vmatrix} D_1(\ell) \\ D_2(\ell) \\ D_3(\ell) \end{vmatrix}
$$

In a first operation, unit $1_1$ (DSPI) sequentially obtains products of an input conversion value of an error of an output layer $D_1(\ell)$ stored in a register in the DSP1 and the first row $W_{11}$, $W_{12}$, $W_{13}$ and $W_{14}$ of the weight matrix stored in a memory, and the product is added to tray $2_1$ and then shifted in a counterclockwise direction at time $T_1$, $T_2$, $T_3$ and $T_4$. As to the error, $D_2(\ell-1)$, of the second neuron in the hidden layer the product $W_{22} D_2(\ell)$ is provided by DSP2 at time $T_1$ and the product is added to the tray and shifted. The product $W_{12} D_1(\ell)$ is provided by DSP1 at time $T_2$ and the product is added to a tray and the sum of the products $W_{22} D_2(\ell) + W_{12} D_1(\ell)$ is shifted. At time $T_3$, D2$(\ell-1)$ is in the tray 24 which has no corresponding DSP and thus, an operation on D2 $(\ell-1)$ is not performed. At time $T_4$, in the case of the error $D_2(\ell-1)$, the product $W_{32} D3(\ell)$ is calculated by DSP3. And the product Is added to the tray $2_3$, and thereby the sum of the product $W_{22} D_2(\ell) + W_{12} D_1(\ell) + W_{32} D_3(\ell)$ is provided. The sum of the product corresponds to an operation for the second row of the above transposed matrix vector product. Namely, the forward process calculates one row by using one DSP but the backward process calculates one row by using DSP1, 2 and 3. According to the system of the present embodiment, instead of transposing a weight matrix stored in a memory, an element of the weight matrix and an element of output layer error vector are multiplied together to provide a product which is added to a tray and shifted, thereby enabling calculation of a product of the transposed weight matrix and an error vector. Therefore, according to the present embodiment, in a neuron computation, a back propagation of an error can be obtained and in a normal matrix operation, a product of a transposed matrix and vector can be obtained.

Figure 7J shows a flowchart of i-th DSP. After a learning process starts the following process is repeated by changing a training pattern until the learning converges.

An i-th element Ip-i $(=Yi(1)))$ of input training pattern in the memory is transferred to a tray i.

Then the following process is repeated according to the number of layers $(\ell=2, ..., L)$.

Then the length of the shift register is made equal to $N(\ell-1)$.

$Ui(\ell) = \Sigma Wij(\ell) Yj(\ell-1)$, where $j = 1$ to $N(\ell-1)$, is calculated with Yj being copied for later use.

$Yi(\ell)=f(Ui(\ell))$ is calculated to apply a sigmoid function f.

The $Yi(\ell)$ is output to a tray i.

Next, an initial value of an error Di(i) $(=Yi(L)-Op-i$(i-th element of output training pattern)) is calculated.

The following process is repeated for all the layers $(\ell=L, ..., 2)$.

When the length of the shift register is set to $N(\ell-1)$.

The Di(I-1) on the tray i is set to 0.

Then following equation is repeated. $(j=i, i+1, ..., N(\ell-1), 1, ..., i-1)$

$$Dj(\ell-1):=Dj(\ell-1)+Wij(\ell)f'(Uj(\ell))Di(\ell)$$

Then the following process is repeated $(j=1, ..., W(\ell-1))$ . $Wij(\ell): = Wij(\ell) + \eta Di(\ell) Yj(\ell-1)$;

Figure 7K shows the control of the DSP in a simpler form. The i-th element of the input teacher signal is written to the i-th tray. Then, the i-th neuron is subjected to a forward process. This step is repeated for layers 2 to L. Then, the i-th element of the error is written in the i-th tray. Therefore, di=Yi-teacher signal i. The i-th neuron is subjected to a backward process. This step 114 is repeated for layers L to 2. Then the process is returned to "START".

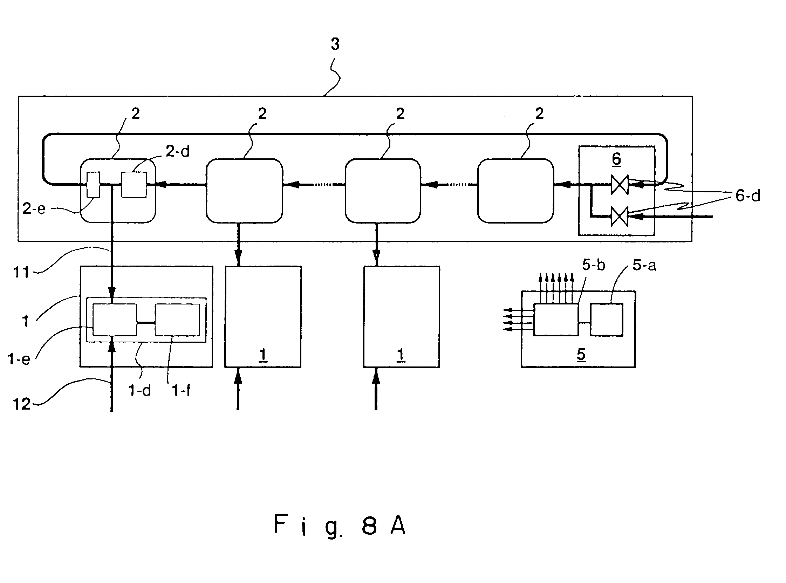

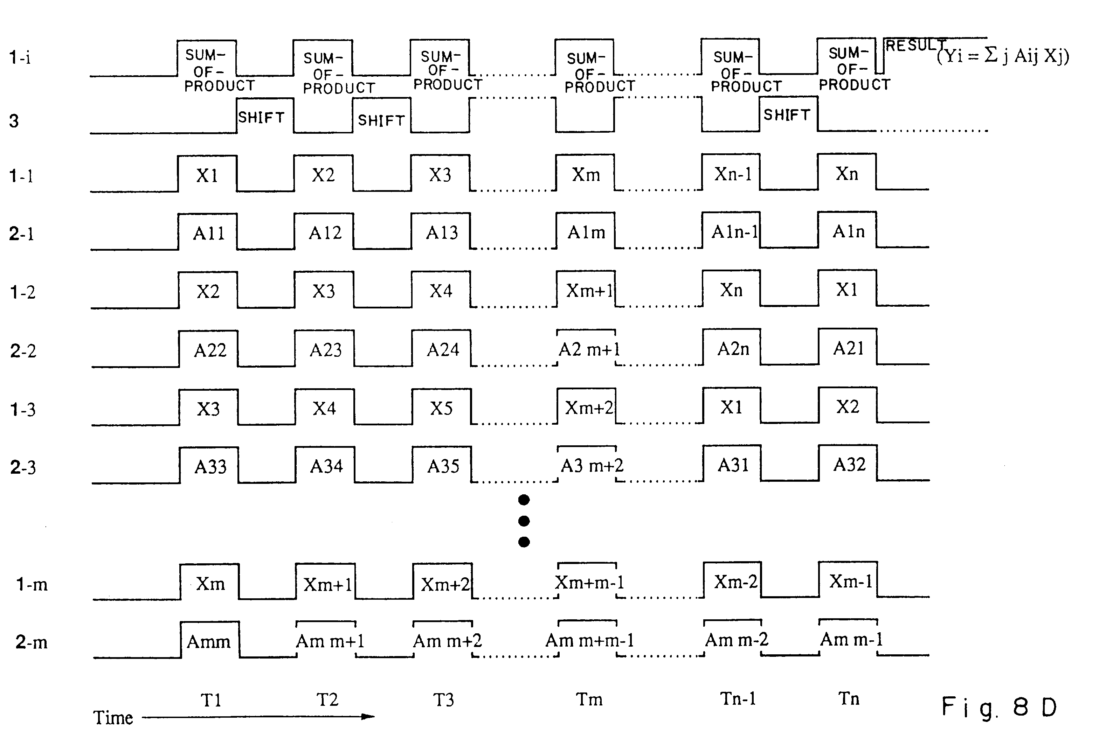

Figure 8A illustrates a fifth embodiment of the present invention. This embodiment obtains the product of matrices using analog data. In the figure, like reference characters are used to designate corresponding parts to those in Figure 4A. 1d designates a processor of the data processing unit 1, which may be composed of an analog multiplier le and an integrator 1f. 2d designates a data storage circuit of the tray 2, which may be constructed from a sample-hold circuit. 2e designates a data transfer circuit of the tray 2, which may be comprised of an analog switch and a buffer amplifier 6 designates means for setting data in the tray 2, which may be constructed from analog switches 6d.

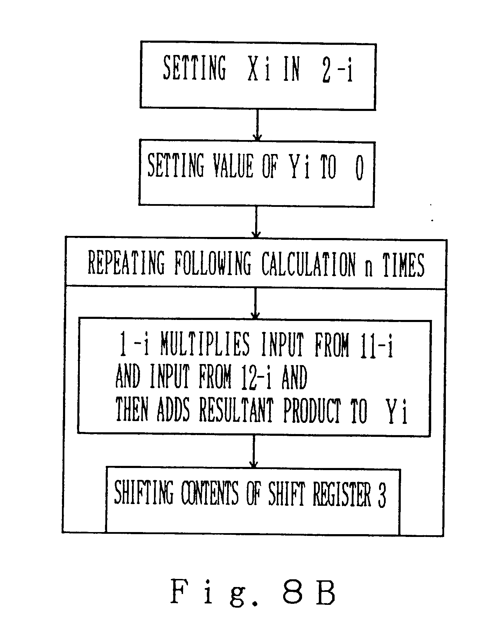

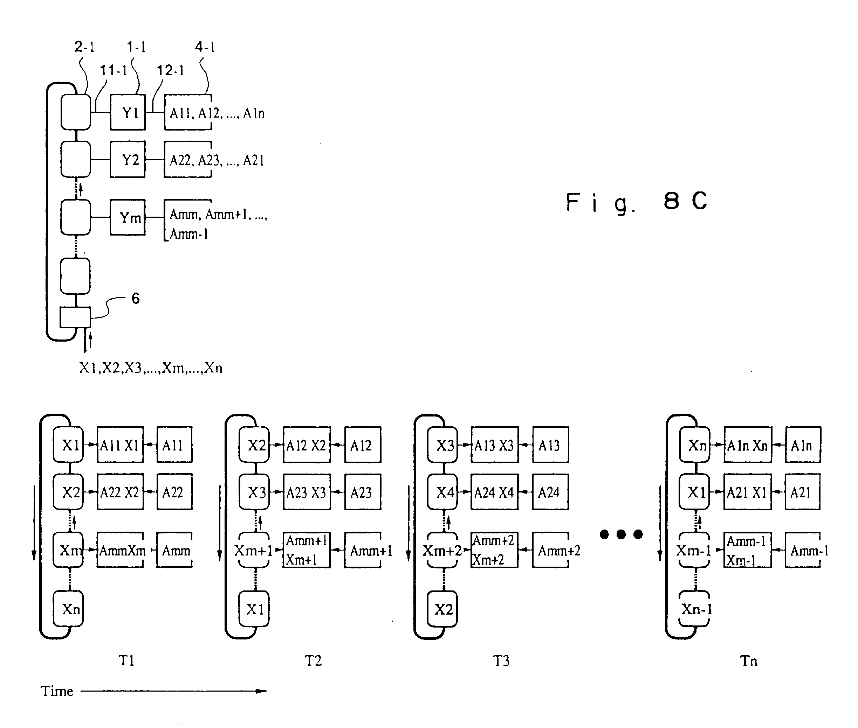

The operation of the present embodiment is the same as described before with reference to Figure 3A, as indicated in Figures 8B to 8D.

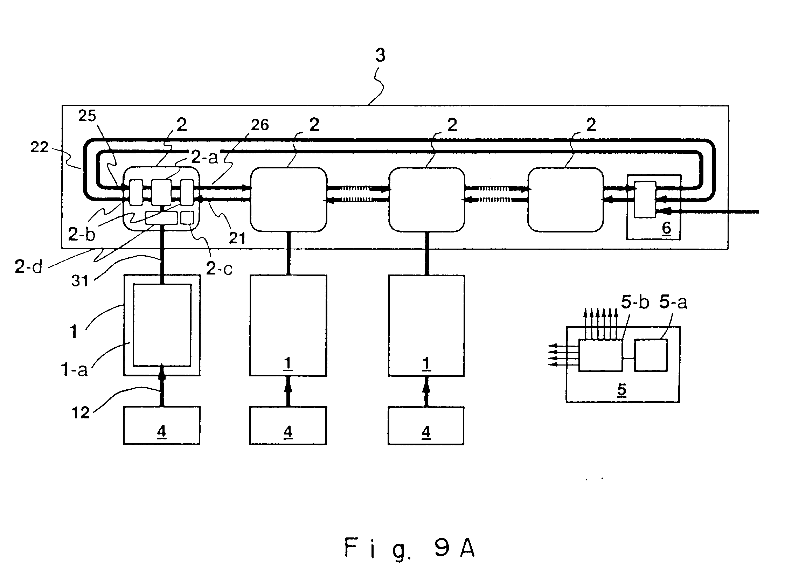

Figure 9A illustrates a sixth embodiment of the present invention which multiplies a band matrix and a vector. In the figure, like reference characters are used to designate corresponding parts to those in Figure 4A.

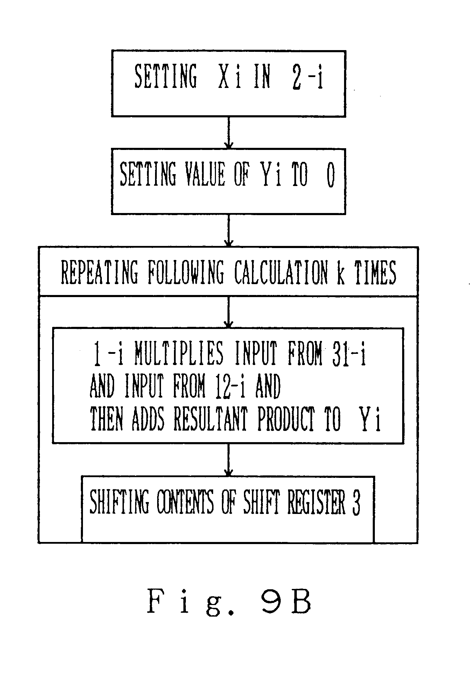

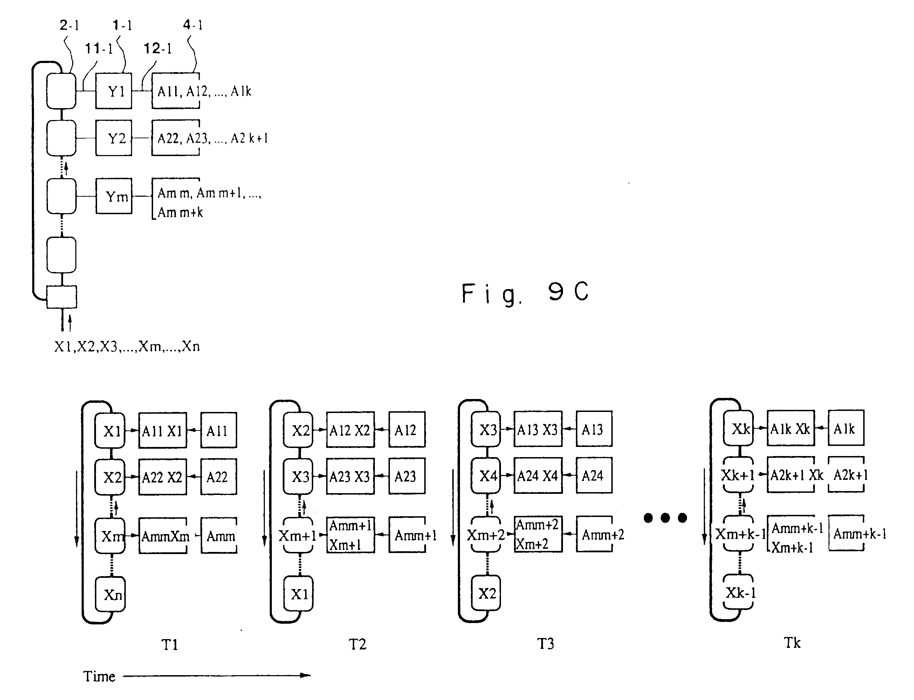

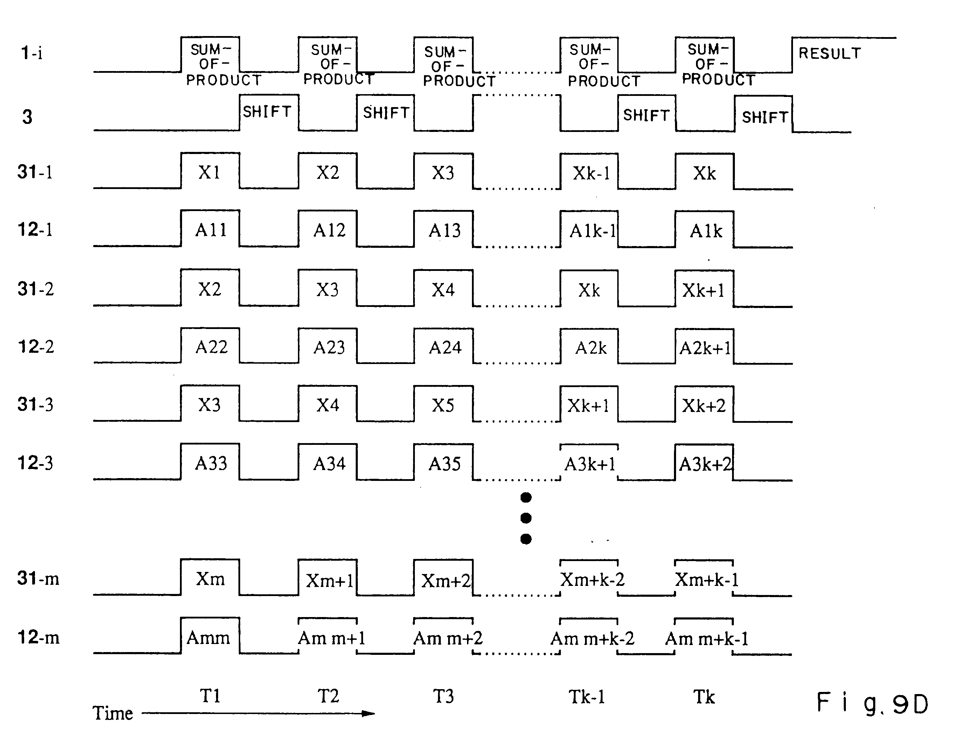

The operation of the present embodiment will be described with reference to Figure 9B. In order to obtain the product (a vector $\underline{y}$ with m elements) of an m x n (n≧ m ≧1) band matrix $\underline{A}$ with a width of k and a vector $\underline{x}$ with n elements, the present embodiment uses m data processing units 1 each having two inputs and functions of multiplication and accumulation of the result of multiplication, n trays 2 and input data supply means connected to the data processing units. In this case, the calculation is performed in accordance with the procedure shown in Figure 9B and timing steps shown in Figures 9C and 9D. Thus, the multiplication of the band matrix with a width of k and the vector can be carried out in a process time proportional to k.

Significant points regarding the present embodiment are that it does not cause the vector $\underline{x}$ to make a full circulation and that, unlike the first and subsequent embodiments, it shifts the vector just to the position in which the band starts when setting the vector $\underline{x}$ in the shift register 3. That is, where a process is started from the position in which the band starts, if the calculation of the sum of products is performed while shifting the vector in one direction, the process will be terminated in a time proportional to k. However, where the process is initiated from the middle of the band due to some circumstances though not shown, it is evident that the vector $\underline{x}$ has only to be shifted to an end initially. In this case, it is significant that the shift register 3 can be shifted in two directions.

Where the process is started from the center of the band, the vector is initially shifted right by k/2 (neglecting fractions) and subsequently the calculation of the sum of products is performed while the vector is shifted in the opposite direction (left in this case) so that the process is terminated in a time proportional to 3/2 k.

If the shift register 3 is not bi-directional, the vector $\underline{x}$ has to be circulated bv one rotation through the register. Thus, a time proportional to not to the width k of the band matrix but to the full number of columns n is needed. With a large scale band matrix, the difference is very great. It is an advantage of the present embodiment that the multiplication of a band matrix and a vector can be carried out in a time proportional to the width k of the band matrix.

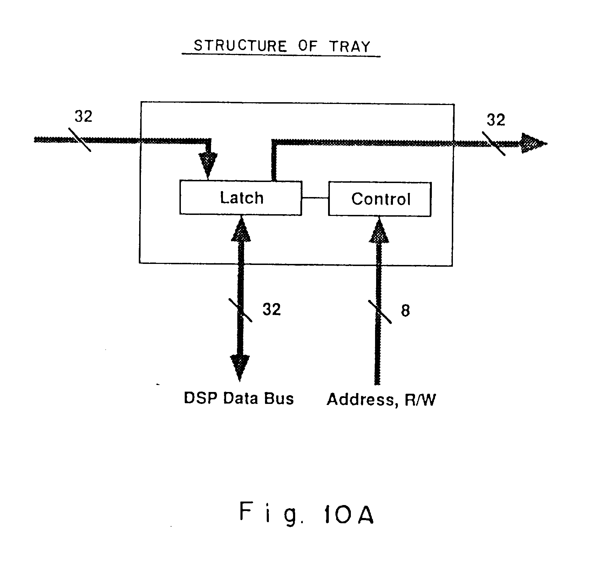

Figure 10A illustrates a possible structure of a tray for use in an embodiment of the present invention.

The tray is basically a one-word latch. Access to the tray from a DSP and data transfer from the tray to the next tray in the ring can be carried out in one cycle (post shift).

Switching between functions is made by lower bits of an address line simultaneously with data access, improving the speed of operation.

One tray may be constituted by a gate array of a scale of about 1200 basic cells. Two, three or four trays can be packaged in one chip.

Also, the tray can incorporate work registers for several words.

A tray circuit 2 is shown in Figure 10B. It comprises a bus interface circuit comprising a tri-state buffer 31, a buffer 32, a multiplexer 33, and a D-type flip-flop 34; a first interface circuit comprising a tri-state buffer 35 and a buffer 36; and a second interface circuit comprising a tri-state buffer 37 and a buffer 38. The output of tri-state buffer 31 is connected to data processing unit 1 and the input of buffer 32 is also connected to the data processing unit 1. The output of tri-state buffer 35 and the input of buffer 36 are connected to an adjacent tray on the right side. The output of buffer 37 is connected to an adjacent tray on the left side and the input of buffer 38 is connected to the adjacent tray on the left side. The outputs of buffers 32, 36 and 38 are selected by multiplexer 33 to provide an input to D flip-flop 34. The output of D flip-flop 34 is connected to the respective inputs of tri-state buffers 31, 35 and 37. The data from the adjacent tray on the left side is input to D flip-flop 34 through buffer 38, and can be output to the adjacent tray on the right side and/or applied to the data processing unit through tri-state buffer 31. The data from the adjacent tray on the right side is input to the D flop-flop 34 through buffer 36, and can be output to the adjacent tray on the left side through tri-state buffer 37 and/or applied to the data processing unit 1 through tri-state buffer 31.

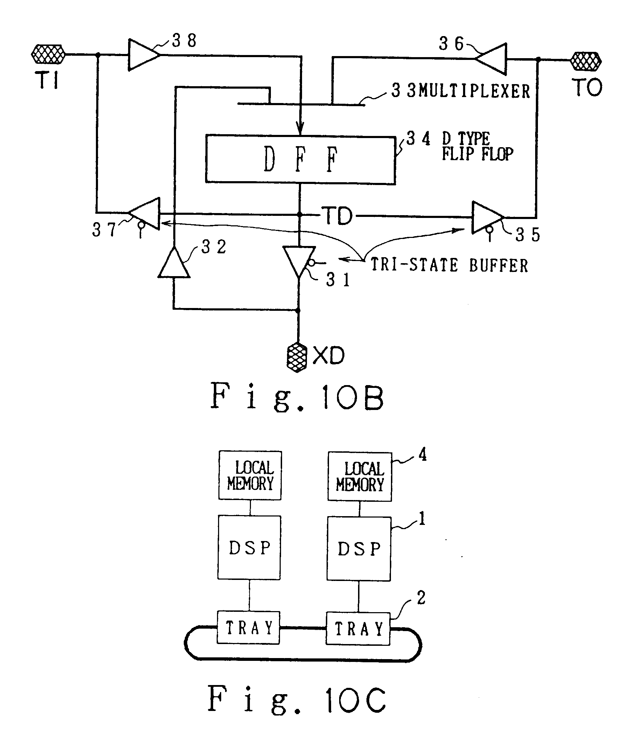

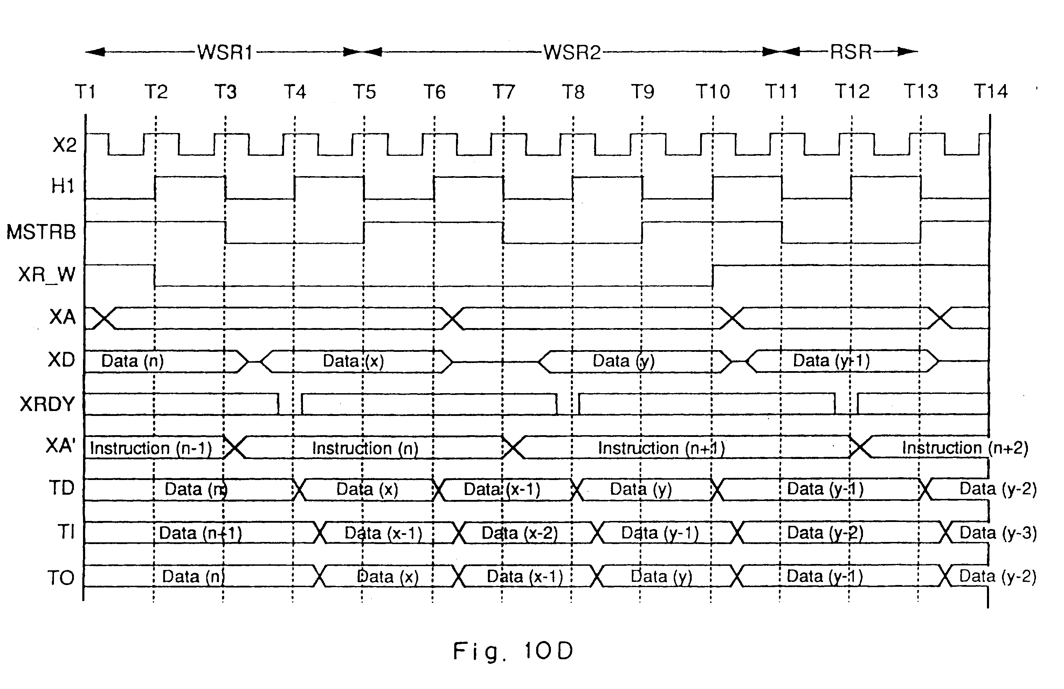

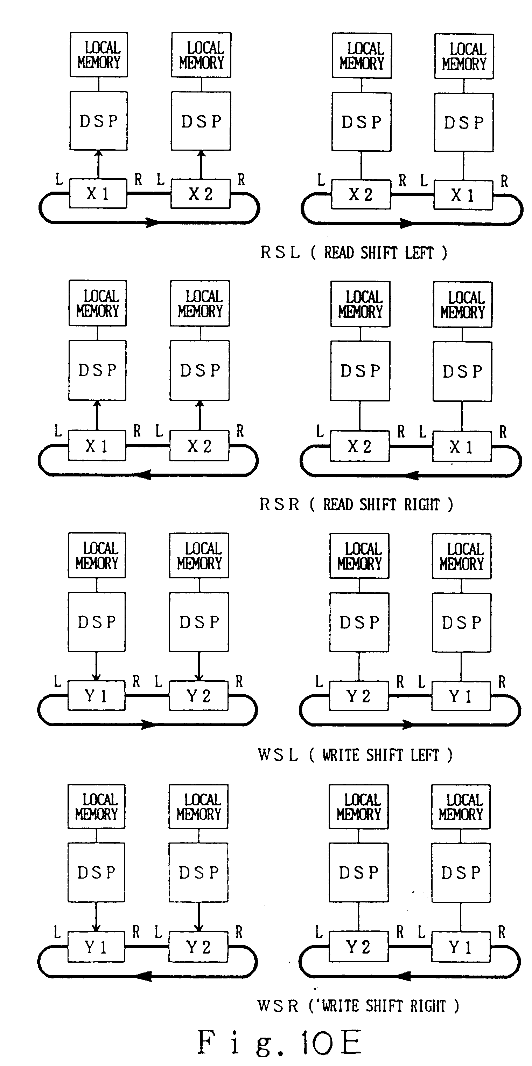

Tray circuit 2 is connected to the adjacent tray as shown in Figure 10C, thereby forming a ring-bus having 32 bits, for example. The instruction for the tray is made up by using the lower 2 bits of the address bus of the DSP forming the data processing unit 1 and an access mode signal (XR-W) of the DSP.

Therefore, the tray circuit 2 can appear as a mere external register to the data processing unit comprising the DSP. Thus, operations involving the tray circuit 2 can be carried out without imposing an overhead on the DSP. The manner of bus access by the tray circuit and the DSP is shown in the timing chart of Figure 10D. The instructions of for the tray circuit 2 comprise NOP, RSR (read and shift right), RSL (read and shift left), WSR (write and shift right), WSL (write and shift left), RD (read), and WR (write). Data flow between the tray circuit 2 and the data processing unit 1 is shown in Figure 10E.

The signals shown in Figure 10D will be explained as follows. Signal X2 is a clock signal provided to the DSP, and signal H1 is obtained by frequency-dividing the signal X2 and corresponds to a machine cycle of the DSP. The timing of the operation of the DSP is based on the signal H1.

Signal MSTRB shows a memory strobe signal and the later recited signals XR_W, XA and XD are valid during the period when the signal MSTRB is low.

The prefix X applied to signals XR_W, XA, XD, XRDY means "extended" and denotes a port of the DSP to which a tray is connected. A port to which a memory is connected is not prefixed with X.

Signal XR_W is a control signal designating "read" when it is high and designating "write" when it is low.

XA designates an address and XD designates a data signal.

XRDY is a signal which a connected apparatus returns to the DSP but is not important for the present invention and further explanation thereof is accordingly omitted.

XA' indicates that XA output from the DSP is subject to a sample and hold operation at a negative edge of MSTRB and operates as a control signal of an operation mode of the tray in the case of a shifting operation of the tray. TD, TI and TO are respectively abbreviations of tray data, tray in and tray out. TD is an output of DFF when the data is shifted to the right, namely, data is shifted from left to right, the left side being TI and the right side being TO in this case. Conversely, when the data is shifted to the left, the right side is TI and the left side is TO.

The timing chart comprises three cycles WSR1, WSR2 and RSR. In Figure 10D, the first WSR cycle (WSR1) lasts from T1 to T5, the second WSR cycle (WSR2) lasts from T5 to T11 and the RSR cycle lasts from T11 to T13. Data(n), Instruction (n-1) and Data (n+1) appearing near to the start of the timing chart in Figure 10D do not have any special meaning and merely designate a kind of data.

At T1, WSR1 starts. Instruction (n) designating a shift right is output on XA, at a rising edge of H1 (T2) read and write signal XR_W becomes low, designating a write cycle. At a falling edge of MSTRB (T3), Instruction (n) on XA is latched and appears on XA'. After this, DSP outputs Data(x) which, at a rising edge of H1 (T4), is written in DFF. The Data(x) is output to the right side (TO). At the same time, Data(x-1) received from the left side is input to TI. MSTRB becomes high at T5 and this bus cycle is completed, thereby keeping Data(x) and Data(x-1) to output. At T6, another shifting operation starts and Data (x-1) on TI is stored in DFF and is output to TO. Simultaneously, Data(x-2), is supplied from the left side to TI. Also at T6, XA of WSR2 cycle which starts at T5 is output. Operations from T5 to T9 are performed in the same way as operations from T1 to T5.

Next, the RSR cycle starts. When a read cycle follows immediately after a write cycle, the write cycle is extended by one machine cycle so that, in this case, the WSR2 cycle lasts until T11. During this extended cycle, XR_W becomes high at T10 and thereafter it is designated that the operation is a read cycle. In synchronicity with this operation, Instruction(n+2) designating an RSR cycle is output on XA and then Data(y-1) in DFF is output on XD. The DSP reads this data at T13 and then a shifting operation starts. Data(y-2) on TI is latched by DFF and simultaneously is output to TO. At this time, Data(y-3) from the left side appears on T I.

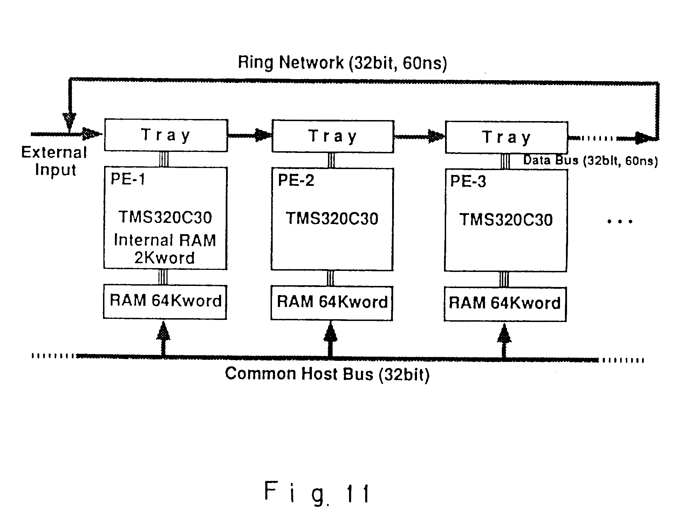

Figure 11 is a block diagram of a neuro-computer actually configured using embodiments of the present invention.

The basic configuration shown in Figure 11 is an SIMD type multiprocessor using one-dimensional torus coupling of DSPs.

It is characteristic that, although the coupling topology and operation are similar to a one-dimensional systolic array, the Figure 11 configuration operates as SIMD.

The trays connected to the DSPs through bi-directional buses are latches having a transfer function and are connected together in the form of a ring to form a cyclic shift register. Hereinafter the shift register is referred to as a ring.

Each DSP has a 2K-word internal memory and a 64K-word built-on RAM. The internal memory can be accessed in one cycle and the built-on memory can be accessed in 1 or 2 cycles.

The built-on RAM is connected to a VMEW bus of a host computer through a common bus for initial loading of a program and data. External inputs are also connected to the host computer through a buffer memory.

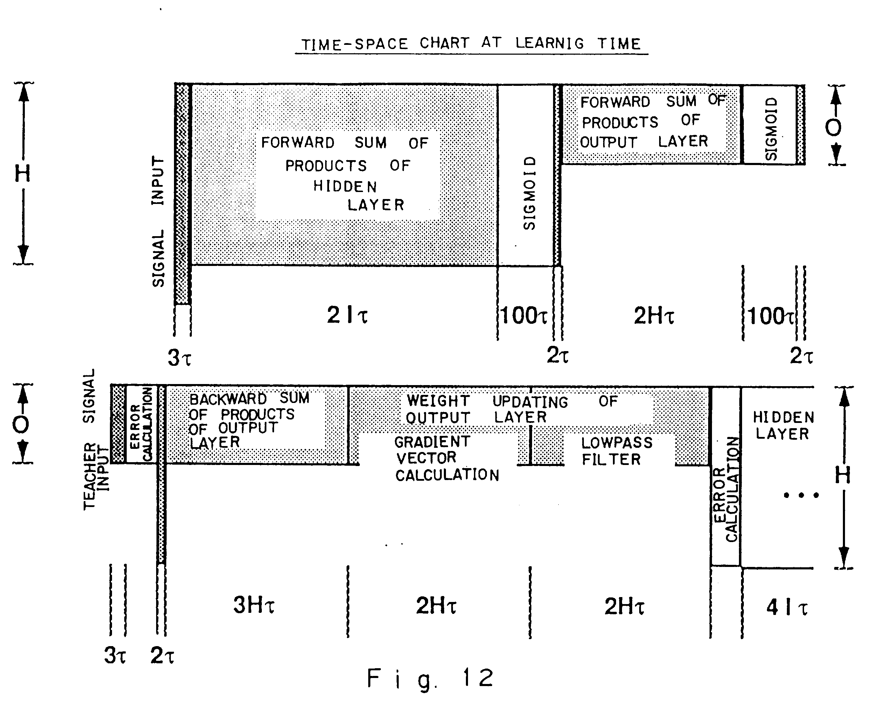

Figure 12 is a time-space chart relating to operations at the time of learning in embodiments of the present invention. The number of processors is represented in the longitudinal direction, and time is represented in the lateral direction. I corresponds to the number of processors of an input layer, H corresponds to the number of processors of a hidden layer, and $\tau$ corresponds to the time needed to calculate a sum of products.

The time required to calculate the forward sum of products of the hidden layer is proportional to the product of the number of processors in the input layer and the operational time $\tau$ of one processor corresponding to the sum of products. Next, the sigmoid is calculated. In the output layer as well, the forward sum of products (2H$\tau$) and the sigmoid of the output layer are calculated. Since the number of processors in the output layer is smaller than the number of processors in the hidden layer, the size of the ring also becomes small. Next, a teacher signal input is received to calculate and back propagate an error. The error calculation is performed by a backward operation of the sum of the products in the output layer, and the weight updating in the output layer is performed through gradient vector calculation and lowpass filtering. After the sigmoid error calculation in the hidden layer, only the weight updating is performed in the hidden layer without calculating the backward sum of products.

EP 0 421 639 B1

**Claims**

1. Parallel data processing apparatus, for performing a matrix operation or a neuron computation operation involving a plurality of individual sub-operations, including:

   a plurality of processing units (1-1, 1-2, ...., 1-m), each having a first input (11) for receiving a data item (X; Y) and being operable to perform such a sub-operation (Y=Y+AX) on the received data item; and
   data transfer means (2-1, 2-2 ...., 2-n, 3) connected for circulating a set ($X_1$, $X_2$, ...., $X_n$; $Y_1$, $Y_2$, ...., $Y_n$) of such data items between the processing-unit first inputs (11-1, 11-2, ...., 11-m) so as to enable each data item of the set to be delivered in turn to different processing units and to enable each processing unit to receive different data items of the set in a predetermined sequence;
   wherein the data transfer means are operable to deliver different data items of the set synchronously to respective processing units, and different processing units are operable to perform respective such sub-operations synchronously;

   characterised in that there are m processing units in the said plurality, and in that the data transfer means include n tray units (2-1, 2-2, ...., 2-n), where n>m, each tray unit (2) having a shifting input (21) and a shifting output (22) and including storage means (2-a) for storing one of the said data items of the said set, the tray units (2) being connected together in series with the shifting output (22) of each tray unit (2-i) being connected operatively to the shifting input (21) of the next tray unit (2-i+1) of the series to permit circulation of the data items of the set through the tray units;

   and in that m of the tray units (2-1, 2-2, ...., 2-m), which correspond respectively to the m processing units, each have a further output (23) that is ( connected to the said first input (11) of the corresponding processing unit to permit delivery of the data item stored in the tray unit concerned to that processing unit.

2. Apparatus as claimed in claim 1, wherein the said data transfer means (2-1, 2-2, ..., 2-n, 3) constitute a cyclic shift register.

3. Apparatus as claimed in claim 1 or 2, further including circulation control means (6, 7) selectively controllable to reduce, to a value less than n, the number of tray units (2) through which the data items of the said set are circulated.

4. Apparatus as claimed in claim 3, wherein the said circulation control means (6, 7) include input switching means (7) connected between the said shifting output (22) of a first one (2-i) of the tray units and the said shifting input (21) of the next tray unit (2-i+1) in the said series and operable to transfer data items in succession from that shifting output to that shifting input, the said input switching means (7) also having a bypass input connected to the said shifting output (22) of a further one of the said tray units (2-1) that is downstream of the said first tray unit (2-i) in the circulation direction of the data items, and being operable selectively to transfer data items received in succession at the said bypass input to the said shifting input (21) of the said next tray unit (2-i+1).

5. Apparatus as claimed in any preceding claim, further including external data supplying means (6) connected between the shifting output (22) of a first one (2-1) of the tray units and the said shifting input (21) of the next tray unit (2-n) in the said series and operable to transfer data items in succession from that shifting output to that shifting input, the external data supplying means (6) also having an external input (61) for receiving new data items to be circulated by the data transfer means (2-1, 2-2 ..., 2-n) and being operable selectively to transfer the received new data items to the shifting input (21) of the said next data unit (2-n).

6. Apparatus as claimed in any preceding claim, wherein each processing unit (1-i) is also operable to transfer a data item (Y) to its corresponding tray unit (2-i).

7. Apparatus as claimed in claim 6, wherein each tray unit (2-i) has a further input (24) connected to an output (13) of its corresponding processing unit (1i).

8. Apparatus as claimed in claim 6, wherein each processing unit (1-i) and its corresponding tray unit (2-i) exchange data items (X, Y) via a bi-directional data transfer path (31).

9. Apparatus as claimed in any one of claims 6 to 8, wherein each processing unit (1-i) is operable to deliver to its corresponding tray unit (2-i) a data item (AX; Y) representing a result of one or more of the said sub-operations

19

performed thereby.

10. Apparatus as claimed in any preceding claim, wherein the said data transfer means permit bi-directional circulation of the data items of the said set (X; Y) through the said tray units (2-1, 2-2, ..., 2-n).

11. Apparatus as claimed in claim 10, wherein the data transfer paths between adjacent tray units of the said series are provided by a bi-directional bus.

12. Apparatus as claimed in any preceding claim, wherein the said matrix operation, or the said neuron computation operation as the case may be, includes the calculation (Y = AX; U = WX) of the product (Y; U) of a rectangular matrix (A; W) and a factor-vector (X).

13. Apparatus as claimed in any preceding claim, wherein the said matrix operation, or the said neuron computation operation as the case may be, includes an operation involving a band matrix.

14. Apparatus as claimed in any preceding claim, wherein the data items on which the said matrix operation, or the said neuron computation operation as the case may be, is performed are in the form of analog signals.

15. Apparatus as claimed in any preceding claim, wherein the said matrix operation, or the said neuron computation operation as the case may be, involves, as one of its operands, a rectangular matrix (A) having m rows and n columns, the apparatus further including memory units (4-1, 4-2, ..., 4-m) corresponding respectively to the said processing units (1-1, 1-2, ..., 1-m), each for storing data items representing respectively the elements ($A_{i1}$, $A_{i2}$, ..., $A_{in}$) of a corresponding row vector of the said rectangular matrix;

   each processing unit (1-i) having a second input (12) connected to its corresponding memory unit (4-i) for reading the data items stored therein.

16. Apparatus as claimed in claim 15, wherein:

   the said matrix operation, or the said neuron computation operation as the case may be, includes a multiplication operation (Y = AX) for obtaining the product (Y) of the said rectangular matrix (A) and a factor vector (X) having n elements;
   the data items of the said set represent respectively the n factor-vector elements ($X_1$, $X_2$, ..., $X_n$); and
   during the course of the said multiplication operation, the data transfer means (2, 3) are operated n times to circulate each data item of the said set to each in turn of the said tray units (2-1, 2-2 ..., 2-n), and each processing unit (1-i) is operated n times to receive the n data items ($X_1$, $X_2$, ..., $X_n$) in the said predetermined sequence and to read in a reading sequence corresponding to the said predetermined sequence the n data items ($A_{i1}$, $A_{i2}$, ..., $A_{in}$) stored in its corresponding memory unit ($4_i$) and to perform, as the said sub-operation, a sum-of-product operation ($Y_i = Y_i + A_{ij}X_j$) in which the two data items ($X_j$, $A_{ij}$) received at its first and second inputs (11, 12) respectively are multiplied together and the resulting product ($A_{ij}X_j$) is added to an accumulation value ($Y_i$) so that the processing unit (1-i) concerned serves to calculate the inner product of its corresponding row vector ($A_{i1}$, $A_{i2}$, ..., $A_{in}$) and the said factor-vector (X).

17. Apparatus as claimed in claim 16 when read as appended to claim 3, wherein the said matrix operation, or the said neuron computation operation as the case may be, includes a further calculation (BY), following the said multiplication operation (AX), of multiplying a further rectangular matrix (B), having k rows and m columns, by the said product (Y) obtained by the said multiplication operation, the respective accumulation values ($Y_i$) provided by the processing units (1-i) upon completion of the said multiplication operation (AX) being transferred from those processing units to the respective corresponding tray units (2-i) to serve in the said further calculation (BY) as the said set of data items, and the circulation control means (6, 7) being then caused to change to m the number of tray units through which the data items circulate, whereafter the said further calculation is performed, during the course of which the said data transfer means (2, 3) and k of the processing units (1-1, 1-2, ..., 1-k) are each operated m times.

18. Apparatus as claimed in claim 15, wherein the said matrix operation, or the said neuron computation operation as the case may be, includes a multiplication operation ($A^TX$) for obtaining the product (Y) of the transpose ($A^T$) of the said rectangular matrix (A) and a factor vector (X) having m elements;

the data items ($Y_1$, $Y_2$, ..., $Y_n$) of the said set represent respectively n intermediate results of the multiplication operation; and

during the course of the said multiplication operation, the data transfer means (2, 3) are operated n times to circulate each data item ($Y_1$, $Y_2$, ..., $Y_n$) of the said set to each in turn of the tray units (2-1, 2-2 ..., 2-n), and each processing unit (1-i) is operated n times to read from its said corresponding memory unit (4-i) each in turn of the n data items representing respectively the n elements of its corresponding row vector ($A_{i1}$, $A_{i2}$, ..., $A_{in}$) of the said rectangular matrix (A) and to multiply each read data item ($A_{ij}$) by a further data item ($X_i$) representing one of the factor-vector elements that corresponds individually to the processing unit concerned, and to add the resulting product ($A_{ij}X_i$) to the said data item ($Y_j$) of the said set held in its corresponding tray unit (2-i).

19. Apparatus as claimed in claim 16, wherein:

the said neuron computation operation is a forward process of a neural network having a plurality of neurons interconnected by synapses;

the said rectangular matrix (W) is a weight coefficient matrix the elements of which represent respectively the synaptic weights between neurons;

the factor-vector elements (X) represent respectively input variables to neurons; and

the apparatus further comprises a non-linear function circuit (101) connected for receiving the said inner product ($u_i$) calculated by each processing unit (1-i) and operable to apply thereto a predetermined non-linear function (f(u)) so as to derive therefrom an output variable (Y) for a neuron.

20. Apparatus as claimed in claim 19, wherein the said predetermined non-linear function (f(u)) includes a sigmoid function.

21. Apparatus as claimed in claim 18, wherein:

the said neuron computation operation is a back-propagation learning process of a neural network in which an error signal (D($\ell$)), representing an error between an output signal of an output layer of the network and a teacher signal, is propagated back to an input layer of the network in a direction opposite to the normal direction of signal propagation network;

the said rectangular matrix (W) is a weight coefficient matrix the elements of which represent respectively the weights between neurons; and

the said factor-vector elements (v) are derived from error-signal elements (D($\ell$)).

22. Apparatus as claimed in any one of claims 19 to 21, wherein said neural network is a layered neural network including at least three layers, and the said weight coefficient matrix has elements which represent respectively the weights between neurons of one layer and neurons of the next layer of the network.

23. Apparatus as claimed in claim 16, wherein:

the said rectangular matrix (A) is a band matrix having a width k; and

the data transfer means (2, 3) are operable as necessary, prior to commencement of the said multiplication operation, to bring the appropriate data items of the said set (X) to the respective first inputs (11) of the processing units (1) so as to ensure that for each processing unit, during the course of the multiplication operation, the said reading sequence starts with the data item representing the element at one end of the band of k elements in its corresponding row vector and continues with data items representing each in turn along the band of the remaining elements of the band.

**Patentansprüche**

1. Parallel-Datenverarbeitungsgerät zur Durchführung einer Matrixoperation oder einer Neuroberechnungsoperation, bei der eine Vielzahl von einzelnen Sub-Operationen involviert sind, mit:

einer Vielzahl von Prozessoreinheiten (1-1, 1-2, ..., 1-m), von denen jede einen ersten Eingang (11) besitzt, um ein Datenelement (X; Y) zu empfangen und betreibbar ist, um solch eine Sub-Operation (Y=Y+AX) an dem empfangenen Datenelement durchzuführen; und

Datenübertragungseinrichtungen (2-1, 2-2, ..., 2-n, 3), die geschaltet sind, um einen Satz ($X_1$, $X_2$, ..., $X_n$; $Y_1$, $Y_2$, ..., $Y_n$) solcher Datenelemente zwischen den ersten Eingängen (11-1, 11-2, ..., 11-m) der Verarbeitungseinheit zirkulieren zu lassen, so daß jedes Datenelement des Satzes seinerseits an verschiedene Verarbeitungseinheiten übergeben werden kann und jede Verarbeitungseinheit dazu befähigt wird, unterschiedliche Datenelemente des Satzes in einer vorbestimmten Sequenz zu empfangen;

wobei die Datenübertragungseinrichtungen betreibbar sind, um unterschiedliche Datenelemente des Satzes synchron an die jeweiligen Verarbeitungseinheiten zu übergeben und wobei unterschiedliche Verarbeitungseinheiten betreibbar sind, um solche jeweiligen Sub-Operationen synchron auszuführen;

dadurch **gekennzeichnet**, daß m Verarbeitungseinheiten in der genannten Vielzahl vorhanden sind und daß die Datenübertragungseinrichtungen n Tray-Einheiten (tray units = Datenablagen mit steuerbarer Datenweiterleit-Funktion) (2-1, 2-2, ..., 2-n) enthalten, wobei n größer als m und wobei jede Tray-Einheit (2) einen Schiebeeingang (21) und einen Schiebeausgang (22) besitzt und eine Speichereinrichtung (2-a) enthält, um eines der Datenelemente des genannten Satzes zu speichern, die Tray-Einheiten (tray units) (2) miteinander in Reihe mit dem Schiebeausgang (22) jeder Tray-Einheit (2-i) geschaltet sind, der betriebsmäßig mit dem Schiebeeingang (21) der nächsten Tray-Einheit (2-i+1) der Reihenschaltung verbunden ist, um eine Zirkulation der Datenelemente des Satzes durch die Tray-Einheiten zu erlauben;

und daß m der Tray-Einheiten (2-1, 2-2, ..., 2-m), die jeweils den m Verarbeitungseinheiten entsprechen, je einen weiteren Ausgang (23) besitzen, der mit dem genannten ersten Eingang (11) der entsprechenden Verarbeitungseinheit verbunden ist, um die Übergabe des in der in Betracht stehenden Tray-Einheit abgespeicherten Datenelements zu dieser Verarbeitungseinheit zu erlauben.

2. Gerät nach Anspruch 1, bei dem die Datenübertragungseinrichtungen (2-1, 2-2, ..., 2-n, 3) ein zyklisches Schieberegister bilden.

3. Gerät nach Anspruch 1 oder 2, ferner mit einer Zirkulationssteuereinrichtung (6, 7), die selektiv steuerbar ist, um die Zahl der Tray-Einheiten (2), über die die Datenelemente des genannten Satzes zirkuliert werden, auf einen Wert kleiner als n zu reduzieren.

4. Gerät nach Anspruch 3, bei dem die Zirkulationssteuereinrichtung (6, 7) eine Eingangs-Schaltereinrichtung (7) enthält, die zwischen den Schiebeausgang (22) eines ersten (2-i) der Tray-Einheiten und den Schiebeeingang (21) der nächsten Tray-Einheit (2-i+1) in der Reihenschaltung geschaltet ist und betreibbar ist, um die Datenelemente in Aufeinanderfolge von diesem Schiebeausgang zu diesem Schiebeeingang zu übertragen, wobei die Eingangs-Schaltereinrichtung (7) auch einen Umgehungseingang besitzt, der an den Schiebeausgang (22) einer weiteren einen der Tray-Einheiten (2-1) angeschlossen ist, die stromabwärts von der ersten Tray-Einheit (2-i) in der Zirkulierrichtung der Datenelemente gelegen ist, und die selektiv betreibbar ist, um die Datenelemente, die in Aufeinanderfolge an dem Umgehungseingang empfangen werden, zu dem Schiebeeingang (21) der nächsten Tray-Einheit (2-i+1) zu übertragen.

5. Gerät nach irgendeinem der vorhergehenden Ansprüche, ferner mit einer externen Datenversorgungseinrichtung (6), die zwischen den Schiebeausgang (22) einer ersten einen (2-1) der Tray-Einheiten und dem Schiebeeingang (21) der nächsten Tray-Einheit (2-n) in der Reihenschaltung geschaltet ist und betreibbar ist, um die Datenelemente in Aufeinanderfolge von diesem Schiebeausgang zu diesem Schiebeeingang zu übertragen, wobei die externe Datenversorgungseinrichtung (6) auch einen externen Eingang (61) besitzt, um neue Datenelemente zu empfangen, die durch die Datenübertragungseinrichtungen (2-1, 2-2, ..., 2-n) zu zirkulieren sind, und die selektiv betreibbar ist, um die empfangenen neuen Datenelemente zu dem Schiebeeingang (21) der nächsten Dateneinheit (2-n) zu übertragen.

6. Gerät nach irgendeinem der vorhergehenden Ansprüche, bei dem jede Verarbeitungseinheit (1-i) auch betreibbar ist, um ein Datenelement (Y) zu deren entsprechender Tray-Einheit (2-i) zu übertragen.

7. Gerät nach Anspruch 6, bei dem jede Tray-Einheit (2-i) einen weiteren Eingang (24) besitzt, der mit einem Ausgang (13) von deren entsprechender Verarbeitungseinheit (1-i) verbunden ist.

8. Gerät nach Anspruch 6, bei dem jede Verarbeitungseinheit (1-i) und deren entsprechende Tray-Einheit (tray unit) (2-i) Datenelemente (X, Y) über einen Zweirichtungs-Datenübertragungspfad (31) austauschen.

9. Gerät nach irgendeinem der Ansprüche 6 bis 8, bei dem jede Verarbeitungseinheit (1-i) betreibbar ist, um an deren entsprechende Tray-Einheit (2-i) ein Datenelement (AX; Y) zu übergeben, welches ein Ergebnis von einer oder von mehreren der Suboperationen wiedergibt, die dadurch durchgeführt wird bzw. werden.

10. Gerät nach irgendeinem der vorhergehenden Ansprüche, bei dem die Datenübertragungseinrichtungen eine Zweirichtungszirkulation der Datenelemente des genannten Satzes (X; Y) durch die Tray-Einheiten (2-1, 2-2, ..., 2-n) ermöglichen.

11. Gerät nach Anspruch 10, bei dem die Datenübertragungspfade zwischen benachbarten Tray-Einheiten der Reihenschaltung durch einen Zweirichtungsbus gebildet sind.

12. Gerät nach irgendeinem der vorhergehenden Ansprüche, bei dem die Matrixoperation oder die Neuroberechnungsoperation je nach Fall die Berechnung ($Y = AX$; $U = WX$) des Produktes ($Y$; $U$) einer rechteckförmigen Matrix ($A$; $W$) und eines Faktorvektors ($X$) enthält.

13. Gerät nach irgendeinem der vorhergehenden Ansprüche, bei dem die Matrixoperation oder die Neuroberechnungsoperation je nach Fall eine Operation enthält, die eine Bandmatrix involviert.

14. Gerät nach irgendeinem der vorhergehenden Ansprüche, bei dem die Datenelemente, an denen die Matrixoperation oder die Neuroberechnungsoperation je nach Fall ausgeführt wird, in Form von analogen Signalen vorliegen.

15. Gerät nach irgendeinem der vorhergehenden Ansprüche, bei dem die Matrixoperation oder die Neuroberechnungsoperation je nach Fall als einen von deren Operanden eine rechteckförmige Matrix ($A$) mit m Reihen und n Spalten involviert und bei dem das Gerät ferner Speichereinheiten (4-1, 4-2, ..., 4-m) enthält, die jeweils den Verarbeitungseinheiten (1-1, 1-2, ..., 1-m) entsprechen und von denen jede dazu dient, die Datenelemente zu speichern, welche jeweils die Elemente ($A_{i1}$, $A_{i2}$, ..., $A_{in}$) eines entsprechenden Reihenvektors der rechteckförmigen Matrix wiedergeben;

   jede Verarbeitungseinheit (1-i) einen zweiten Eingang (12) besitzt, der an deren entsprechenden Speichereinheit (4-i) angeschlossen ist, um die darin gespeicherten Datenelemten zu lesen.

16. Gerät nach Anspruch 15, bei dem die Matrixoperation oder die Neuroberechnungsoperation je nach Fall eine Multiplikationsoperation ($Y = AX$) enthält, um das Produkt ($Y$) der rechteckförmigen Matrix ($A$) und eines Faktorvektors ($X$) mit n Elementen zu erhalten;

   die Datenelemente des genannten Satzes jeweils n Faktorvektorelemente ($X_1$, $X_2$, ..., $X_n$) wiedergeben; und im Verlaufe der Multiplikationsoperation die Datenübertragungseinrichtungen (2, 3) n-mal betrieben werden, um jedes Datenelement des genannten Satzes seinerseits zu jedem der Tray-Einheiten (2-1, 2-2, ..., 2-n) zirkulieren zu lassen und wobei jede Verarbeitungseinheit (1-i) n-mal betrieben wird, um die n Datenelemente ($X_1$, $X_2$, ..., $X_n$) in der genannten vorbestimmten Sequenz zu empfangen und um die n Datenelemente ($A_{i1}$, $A_{i2}$, ..., $A_{in}$), die in deren entsprechender Speichereinheit ($4_i$) gespeichert sind, in einer Lesesequenz zu lesen, die der genannten vorbestimmten Sequenz entspricht, und um als Suboperation eine Summe-der-Produkte-Operation ($Y_i = Y_i + A_{ij}X_j$) durchzuführen, bei der die zwei Datenelemente ($X_j$, $A_{ij}$), die an deren erstem Eingang bzw. zweitem Eingang (11, 12) empfangen werden, miteinander zu multiplizieren und das resultierende Produkt ($A_{ij} X_j$) zu einem Akkumulationswert ($Y_i$) hinzuzuaddieren, so daß die in Betracht stehende Verarbeitungseinheit (1-i) dazu dient, das innere Produkt von deren entsprechendem Reihenvektor ($A_{i1}$, $A_{i2}$, ..., $A_{in}$) und dem Faktorvektor ($X$) zu berechnen.

17. Gerät nach Anspruch 16 in Rückbeziehung zu Anspruch 3, bei dem die Matrixoperation oder die Neuroberechnungsoperation je nach Fall eine weitere Berechnung (BY) enthält, die auf die Multiplikationsoperation (AX) folgt und das Multiplizieren einer weiteren rechteckförmigen Matrix (B) mit k Reihen und m Spalten mit dem Produkt (Y) enthält, welches durch die genannte Multiplikationsoperation erhalten wurde, wobei die jeweiligen Akkumulationswerte ($Y_i$), die durch die Verarbeitungseinheiten (1-i) nach Vervollständigung der genannten Multiplikationsoperation (AX) erzeugt werden, von solchen Verarbeitungseinheiten zu den jeweiligen entsprechenden Tray-Einheiten (2-i) übertragen werden, um in der genannten weiteren Berechnung (BY) als der Satz der Datenelemente zu dienen, und bei dem die Zirkulationssteuereinrichtung (6, 7) dann veranlaßt wird, eine Änderung auf m der Anzahl der Tray-Einheiten zu bewirken, durch die die Datenelemente zirkulieren, woraufhin die genannte weitere Berechnung ausgeführt wird, in deren Verlauf die Datenübertragungseinrichtungen (2, 3) und die k Verarbeitungseinheiten (1-1, 1-2, ..., 1-k) je m-mal betrieben werden.

18. Gerät nach Anspruch 15, bei dem die Matrixoperation oder die Neuroberechnungsoperation je nach Fall eine Multiplikationsoperation ($A^T X$) enthält, um das Produkt (Y) des Transponats ($A^T$) der rechteckförmigen Matrix (A) und eines Faktorvektors (X) mit m Elementen zu erhalten;

wobei die Datenelemente ($Y_1$, $Y_2$, ..., $Y_n$) des Satzes jeweils n Zwischenergebnisse der Multiplikationsoperation wiedergeben; und

im Verlauf der Multiplikationsoperation die Datenübertragungseinrichtungen (2, 3) n-mal betätigt werden, um jedes Datenelement ($Y_1$, $Y_2$, ..., $Y_n$) des Satzes seinerseits zu jeder der Tray-Einheiten (2-1, 2-2, ..., 2-n) zu zirkulieren, und wobei jede Verarbeitungseinheit (1-i) n-mal betrieben wird, um aus deren entsprechender Speichereinheit (4-i) seinerseits jedes der n Datenelemente zu lesen, welche jeweils die n Elemente von deren entsprechenden Reihenvektor ($A_{i1}$, $A_{i2}$, ..., $A_{in}$) der rechteckförmigen Matrix (A) wiedergeben, um jedes der gelesenen Datenelemente ($A_{ij}$) mit einem weiteren Datenelement ($X_i$) zu multiplizieren, welches einen der Faktorvektorelemente wiedergibt, welches individuell der in Betracht stehenden Verarbeitungseinheit entspricht, und um das resultierende Produkt ($A_{ij} X_i$) zu dem Datenelement ($Y_j$) des genannten Satzes hinzuzuaddieren, der in dessen entsprechender Tray-Einheit (2-i) gehalten wird.

19. Gerät nach Anspruch 16, bei dem die Neuroberechnungsoperation aus einem vorwärtsgerichteten Prozeß eines Neuronetzwerks ist, welches eine Vielzahl von Neuronen enthält, die durch Synapsen miteinander verbunden sind;

die genannte rechteckförmige Matrix (W) aus einer Wichtungskoeffizientenmatrix besteht, deren Elemente jeweils die synaptischen Wichtungen zwischen den Neuronen wiedergeben;
wobei die Faktorvektorelemente (X) jeweils Eingangsvariable zu den Neuronen wiedergeben; und
das Gerät ferner eine nichtlineare Funktionsschaltung (101) enthält, die so angeschlossen ist, daß sie das innere Produkt ($u_i$) empfängt, welches durch jede Verarbeitungseinheit (1-i) berechnet wurde, und betreibbar ist, um an diese eine vorbestimmte nichtlineare Funktion (f(u)) anzulegen, um daraus bzw. davon eine Ausgangsvariable (Y) für ein Neuron abzuleiten.

20. Gerät nach Anspruch 19, bei dem die vorbestimmte nichtlineare Funktion (f(u)) eine Sigmoid-Funktion enthält.

21. Gerät nach Anspruch 18, bei dem die Neuroberechnungsoperation aus einem Rückwärtsausbreitungs-Lernprozeß eines Neuronetzwerks besteht, bei dem ein Fehlersignal ($D(\ell)$), welches einen Fehler zwischen einem Ausgangssignal einer Ausgabeschicht des Netzwerks und einem Lehrsignal wiedergibt, nach Rückwärts ausgebreitet wird, und zwar zu einer Eingabeschicht des Netzwerks hin in einer Richtung entgegengesetzt zu der normalen Richtung des Signalausbreitungsnetzwerks;

wobei die rechteckförmige Matrix (W) aus einer Wichtungskoeffizientenmatrix besteht, deren Elemente jeweils Wichtungen der Neuronen wiedergeben; und
die Faktorvektorelemente (v) aus den Fehlersignalelementen ($D(\ell)$) abgeleitet sind.

22. Gerät nach irgendeinem der Ansprüche 19 bis 21, bei dem das Neuronetzwerk aus einem geschichteten Neuronetzwerk besteht, welches wenigstens drei Schichten enthält und bei dem die Wichtungskoeffizientenmatrix Elemente besitzt, die jeweils die Wichtungen zwischen den Neuronen von einer Schicht und den Neuronen der nächsten Schicht des Netzwerks wiedergeben.

23. Gerät nach Anspruch 16, bei dem die rechteckförmige Matrix (A) eine Bandmatrix mit einer Weite k ist; und

die Datenübertragungseinrichtungen (2, 3) in der erforderlichen Weise vor dem Beginn der Multiplikationsoperation betreibbar sind, um die geeigneten Datenelemente des genannten Satzes (X) zu den jeweiligen ersten Eingängen (11) der Verarbeitungseinheiten (1) zu bringen, um sicherzustellen, daß für jede Verarbeitungseinheit im Verlauf der Multiplikationsoperation die Lesesequenz mit dem Datenelement startet, welches das Element an einem Ende des Bandes der k Elemente in deren entsprechendem Reihenvektor wiedergibt, und mit den Datenelementen fortgesetzt wird, welche ihrerseits entlang dem Band jedes der verbleibenden Elemente des Bandes wiedergeben.

**Revendications**

1. Appareil de traitement de données en parallèle, pour effectuer une opération matricielle ou une opération de calcul neuronal faisant intervenir un ensemble de sous-opérations individuelles, comprenant :

   un ensemble d'unités de traitement (1-1, 1-2, ..., 1-m), chacune d'elles ayant une première entrée (11) pour recevoir un élément de données (X; Y) et pouvant être actionnée pour effectuer une telle sous-opération (Y = Y + AX) sur l'élément de données reçu; et
   des moyens de transfert de données (2-1, 2-2 2-n, 3) connectés pour faire circuler un groupe ($X_1$, $X_2$, ..., $X_n$; $Y_1$, $Y_2$, ..., $Y_n$) de tels éléments de données entre les premières entrées (11-1, 11-2, ..., 11-m) des unités de traitement, de façon à permettre à chaque élément de données du groupe d'être fourni tour à tour à différentes unités de traitement, et à permettre à chaque unité de traitement de recevoir différents éléments de données du groupe, en une séquence prédéterminée;
   dans lequel les moyens de transfert de données peuvent être actionnés pour fournir en synchronisme différents éléments de données de l'ensemble à des unités de traitement respectives, et différentes unités de traitement peuvent être actionnées pour effectuer en synchronisme de telles sous-opérations respectives;

   caractérisé en ce qu'il y a m unités de traitement dans l'ensemble précité, et en ce que les moyens de transfert de données comprennent n unités de plateau (2-1, 2-2 2-n), avec n > m, chaque unité de plateau (2) ayant une entrée de décalage (21) et une sortie de décalage (22) et comprenant des moyens d'enregistrement (2-a) pour enregistrer l'un des éléments de données du groupe précité, les unités de plateau (2) étant connectées ensemble en série, avec la sortie de décalage (22) de chaque unité de plateau (2-i) connectée fonctionnellement à l'entrée de décalage (21) de l'unité de plateau suivante (2-i+1) de la série, pour permettre la circulation des éléments de données du groupe à travers les unités de plateau;

   et en ce que m des unités de plateau (2-1, 2-2 2-m), qui correspondent respectivement aux m unités de traitement, ont chacune une sortie supplémentaire (23) qui est connectée à la première entrée (11) de l'unité de traitement correspondante, pour permettre de fournir à cette unité de traitement l'élément de données qui est enregistré dans l'unité de plateau considérée.

2. Appareil selon la revendication 1, dans lequel les moyens de transfert de données (2-1, 2-2, ..., 2-n, 3) constituent un registre à décalage cyclique.

3. Appareil selon la revendication 1 ou 2, comprenant en outre des moyens de commande de circulation (6, 7) qui peuvent être commandés sélectivement pour réduire à une valeur inférieure à n le nombre d'unités de plateau (2) à travers lesquelles circulent les éléments de données du groupe précité.

4. Appareil selon la revendication 3, dans lequel les moyens de commande de circulation (6, 7) comprennent des moyens de commutation d'entrée (7) connectés entre la sortie de décalage (22) d'une première (2-i) des unités de plateau et l'entrée de décalage (21) de l'unité de plateau suivante (2-i+1) dans la série, et pouvant être actionnés pour transférer des éléments de données en succession à partir de cette sortie de décalage vers cette entrée de décalage, les moyens de commutation d'entrée (7) ayant également une entrée de dérivation qui est connectée à la sortie de décalage (22) d'une unité de plateau ultérieure (2-1) qui est en aval de la première unité de plateau (2-i) dans la direction de circulation des éléments de données, et qui peut être actionnée sélectivement pour transférer vers l'entrée de décalage (21) de l'unité de plateau suivante (2-i+1) des éléments de données qui sont reçus en succession à cette entrée de dérivation.

5. Appareil selon l'une quelconque des revendications précédentes, comprenant en outre des moyens de fourniture de données externes (6) connectés entre la sortie de décalage (22) d'une première (2-1) des unités de plateau et l'entrée de décalage (21) de l'unité de plateau suivante (2-n) dans la série, et pouvant être actionnés pour transférer des éléments de données, en succession, à partir de cette sortie de décalage vers cette entrée de décalage, les moyens de fourniture de données externes (6) ayant également une entrée externe (61) pour recevoir de nouveaux éléments de données que les moyens de transfert de données (2-1, 2-2 2-n) doivent faire circuler, et pouvant être actionnée sélectivement pour transférer les nouveaux éléments de données reçus vers l'entrée de décalage (21) de l'unité de données suivante (2-n).

6. Appareil selon l'une quelconque des revendications précédentes, dans lequel chaque unité de traitement (1-i) peut également être actionnée pour transférer un élément de données (Y) vers son unité de plateau (2-i) correspondante.

**7.** Appareil selon la revendication 6, dans lequel chaque unité de plateau (2-i) a une entrée supplémentaire (24) connectée à une sortie (13) de son unité de traitement (1-i) correspondante.

**8.** Appareil selon la revendication 6, dans lequel chaque unité de traitement (1-i) et son unité de plateau (2-i) correspondante échangent des éléments de données (X, Y) par l'intermédiaire d'une voie de transfert de données bidirectionnelle (31).

**9.** Appareil selon l'une quelconque des revendications 6 à 8, dans lequel chaque unité de traitement (1-i) peut être actionnée pour fournir à son unité de plateau (2-i) correspondante un élément de données (AX; Y) représentant un résultat d'une ou de plusieurs des sous-opérations qu'elle a effectuées.

**10.** Appareil selon l'une quelconque des revendications précédentes, dans lequel les moyens de transfert de données permettent une circulation bidirectionnelle des éléments de données du groupe (X; Y) à travers les unités de plateau (2-1, 2-2, ..., 2-n).

**11.** Appareil selon la revendication 10, dans lequel les voies de transfert de données entre des unités de plateau adjacentes de la série sont établies par un bus bidirectionnel.

**12.** Appareil selon l'une quelconque des revendications précédentes, dans lequel l'opération matricielle, ou l'opération de calcul neuronal, selon le cas, comprend le calcul $(Y = AX; U = WX)$ du produit $(Y; U)$ d'une matrice rectangulaire $(A; W)$ et d'un vecteur de facteur $(X)$.

**13.** Appareil selon l'une quelconque des revendications précédentes, dans lequel l'opération matricielle, ou l'opération de calcul neuronal, selon le cas, comprend une opération faisant intervenir une matrice en bande.

**14.** Appareil selon l'une quelconque des revendications précédentes, dans lequel les éléments de données sur lesquels est effectuée l'opération matricielle, ou l'opération de calcul neuronal, selon le cas, sont sous la forme de signaux analogiques.

**15.** Appareil selon l'une quelconque des revendications précédentes, dans lequel l'opération matricielle, ou l'opération de calcul neuronal, selon le cas, fait intervenir, pour l'un de ses opérandes, une matrice rectangulaire (A) ayant m lignes et n colonnes, l'appareil comprenant en outre des unités de mémoire (4-1 , 4-2 4-m) correspondant respectivement aux unités de traitement (1-1, 1-2, ..., 1-m), chacune d'elles étant destinée à enregistrer des éléments de données représentant respectivement les éléments $(A_{i1}, A_{i2}, ..., A_{in})$ d'un vecteur-ligne correspondant de la matrice rectangulaire;

chaque unité de traitement (1-i) ayant une seconde entrée (12) connectée à son unité de mémoire (4-i) correspondante, pour lire les éléments de données qui sont enregistrés dans cette dernière.

**16.** Appareil selon la revendication 15, dans lequel :

l'opération matricielle, ou l'opération de calcul neuronal, selon le cas, comprend une opération de multiplication $(Y = AX)$ pour obtenir le produit (Y) de la matrice rectangulaire (A) et d'un vecteur de facteur (X) ayant n éléments;
les éléments de données du groupe précité représentent respectivement les n éléments $(X_1, X_2, ..., X_n)$ de vecteur de facteur; et
au cours de cette opération de multiplication, les moyens de transfert de données (2, 3) sont actionnés n fois pour faire circuler chaque élément de données du groupe tour à tour vers chacune des unités de plateau (2-1, 2-2, ..., 2-n), et chaque unité de traitement (1-i) est actionnée n fois pour recevoir les n éléments de données $(X_1, X_2, ..., X_n)$ dans la séquence prédéterminée, et pour lire, en une séquence de lecture correspondant à la séquence prédéterminée, les n éléments de données $(A_{i1}, A_{i2}, ..., A_{in})$ qui sont enregistrés dans son unité de mémoire $(4_i)$ correspondante, et pour effectuer, pour la sous-opération précitée, une opération de somme de produits $(Y_i = Y_i + A_{ij}X_j)$ dans laquelle les deux éléments de données $(X_j, A_{ij})$ qui sont respectivement reçus sur ses première et seconde entrées (11, 12) sont multipliés ensemble, et le produit résultant $(A_{ij} X_j)$ est additionné à une valeur d'accumulation $(Y_j)$, de façon que l'unité de traitement (1-i) concernée remplisse la fonction qui consiste à calculer le produit scalaire de son vecteur-ligne correspondant $(A_{i1}, A_{i2}, ..., A_{in})$ et du vecteur

de facteur (X).

**17.** Appareil selon la revendication 16, considérée comme étant rattachée à la revendication 3, dans lequel l'opération matricielle, ou l'opération de calcul neuronal, selon le cas, comprend un calcul supplémentaire (BY), faisant suite à l'opération de multiplication (AX), qui consiste à multiplier une matrice rectangulaire supplémentaire (B), ayant k lignes et m colonnes, par le produit précité (Y) qui est obtenu par l'opération de multiplication, les valeurs d'accumulation respectives (Yj) qui sont produites par les unités de traitement (1-i) à l'achèvement de l'opération de multiplication (AX) étant transférées à partir de ces unités de traitement vers les unités de plateau (2-i) respectives correspondantes, pour remplir la fonction du groupe d'éléments de données dans le calcul supplémentaire (BY), et les moyens de commande de circulation (6, 7) étant alors actionnés de façon à changer en m le nombre d'unités de plateau à travers lesquelles les éléments de données circulent, après quoi le calcul supplémentaire précité est effectué, et au cours de celui-ci, les moyens de transfert de données (2, 3) et k des unités de traitement (1-1, 1-2, ..., 1-k) sont actionnés chacun n fois.

**18.** Appareil selon la revendication 15, dans lequel l'opération matricielle, ou l'opération de calcul neuronal, selon le cas, comprend une opération de multiplication ($A^TX$) pour obtenir le produit (Y) de la transposée ($A^T$) de la matrice rectangulaire (A), et d'un vecteur de facteur (X) ayant m éléments;

les éléments de données ($Y_1$, $Y_2$, ..., $Y_n$) du groupe précité représentent respectivement n résultats intermédiaires de l'opération de multiplication; et
au cours de cette opération de multiplication, les moyens de transfert de données (2, 3) sont actionnés n fois pour faire circuler chaque élément de données ($Y_1$, $Y_2$, ..., $Y_n$) du groupe tour à tour vers chacune des unités de plateau (2-1, 2-2, ..., 2-n), et chaque unité de traitement (1-i) est actionnée n fois, pour lire dans son unité de mémoire (4-i) correspondante tour à tour chacun des n éléments de données représentant respectivement les n éléments de son vecteur-ligne ($A_{i1}$, $A_{i2}$, ..., $A_{in}$) correspondant de la matrice rectangulaire (A), et pour multiplier chaque élément de données ($A_{ij}$) lu par un élément de données ($X_i$) supplémentaire, représentant l'un des éléments du vecteur de facteur qui correspond individuellement à l'unité de traitement concernée, et pour additionner le produit résultant ($A_{ij}X_j$) à l'élément de données ($Y_j$) du groupe précité qui est conservé dans son unité de plateau (2-i) correspondante.

**19.** Appareil selon la revendication 16, dans lequel :

l'opération de calcul neuronal est un processus de sens avant d'un réseau neuronal ayant un ensemble de neurones interconnectés par des synapses;
la matrice rectangulaire (W) est une matrice de coefficients de poids dont les éléments représentent respectivement les poids synaptiques entre des neurones;
les éléments du vecteur de facteur (X) représentent respectivement des variables d'entrée de neurones; et
l'appareil comprend en outre un circuit de fonction non linéaire (101) connecté pour recevoir le produit scalaire ($u_i$) qui est calculé par chaque unité de traitement (1-i), et qui peut être actionné pour lui appliquer une fonction non linéaire (f(u)) prédéterminée, de façon à en obtenir une variable de sortie (Y) pour un neurone.

**20.** Appareil selon la revendication 19, dans lequel la fonction non linéaire (f(u)) prédéterminée comprend une fonction sigmoïde.

**21.** Appareil selon la revendication 18, dans lequel :

l'opération de calcul neuronal est un processus d'apprentissage par rétropropagation d'un réseau neuronal, dans lequel un signal d'erreur ($D(\ell)$), représentant une erreur entre un signal de sortie d'une couche de sortie du réseau et un signal de référence, est propagée en arrière vers une couche d'entrée du réseau, dans une direction opposée à la direction normale de propagation de signaux dans le réseau;
la matrice rectangulaire (W) est une matrice de coefficients de poids dont les éléments représentent respectivement les poids entre des neurones; et
les éléments du vecteur de facteur (v) sont obtenus à partir d'éléments du signal d'erreur ($D(\ell)$).

**22.** Appareil selon l'une quelconque des revendications 19 à 21, dans lequel le réseau neuronal est un réseau neuronal en couches comprenant au moins trois couches, et la matrice de coefficients de poids a des éléments qui représentent respectivement les poids entre des neurones d'une couche et des neurones de la couche suivante du réseau.

**23.** Appareil selon la revendication 16, dans lequel :

la matrice rectangulaire (A) est une matrice en bande ayant une largeur k; et

les moyens de transfert de données (2, 3) peuvent être actionnés de la manière nécessaire, avant le commencement de l'opération de multiplication, pour amener les éléments de données appropriés du groupe (X) aux premières entrées (11) respectives des unités de traitement (1), de façon à garantir que pour chaque unité de traitement, au cours de l'opération de multiplication, la séquence de lecture précitée commence avec l'élément de données qui représente l'élément situé à une extrémité de la bande de k éléments dans son vecteur-ligne correspondant, et se poursuit avec des éléments de données qui représentent chacun tour à tour, le long de la bande, les éléments restants de la bande.

COMMON BUS

BUS1

PE

BUS 2

M

PRIOR ART

Fig. 1A

EP 0 421 639 B1

SETTING VALUE OF Yi TO 0

REPEATING FOLLOWING CALCULATION n TIMES (j=1,...,n)

GIVING Xj TO COMMON BUS

PE-i MULTIPLIES INPUT FROM BUS1-i AND INPUT FROM BUS2-i AND THEN ADDS RESULTANT PRODUCT TO Yi

PRIOR ART

F i g. 1 B

PRIOR ART

Fig. 2A

PRIOR ART

Fig. 2B

EP 0 421 639 B1

31

PRIOR ART

Fig. 2c

Fig.3A

SETTING Xi IN 2-i

SETTING VALUE OF Yi TO 0

REPEATING FOLLOWING CALCULATION n TIMES

1-i MULTIPLIES INPUT FROM 11-i
AND INPUT FROM 12-i AND
THEN ADDS RESULTANT PRODUCT TO Yi

SHIFTING CONTENTS OF SHIFT REGISTER 3

Fig. 3B

Fig. 3C

1-i    SUM-OF-PRODUCT    SUM-OF-PRODUCT    SUM-OF-PRODUCT   ······   SUM-OF-PRODUCT   ······   SUM-OF-PRODUCT    SUM-OF-PRODUCT   RESULT($Y_i = \Sigma_j A_{ij} X_j$)

3    SHIFT    SHIFT   ······   ······   SHIFT

11-1    X1   X2   X3 ······ Xm   Xn-1   Xn

12-1    A11   A12   A13 ······ A1m ······ A1n-1   A1n

11-2    X2   X3   X4 ······ Xm+1 ······ Xn   X1

12-2    A22   A23   A24 ······ A2 m+1 ······ A2n   A21

11-3    X3   X4   X5 ······ Xm+2 ······ X1   X2

12-3    A33   A34   A35 ······ A3 m+2 ······ A31   A32

· · ·

11-m    Xm   Xm+1   Xm+2 ······ Xm+m-1 ······ Xm-2   Xm-1

12-m    Amm   Am m+1   Am m+2 ······ Am m+m-1 ······ Am m-2   Am m-1

Time    T1    T2    T3    Tm    Tn-1    Tn   ⟶

Fig. 3D

Fig. 4A

SETTING Xi IN 2-i

SETTING VALUE OF Yi TO 0

REPEATING FOLLOWING CALCULATION n TIMES.

1-i MULTIPLIES INPUT FROM 11-i
AND INPUT FROM 12-i AND
THEN ADDS RESULTANT PRODUCT TO Yi

SHIFTING CONTENTS OF SHIFT REGISTER 3

Fig. 4B

EP 0 421 639 B1

2-1  1-1  4-1

11-1  12-1

Y1 — A11, A12, ..., A1n

Y2 — A22, A23, ..., A21

Ym — Amm, Amm+1, ..., Amm-1

X1, X2, X3, ..., Xm, ..., Xn

Fig.4C

T1

X1 → A11 X1 ← A11

X2 → A22 X2 ← A22

Xm → Amm Xm ← Amm

Xn

T2

X2 → A12 X2 ← A12

X3 → A23 X3 ← A23

Xm+1 → Amm+1 Xm+1 ← Amm+1

X1

T3

X3 → A13 X3 ← A13

X4 → A24 X4 ← A24

Xm+2 → Amm+2 Xm+2 ← Amm+2

X2

Tn

Xn → A1n Xn ← A1n

X1 → A21 X1 ← A21

Xm-1 → Amm-1 Xm-1 ← Amm-1

Xn-1

Time ⟶

Fig. 4D

EP 0 421 639 B1

Fig. 5A

EP 0 421 639 B1

CHANGING LENGTH OF SHIFT REGISTER 3 TO n

↓

SETTING X i IN 2 -i ($i=1,...,n$)

↓

SETTING VALUE OF Y i TO 0 ($i=1,...,m$)

↓

REPEATING FOLLOWING CALCULATION n TIMES

1 -i MULTIPLIES INPUT FROM 11-i AND INPUT FROM 12-i AND THEN ADDS RESULTANT PRODUCT TO Y i ($i=1,...,m$)

↓

SHIFTING CONTENTS OF SHIFT REGISTER 3

↓

CHANGING LENGTH OF SHIFT REGISTER 3 TO m

↓

TRANSFERRING Y i TO 2 -i ($i=1,...,m$)

↓

SETTING VALUE OF Z i TO 0 ($i=1,...,k$)

↓

REPEATING FOLLOWING CALCULATION m TIMES ($j=1,...,m$)

1 -i MULTIPLIES INPUT FROM 11-i AND B i j AND THEN ADDS RESULTANT PRODUCT TO Z i ($i=1,...,k$)

↓

SHIFTING CONTENTS OF SHIFT REGISTER 3

Fig. 5 B

Fig. 5C (i)

Fig. 5C(ii)

Fig. 5D

EP 0 421 639 B1

Fig. 6A

SETTING Xi IN 1-i $(i=1,...,m)$

SETTING VALUE OF Yi TO 0 $(i=1,...,n)$

REPEATING FOLLOWING CALCULATION m TIMES $(j=1,...,m)$

1-i MULTIPLIES Aij AND Xi AND
THEN ADDS RESULTANT PRODUCT TO Yi
$(i=1,...,n)$

SHIFTING CONTENTS OF SHIFT REGISTER 3

F i g. 6 B

2-1  1-1  4-1
31-1  12-1

| Y1 | X1 | A11, A12, ..., A1n |
| Y2 | X2 | A22, A23, ..., A21 |
| Yk | Xk | Akk, Akk+1, ..., Akk-1 |
| Ym | Xm | Amm, Amm+1, ..., Amm-1 |
| Yn | | |

2-2
2-k
2-m
2-n

| Y1 | A11 X1 | A11 |
| Y2 | A22 X2 | A22 |
| Yk | Akk Xk | Akk |
| Ym | Amm Xm | Amm |
| Yn | | |

| Y2 | A12 X1 | A12 |
| Y3 | A23 X2 | A23 |
| Yk+1 | Akk+1 Xk | Akk+1 |
| Ym+1 | Amm+1 Xm | Amm+1 |
| Y1 | | |

T1        T2

Time

Fig. 6C(i)

EP 0 421 639 B1

Fig. 6C(ii)

$T_{n-m+1}$

$T_{n-m+2}$

$T_n$

Fig. 6D

IN CASE i=1 ( FOR EXPLANATION )

| INITI-ALIZATION | |
|---|---|
| SETTING X i IN 1-i (i=1,...,∎) | |
| SETTING VALUE OF Y i TO 0 (i=1,...,n) | |

$Y1 = 0$

| FIRST TIME | |
|---|---|
| EVERY 1-i MULTIPLIES Aii AND Xi AND THEN ADDS RESULTANT PRODUCT TO Yi AND ALSO REWRITES IT IN SHIFT REGISTER 3<br>Yi:=Yi+Aii Xi (i=1,...,n) | |
| SHIFTING CONTENTS OF SHIFT REGISTER 3 | |

$Y1 = A11 X1$

| SECOND TIME | |
|---|---|
| EVERY 1-i MULTIPLIES Aii+1 AND Xi AND THEN ADDS RESULTANT PRODUCT TO Yi+1 AND ALSO REWRITES IT IN SHIFT REGISTER 3<br>Yi+1:=Yi+1+Aii+1 Xi (i=1,...,n) | |
| SHIFTING CONTENTS OF SHIFT REGISTER 3 | |

$Y2 = A22 X2 + A12 X1$

$(Y1 = A11 X1 + An1 Xn )$

| n-TH TIME | |
|---|---|
| EVERY 1-i MULTIPLIES Aii+n-1 AND Xi AND THEN ADDS RESULTANT PRODUCT TO Yi+n-1 AND ALSO REWRITES IT IN SHIFT REGISTER 3<br>Yi+n-1:=Yi+n-1+Aii+n-1 Xi (i=1,...,n) | |
| SHIFTING CONTENTS OF SHIFT REGISTER 3 | |

$Yn = Ann Xn + ... A1n X1$

$(Y1 = A11 X1 + ... A2n X1)$

F i g. 6 E

Fig. 7A

$Y = f(U);$ f IS SIGMOID FUNCTION

$U = \Sigma_{i=1,n} W_i X_i$

Fig. 7B

EP 0 421 639 B1

FIRST LAYER
(INPUT LAYER)

SECOND LAYER
(INTERMEDIATE LAYER)

THIRD LAYER
(OUTPUT LAYER)

$Y_1(1)$

$W_{21}(2)$

$W_{11}(2)$

$W_{12}(2)$

$Y_1(2)$

$Y_2(2)$

$Y_1(3)$

$I_1$

$I_2$

$I_3$

$I_4$

$I_5$

$I_{N(1)-1}$

$I_{N(1)}$

$Y_{N(1)}(1)$

$Y_{N(2)}(2)$

Fig. 7C

EP 0 421 639 B1

EP 0 421 639 B1

```
        ┌─────────────────────┐
        │   FORWARD PROCESS   │
        └─────────────────────┘
                   │
                   ▼
70 ┌──────────────────────────────────────┐
   │   SETTING INPUT DATA IN SHIFT REGISTER │
   └──────────────────────────────────────┘
                   │
                   ▼
71 ┌──────────────────────────────────────┐
   │ REPEATING FOLLOWING PROCESS NUMBER OF TIMES │
   │ EQUAL TO NUMBER OF EACH LAYERS (ℓ=2,...,L) │
   │  ┌────────────────────────────────┐  │
   │  │ PERFORMING FORWARD PROCESS OF ℓ-TH LAYER │  │
   │  └────────────────────────────────┘  │
   └──────────────────────────────────────┘
                   │
                   ▼
        ┌─────────────────────┐
        │ PROCESS IS COMPLETED │
        └─────────────────────┘
```

```
        ┌──────────────────────────────┐
        │  FORWARD PROCESS OF ℓ-TH LAYER │
        └──────────────────────────────┘
                   │
                   ▼
72 ┌──────────────────────────────────────────┐
   │ CHANGING LENGTH OF SHIFT REGISTER TO N(ℓ-1) │
   └──────────────────────────────────────────┘
                   │
                   ▼
73 ┌──────────────────────────────────────────┐
   │ CALCULATING                              │
   │   Ui(ℓ)=Σ_{j=1,N(l-1)} Wij(ℓ) Yj(ℓ-1)   │
   └──────────────────────────────────────────┘
                   │
                   ▼
74 ┌──────────────────────────────────────────┐
   │ CALCULATING                              │
   │    Yi(ℓ)=f(Ui(ℓ))                        │
   └──────────────────────────────────────────┘
                   │
                   ▼
75 ┌──────────────────────────────────────────┐
   │   OUTPUTING Yi(ℓ) TO TRAY-i              │
   └──────────────────────────────────────────┘
                   │
                   ▼
        ┌─────────────────────┐
        │ PROCESS IS COMPLETED │
        └─────────────────────┘
```

$$U_i(\ell) = \sum_{j=1,N(l-1)} W_{ij}(\ell) Y_j(\ell-1)$$

$$Y_i(\ell) = f(U_i(\ell))$$

Fig. 7D

## Left flowchart

( LEARNING PROCESS OF 1 SAMPLE )

76 — SETTING INPUT DATA Ip(=Y(1)) IN SHIFT REGISTER

77 — REPEATING FOLLOWING OPERATION NUMBER OF TIMES
EQUAL TO NUMBER OF EACH LAYERS ( $\ell$ =2,...,L )

> PERFORMING FORWARD PROCESS OF $\ell$-TH LAYER

78 — SETTING OUTPUT DATA Op IN SHIFT REGISTER

79 — EXCUTING FOLLOWING OPERATIONS ON EACH
i=1,...,N(L) IN PARALLEL

> CALCULATING ERROR Di(L)=(Yi(L)-Opi)
> AND SETTING THIS VALUE TRAY-i

80 — REPEATING FOLLOWING OPERATION NUMBER OF TIMES
EQUAL TO NUMBER OF EACH LAYERS ( $\ell$ =L,...,2 )

> PERFORMING BACKWARD PROCESS OF $\ell$-TH LAYER

( PROCESS IS COMPLETED )

## Right flowchart

( BACKWARD PROCESS OF $\ell$-TH LAYER )

81 — CHANGING LENGTH OF SHIFT REGISTER TO N($\ell$-1)

82 — EXCUTING FOLLOWING OPERATIONS ON EACH
i=1,...,N($\ell$) IN PARALLEL

83 — CALCULATING Di($\ell$-1)=$\Sigma$ i=1,N($\ell$) Wij($\ell$)
f ' (Ui($\ell$)) Di($\ell$) (j=1,...,N($\ell$-1))
(AS A RESULT , Di($\ell$-1) IS ON TRAY-i)

84 — CALCULATING Wij($\ell$):= Wij($\ell$)+$\eta$Di($\ell$)Yj($\ell$-1)
AND UPDATING THIS VALUE (j=1,...,N($\ell$))

( PROCESS IS COMPLETED )

( LEARNING PROCESS )

86 — REPEATING FOLLOWING OPERATION WITH CHANGING
SAMPLES UNTIL LEARNING IS CONVERGED

> PERFORMING LEARNING PROCESS OF 1 SAMPLE

( PROCESS IS COMPLETED )

Fig. 7E

56

# ERROR BACK PROPAGATIN

```
┌─────────────────────────────────┐
│   INPUTTING INPUT SIGNAL        │
└─────────────────────────────────┘
            │
┌───────────┼─────────────────────────────────────────┐
│  ┌────────▼──────────────────────────────────┐       │
│  │ PERFORMING FORWARD PROCESS OF HIDDEN LAYER │       │
│  └────────┬──────────────────────────────────┘       │
│           │                                           │
│  ┌────────▼──────────────────────────────────┐       │
│  │ PERFORMING FORWARD PROCESS OF OUTPUT LAYER │       │
│  └───────────────────────────────────────────┘       │
└───────────┬──────────────────────────────────────────┘
            │
┌───────────▼─────────────────────┐
│   INPUTTING TEACHER SIGNAL      │
└───────────┬─────────────────────┘
            │
┌───────────┼──────────────────────────────────────────┐
│  ┌────────▼───────────────────────────────────┐      │
│  │ PERFORMING BACKWARD PROCESS OF OUTPUT LAYER │      │
│  └────────┬───────────────────────────────────┘      │
│           │                                           │
│  ┌────────▼───────────────────────────────────┐      │
│  │ PERFORMING BACKWARD PROCESS OF HIDDEN LAYER │      │
│  └────────────────────────────────────────────┘      │
└──────────────────────────────────────────────────────┘
```

$u = W x (\ell)$

$x i (\ell + 1) = f (u i)$

$v i = e i (\ell) f' (u i)$

$e (\ell - 1) = W^T v$

$W = W - \Delta W$

REPEATING THIS OPERATION WHILE CORRECTING ERROR BETWEEN INPUT SIGNAL AND TEACHER SIGNAL WITH CHANGING COMBINATION OF PAIR

## Fig. 7F

FORWARD SUM OF PRODUCT CALCULATION

$U_i = W_{i1}X_1 + W_{i2}X_2 + W_{i3}X_3 + W_{i4}X_4$  $(i = 1,2,3)$

Fig. 7G

BACKWARD SUM OF PRODUCT CALCULATION

$e_j = W_{1j}V_1 + W_{2j}V_2 + W_{3j}V_3 \quad (j = 1,2,3,4)$

Tray DSP

| Start | | T1 | | T2 | | T3 | | T4 | | Time |

Start:
- $e_1$ | $V_1$
- $e_2$ | $V_2$
- $e_3$ | $V_3$
- $e_4$

T1:
- $e_1$ | $W_{11}V_1$
- $e_2$ | $W_{22}V_2$
- $e_3$ | $W_{33}V_3$
- $e_4$

T2:
- $e_2$ | $W_{12}V_1$
- $e_3$ | $W_{23}V_2$
- $e_4$ | $W_{34}V_3$
- $e_1$

T3:
- $e_3$ | $W_{13}V_1$
- $e_4$ | $W_{24}V_2$
- $e_1$ | $W_{31}V_3$
- $e_2$

T4:
- $e_4$ | $W_{14}V_1$
- $e_1$ | $W_{21}V_2$
- $e_2$ | $W_{32}V_3$
- $e_3$

F i g .　7 H

59

Fig. 7 I

LEARNING PROCESS

FOLLOWING PROCESS IS REPEATED BY CHANGING A TRAINING PATTERN UNTIL THE LEARNING IS CONVERGED

i-TH ELEMENT $I_{p-i}(=Y_i(1))$ OF INPUT TRAINING PATTERN IN THE MEMORY IS TRANSFERRED TO TRAY-i

FOLLOWING PROCESS IS REPEATED CORRESPONDING TO ALL THE LAYERS $(\ell=2,\ldots,L)$

THE LENGTH OF THE SHIFT REGISTER IS MADE $N(\ell-1)$

$U_i = \sum_{j=1, N(1-1)} W_{ij}(\ell) Y_j(\ell-1)$ ; WITH COPYING $Y_j$ FOR LATER USE

$Y_i(\ell) = f(U_i(\ell)$ ; APPLICATION OF SIGMOID FUNCTION f

$Y_i(\ell)$ IS OUTPUT TO TRAY-i

INITIAL VALUE OF ERROR $D_i(L)(=Y_i(L)-O_{p-i}$(i-TH ELEMENT OF OUTPUT TRAINING PATTERN)) IS CALCULATED

FOLLOWING PROCESS IS REPEATED CORRESPONDING TO ALL THE LAYERS $(\ell=L,\ldots,2)$

THE LENGTH OF THE SHIFT REGISTER IS MADE $N(\ell-1)$

$D_i(\ell-1)$ ON THE TRAY IS MADE 0

FOLLOWING PROCESS IS REPEATED $(j=i,i+1,\ldots,N(\ell-1),1,\ldots,i-1)$

$D_j(\ell-1):=D_j(\ell-1)+W_{ij}(\ell) f' (U_j(\ell) D_i(\ell)$

FOLLOWING PROCESS IS REPEATED $(j=1,\ldots,N(\ell-1))$

$W_{ij}(\ell):=W_{ij}(\ell)+\eta D_i(\ell) Y_j(\ell-1)$; HERE, USE $Y_j$

PROCESS IS COMPLETED

F i g .   7 J

EP 0 421 639 B1

```
           ( S T A R T )
                 │
    ┌────────────▼──────────────┐
    │  ┌──────────────────────┐ │
    │  │ WRITE i-TH ELEMENT OF OUTPUT │
    │  │ TEACHER SIGNAL IN i-TH TRAY  │
    │  └──────────────────────┘ │
    │            │               │
    │  ┌──────────────────────┐ │
    │  │ FORWARD PROCESSING OF i-TH NEURON │
    │  └──────────────────────┘ │
    │            │               │
    │  ┌──────────────────────┐ │
    │  │ OBTAIN i-TH ELEMENT OF ERROR │
    │  │ AND WRITE IN i-TH TRAY       │
    │  └──────────────────────┘ │
    │            │               │
    │  ┌──────────────────────┐ │
    │  │ BACKWARD PROCESSING OF i-TH NEURON │
    │  └──────────────────────┘ │
    └────────────────────────────┘
```

$(d_i = Y_i - \text{TEACHER SIGNAL})$

Fig. 7K

F i g. 8 A

SETTING X i IN 2-i

SETTING VALUE OF Y i TO 0

REPEATING FOLLOWING CALCULATION n TIMES

1-i MULTIPLIES INPUT FROM 11-i
AND INPUT FROM 12-i AND
THEN ADDS RESULTANT PRODUCT TO Y i

SHIFTING CONTENTS OF SHIFT REGISTER 3

Fig. 8 B

Fig. 8C

EP 0 421 639 B1

1-i

SUM-OF-PRODUCT  SUM-OF-PRODUCT  SUM-OF-PRODUCT .......... SUM-OF-PRODUCT .......... SUM-OF-PRODUCT  SUM-OF-PRODUCT  RESULT $(Yi = \sum j\ Aij\ Xj)$

3

SHIFT  SHIFT .......... SHIFT

1-1  X1  X2  X3 .......... Xm  Xn-1  Xn

2-1  A11  A12  A13 .......... A1m  A1n-1  A1n

1-2  X2  X3  X4  Xm+1  Xn  X1

2-2  A22  A23  A24  A2 m+1 .......... A2n  A21

1-3  X3  X4  X5  Xm+2  X1  X2

2-3  A33  A34  A35 .......... A3 m+2  A31  A32

1-m  Xm  Xm+1  Xm+2  Xm+m-1 .......... Xm-2  Xm-1

2-m  Amm  Am m+1  Am m+2  Am m+m-1 .......... Am m-2  Am m-1

T1  T2  T3  Tm  Tn-1  Tn

Time ⟶

Fig. 8 D

Fig. 9A

SETTING Xi IN 2-i

SETTING VALUE OF Yi TO 0

REPEATING FOLLOWING CALCULATION k TIMES

1-i MULTIPLIES INPUT FROM 31-i
AND INPUT FROM 12-i AND
THEN ADDS RESULTANT PRODUCT TO Yi

SHIFTING CONTENTS OF SHIFT REGISTER 3

Fig. 9B

EP 0 421 639 B1

Fig. 9C

F i g . 9 D

| | T1 | T2 | T3 | ... | Tk-1 | Tk |
|---|---|---|---|---|---|---|
| 1-i | SUM-OF-PRODUCT | SUM-OF-PRODUCT | SUM-OF-PRODUCT | | SUM-OF-PRODUCT | SUM-OF-PRODUCT / RESULT |
| 3 | SHIFT | SHIFT | SHIFT | | SHIFT | SHIFT |
| 31-1 | X1 | X2 | X3 | | Xk-1 | Xk |
| 12-1 | A11 | A12 | A13 | | A1k-1 | A1k |
| 31-2 | X2 | X3 | X4 | | Xk | Xk+1 |
| 12-2 | A22 | A23 | A24 | | A2k | A2k+1 |
| 31-3 | X3 | X4 | X5 | | Xk+1 | Xk+2 |
| 12-3 | A33 | A34 | A35 | | A3k+1 | A3k+2 |
| 31-m | Xm | Xm+1 | Xm+2 | | Xm+k-2 | Xm+k-1 |
| 12-m | Amm | Am m+1 | Am m+2 | | Am m+k-2 | Am m+k-1 |

Time →

70

STRUCTURE OF TRAY

Fig. IOA

38
36 33MULTIPLEXER
TI
TO
34 D TYPE
FLIP FLOP
D F F
TD
37
35
32
TRI-STATE BUFFER
31
XD

Fig. 10B

| LOCAL MEMORY | LOCAL MEMORY | 4 |
| DSP | DSP | 1 |
| TRAY | TRAY | 2 |

Fig. 10C

Fig. 10D

EP 0 421 639 B1

RSL ( READ SHIFT LEFT )

RSR ( READ SHIFT RIGHT )

WSL ( WRITE SHIFT LEFT )

WSR ('WRITE SHIFT RIGHT )

# Fig. 10E

Ring Network (32bit, 60ns)

External
Input

| Tray | Tray | Tray |

Data Bus (32bit, 60ns)

| PE-1 | PE-2 | PE-3 |
| TMS320C30 | TMS320C30 | TMS320C30 |
| Internal RAM 2Kword | | |

. . .

| RAM 64Kword | RAM 64Kword | RAM 64Kword |

Common Host Bus (32bit)

F i g. 11

EP 0 421 639 B1

TIME-SPACE CHART AT LEARNIG TIME

Fig. 12

EP 0 421 639 B1